# EUROPEAN PATENT APPLICATION

(11) **EP 2 330 171 A1**
(43) Date of publication of application: **08.06.2011**
(21) Application number: 09810085.2
(22) Date of filing: 31.08.2009
(51) Int. Cl.: C09K 3/00, C08K 5/22, C08K 5/45, C08L 83/04, C08L 83/14, C09D 5/32, C09D 7/12, C09D 183/00

(54) **ULTRAVIOLET ABSORBING AGENT COMPOSITION**

(30) Priority: 01.09.2008 JP 2008223504
(71) Applicant: FUJIFILM Corporation, Tokyo 106-8620 (JP)
(72) Inventor: FURUKAWA, Kazushi, Odawara-shi Kanagawa 250-0001 (JP); KIMURA, Keizo, Odawara-shi Kanagawa 250-0001 (JP); TAKESHIMA, Youichiro, Odawara-shi Kanagawa 250-0001 (JP)
(74) Representative: HOFFMANN EITLE
(86) International application number: PCT/JP2009/065210
(87) International publication number: WO 2010/024441

(57) **Abstract**

An ultraviolet absorbent composition, having ultraviolet absorbent A and a silicon compound, in which the ultraviolet absorbent A has a maximum absorption wavelength from 350 nm to 400 nm, a half value width of 55 nm or less, and the molar extinction coefficient of 20000 or more at the maximum absorption wavelength.

## Description

### TECHNICAL FIELD

The present invention relates to an ultraviolet absorbent composition. Particularly, the present invention relates to a composition which is excellent in absorbing ability of long-wavelength ultraviolet, less degree of yellow tint and less coloration during curing, and capable of forming a coating film that is excellent in light fastness with maintaining the absorbing ability for a long period of time.

### BACKGROUND ART

An ultraviolet absorbent has been used in combination with various resins or the like for providing materials with ultraviolet-absorptivity. As the ultraviolet absorbent, an inorganic ultraviolet absorbent and an organic ultraviolet absorbent may be used. The inorganic ultraviolet absorbent (see, for example, Patent Literatures 1 to 3 and the like) is excellent in durability such as weather resistance and heat resistance. However, the degree of freedom in selecting a compound is small, since the absorption wavelength is determined by the band gap of the compound. There is hence no inorganic absorbent available that can absorb the light in a long-wavelength ultraviolet (UV-A) range of 320 to 400 nm. One that absorbs the long-wavelength ultraviolet is colored, since it has absorption also in the visible range.
In contrast, as to the organic ultraviolet absorbent, the degree of freedom in designing an absorbent structure is high, and thus, it is possible to obtain absorbents having various absorption wavelengths by designing the absorbent structure.

Various organic ultraviolet absorbents have been studied. For absorption in the long-wavelength ultraviolet range, it is conceivable either to use an absorbent having the wavelength of maximal absorption in the long-wavelength ultraviolet range or to increase the concentration of absorbent. However, the absorbents, described in, for example, Patent Literatures 4 and 5, have the wavelength of maximal absorption in the long-wavelength ultraviolet range, and they have a defect that they are poor in light fastness, and their absorption capability declines with time.

In contrast, benzophenone- and benzotriazole-based ultraviolet absorbents are relatively excellent in light fastness, and increase in concentration or film thickness leads to relatively clean blocking of the light in the long-wavelength range (see, for example, Patent Literatures 6 and 7). However, when such the ultraviolet absorbents are applied as mixed with a resin or the like, the film thickness is limited to about several tens of µm at the most. For blocking the light in the long-wavelength range with the above-described film thickness, it is necessary to add the ultraviolet absorbent at a high concentration. However, in such a case, there are problems of precipitation and generation of bleed-out of the ultraviolet absorbent during long-term use. In addition, among the benzophenone- and benzotriazole-based ultraviolet absorbents, there are some absorbents which have a potential to cause skin irritation or accumulation in a living body. Patent Literatures 8, 9 and 10 describe a 5-membered ring compound having two sulfur atoms.

On the other hand, as a coating film that is excellent in heat resistance, abrasion resistance, corrosion resistance, insulating property, and the like, a silica-coating film is used for various applications. With respect to a method of forming the silica-coating film, a sol-gel method, a method of coating and curing a precursor polymer such as polysilazane, and the like are known (for example, see Patent Literatures 11 to 14). As a method of giving an ultraviolet absorption property to the silica-coating film, a method of adding an ultraviolet absorbent to polysilazane and obtaining a cured coating film is known, for example (for example, see Patent Literature 15). However, it is a problem that stability of the composition is insufficient and transparency and the like of a cured material are also insufficient.
On the other hand, in the case where the organic ultraviolet absorbent is used as an ultraviolet absorbent, there is no problem regarding the stability of the composition, and also no haze occurs in the cured material. However, when it is desired to cut off the ultraviolet light in the long-wavelength ultraviolet range by using, for example, the benzophenone-based ultraviolet absorbent or the benzotriazole-based ultraviolet absorbent, there is a problem that a great amount of the ultraviolet absorbent is required, and as a result coloration of the composition becomes visible during curing. Moreover, although the problem associated with the coloration can be avoided by using a triazine-based ultraviolet absorbent that is used in Patent Literature 14 above, it cannot be said for this case that the property of absorbing ultraviolet light in the long-wavelength range is sufficient, and thus the improvement has been needed.

Patent Literature 1: JP-A-5-339033 ("JP-A" means unexamined published Japanese patent application)
Patent Literature 2: JP-A-5-345639
Patent Literature 3: JP-A-6-56466
Patent Literature 4: JP-A-6-145387
Patent Literature 5: JP-A-2003-177235
Patent Literature 6: JP-T-2005-517787 ("JP-T" means published Japanese translation of PCT international application)
Patent Literature 7: JP-A-7-285927
Patent Literature 8: JP-A-2007-304287
Patent Literature 9: JP-A-60-170842
Patent Literature 10: JP-B-49-11155 ("JP-B" means examined Japanese patent publication)
Patent Literature 11: JP-A-6-299118
Patent Literature 12: JP-A-2004-246872
Patent Literature 13: JP-A-2008-37671
Patent Literature 14: WO01/044371 pamphlet
Patent Literature 15: JP-A-7-252425

### DISCLOSURE OF INVENTION

### TECHINICAL PROBLEM

The present invention addresses to the provision of a material which is excellent in absorbing ability of long-wavelength ultraviolet, less degree of yellow tint and less coloration during curing, and capable of forming a coating film that is excellent in light fastness with maintaining the absorbing ability for a long period of time.

As a result of intensive studies, the inventors of the present invention found that the object above can be achieved by a composition including a material which can form a silicon matrix with an ultraviolet absorbent having a particular structure. Moreover, it was found that the light fastness can be improved more by further combining with an ultraviolet absorbent having a particular absorption waveform or structure and/or a particular compound, and it was also found that no coloration problem occurs during curing. The idea of combining such particular compounds cannot be easily conceived by a person skilled in the art even in view of the properties of the compounds, and the like.

The present invention provides the following means:
[1] An ultraviolet absorbent composition, comprising:
   ultraviolet absorbent A and a silicon compound, the ultraviolet absorbent A having a maximum absorption wavelength from 350 nm to 400 nm, the maximum absorption wavelength shown in a peak having a half value width of 55 nm or less, the ultraviolet absorbent A having the molar extinction coefficient of 20000 or more at the maximum absorption wavelength;
[2] The ultraviolet absorbent composition as described in the above item [1], wherein the ultraviolet absorbent A has a maximum absorption wavelength from 350 nm to 385 nm and the maximum absorption wavelength is shown in a peak having a half value width of 40 nm or less;
[3] The ultraviolet absorbent composition as described in the above item [1] or [2], wherein the ultraviolet absorbent A comprises a compound represented by formula (2): 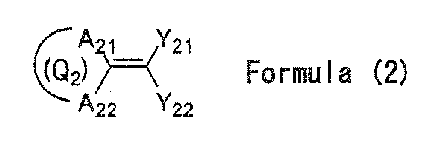 wherein, A₂₁ and A₂₂ each independently represent an atom other than a hydrogen atom and a carbon atom; Y₂₁ and Y₂₂ each independently represent a hydrogen atom or a monovalent substituent; at least one of Y₂₁ and Y₂₂ represents a substituent having a Hammett substituent constant σp value of 0.2 or more; Y₂₁ and Y₂₂ may bind to each other to form a ring; and (Q₂) represents a group of atoms necessary for forming a 5- or 6-membered ring with A₂₁, A₂₂ and the carbon atom;

[4] The ultraviolet absorbent composition as described in the above item [3], wherein the compound represented by formula (2) is a compound represented by formula (3): 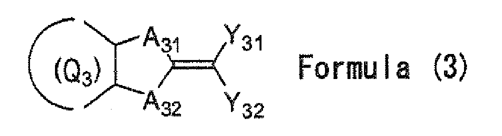 wherein, A₃₁ and A₃₂ each independently represent a hetero atom selected from the group consisting of an oxygen atom, a nitrogen atom , and a sulfur atom; Y₃₁ and Y₃₂ each independently represent a hydrogen atom or a monovalent substituent; at least one of Y₃₁ and Y₃₂ represents a substituent having a Hammett substituent constant σp value of 0.2 or more; Y₃₁ and Y₃₂ may bind to each other to form a ring; and (Q₃) represents a group of atoms necessary for forming a 5- or 6-membered ring with a carbon atom;

[5] The ultraviolet absorbent composition as described in the above item [4], wherein the compound represented by formula (3) is a compound represented by formula (4): 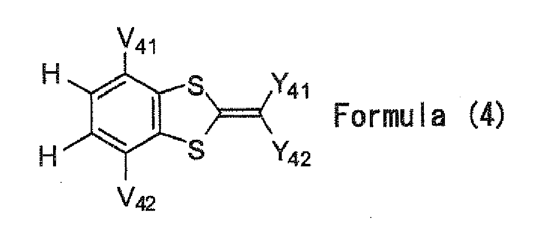 wherein, Y₄₁ and Y₄₂ each independently represent a monovalent substituent; at least one of Y₄₁ and Y₄₂ represents a cyano group, and the other one represents a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group; V₄₁ and V₄₂ each independently represent a hydrogen atom or a monovalent substituent.

[6] The ultraviolet absorbent composition as described in the above item [1] or [2], wherein the ultraviolet absorbent A comprises a compound represented by formula (5): 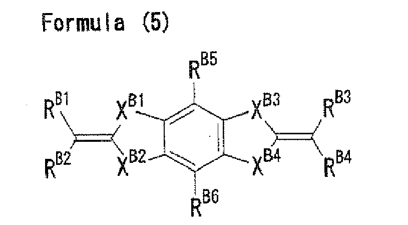 wherein, R^{B1}, R^{B2}, R^{B3} and R^{B4} each independently represent a hydrogen atom or a monovalent substituent; R^{B5} and R^{B6} each independently represent a hydrogen atom or a monovalent substituent; X^{B1}, X^{B2}, X^{B3} and X^{B4} each independently represent a hetero atom;

[7] The ultraviolet absorbent composition as described in the above item [6], wherein the compound represented by formula (5) is a compound represented by formula (5a): 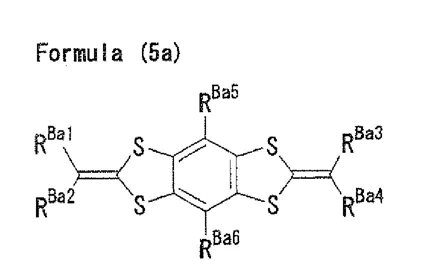 wherein, R^{Ba1}, R^{Ba2}, R^{Ba3} and R^{Ba4} each independently represent a monovalent substituent; at least one of R^{Ba1}, R^{Ba2}, R^{Ba3} and R^{Ba4} represents a cyano group, a substituted or unsubstituted alkoxycarbonyl group, a substituted or unsubstituted aryloxycarbonyl group, a substituted or unsubstituted carbamoyl group, a substituted or unsubstituted alkylcarbonyl group, a substituted or unsubstituted arylcarbonyl group, a substituted or unsubstituted alkylsulfonyl group, or a substituted or unsubstituted arylsulfonyl group; and
R^{Ba5} and R^{Ba6} each independently represent a substituted or unsubstituted alkoxy group, a substituted or unsubstituted aryloxy group, a substituted or unsubstituted acyloxy group, a substituted or unsubstituted alcoxycalbonyloxy group, a substituted or unsubstituted aryloxycalbonyloxy group, a substituted or unsubstituted carbamoyloxy group, a substituted or unsubstituted amino group, a substituted or unsubstituted acylamino group, or a substituted or unsubstituted carbamoylamino group;
[8] The ultraviolet absorbent composition as described in the above item [7], wherein at least one of a combination of R^{Ba1} with R^{Ba2} and a combination of R^{Ba3} with R^{Ba4} does not form a ring;
[9] The ultraviolet absorbent composition as described in the above item [7], wherein both of a combination of R^{Ba1} with R^{Ba2} and a combination of P^{Ba3} with R^{Ba4} do not form a ring;

[10] The ultraviolet absorbent composition as described in any one of the above items [1] to [9], further comprising either one or both of at least one ultraviolet absorbent B and a compound C represented by any one of formulae (TS-I) to (TS-V),
wherein, in the ultraviolet absorbent B, an absorbance at 320 nm is 30% or more of an absorbance at the maximum absorption wavelength and the maximum absorption wavelength is 350 nm or less, 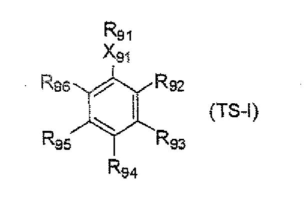 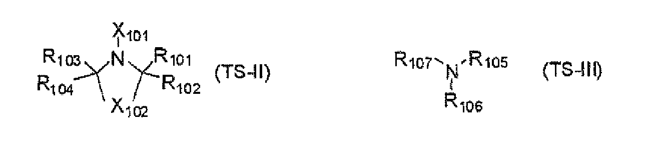 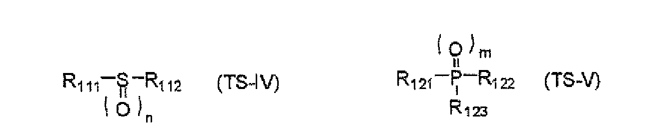 wherein, in formula (TS-I), R₉₁ represents a hydrogen atom, an alkyl group, an alkenyl group, an aryl group, a heterocyclic group, an acyl group, an alkyloxycarbonyl group, an alkenyloxycarbonyl group, an aryloxycarbonyl group, an alkyl sulfonyl group, an arylsulfonyl group, a phosphinotolyl group, a phosphinyl group, or -Si(R₉₇)(R₉₈)(R₉₉), in which R₉₇, R₉₈, and R₉₉, which may be the same as or different from each other, each independently represent an alkyl group, an alkenyl group, an aryl group, an alkoxy group, an alkenyloxy group, or an aryloxy group; -X₉₁- represents -O-, -S-, or -N(-R₁₀₀)-, in which R₁₀₀ has the same meaning as R₉₁ ; R₉₂, R₉₃, R₉₄, R₉₅ and R₉₆, which may be the same as or different from each other, each independently represent a hydrogen atom or a substituent; R₉₁ and R₉₂, R₁₀₀ and R₉₆, and R₉₁ and R₁₀₀, respectively, may bind to each other to form a 5-membered ring, a 6-membered ring, or a 7-membered ring; R₉₂ and R₉₃, and R₉₃ and R₉₄, respectively, may bind together with each other to form a 5-membered ring, a 6-membered ring, a 7-membered ring, a spiro ring, or a bicyclo ring; and all of R₉₃, R₉₂, R₉₃, R₉₄, R₉₅, R₉₆ and R₁₀₀ cannot simultaneously represent a hydrogen atom, and the total number of carbon atoms is 10 or more;
wherein, in formula (TS-II), R₁₀₁), R₁₀₂, R₁₀₃, and R₁₀₄ each independently represent a hydrogen atom, an alkyl group, an alkenyl group; R₁₀₁ and R₁₀₂, and R₁₀₃ and R₁₀₄, respectively, may bind to each other to form a 5- to 7-membered ring; X₁₀₁ represents a hydrogen atom, an alkyl group, an alkenyl group, an alkyloxy group, an alkenyloxy group, an alkyloxycarbonyl group, an alkenyloxycarbonyl group, an aryloxycarbonyl group, an acyl group, an acyloxy group, an alkyloxycarbonyloxy group, an alkenyloxycarbonylnxy group, an aryloxycarbonyloxy group, an alkylsulfonyl group, an alkenylsulfonyl group, an arylsulfonyl group, an alkylsulfinyl group, an alkenylsulfinyl group, an arylsulfinyl group, a sulfamoyl group, a carbamoyl group, a hydroxy group, or an oxy radical group; and X₁₀₂ represents a group of non-metal atoms necessary for forming a 5-membered ring, a 6-membered ring, or a 7-membered ring;
wherein, in formula (TS-III), R₁₀₅ and R₁₀₆ each independently represent a hydrogen atom, an aliphatic group, an acyl group, an aliphatic oxycarbonyl group, an aromatic oxycarbonyl group, an aliphatic sulfonyl group, or an aromatic sulfonyl group; R₁₀₇ represents an aliphatic group, an aliphatic oxy group, an aromatic oxy group, an aliphatic thio group, an aromatic thio group, an acyloxy group, an aliphatic oxycarbonyloxy group, an aromatic oxycarbonyloxy group, a substituted amino group, a heterocyclic group, or a hydroxyl group; R₁₀₅ and R₁₀₆, R₁₀₆ and R₁₀₇, and R₁₀₅ and R₁₀₇, respectively, may combine together to form a 5-membered ring, a 6-membered ring, or a 7-membered ring except 2,2,6,6-tetraalkylpiperidine skeleton; and both R₁₀₅ and R₁₀₆ are not hydrogen atoms at the same time, and the total number of carbon atoms is 7 or more;
wherein, in formula (TS-IV), R₁₁₁ and R₁₁₂ each independently represent an aliphatic group; R₁₁₁ and R₁₁₂ may combine together to form a 5- membered ring, a 6-membered ring, or a 7-membered ring; n represents 0, 1 or 2; and the total number of carbon atoms of R₁₁₁ and R₁₁₂ is 10 or more; and
wherein, in formula (TS-V), R₁₂₁ and R₁₂₂ each independently represent an aliphatic oxy group, or an aromatic oxy group; R₁₂₃ represents an aliphatic group, an aromatic group, an aliphatic oxy group, or an aromatic oxy group; m represents 0 or 1; R₁₂₁ and R₁₂₂, and R₁₂₁ and R₁₂₃, respectively, may combine together to form any one of 5- to 8-membered rings; and the total number of carbon atoms of R₁₂₁, R₁₂₂ and R₁₂₃ is 10 or more;

[11] The ultraviolet absorbent composition as described in the above item [10], wherein the ultraviolet absorbent B is an ultraviolet absorbent having a maximum absorption wavelength of less than 320 nm;
[12] The ultraviolet absorbent composition as described in the above item [10], wherein the ultraviolet absorbent B is an ultraviolet absorbent having a maximum absorption wavelength from 320 nm to 350 nm;
[13] The ultraviolet absorbent composition as described in any one of the above items [10] to [12], wherein a molar ratio of the ultraviolet absorbent A and the ultraviolet absorbent B is within a range of 1:15 to 15:1;
[14] The ultraviolet absorbent composition as described in any one of the above items [10] to [13], wherein a molar ratio of the compound C represented by any one of formulae (TS-I) to (TS-V) is from 0.01 to 10 when the smaller value, among a mole number of the ultraviolet absorbent A and a mole number of the ultraviolet absorbent B, is set to 1;
[15] The ultraviolet absorbent composition as described in any one of the above items [1] to [14], wherein the silicon compound is a compound capable of forming a silicon oxide gel;
[16] A material, having a coating film formed by the ultraviolet absorbent composition as described in any one of the above items [1] to [15];
[17] The material as described in the above item [16], wherein the coating film is formed by curing the ultraviolet absorbent composition as described in any one of the above items [1] to [15]; and
[18] The material as described in the above item [16] or [17], wherein the coating film is formed by curing the ultraviolet absorbent composition as described in any one of the above items [1] to [15] at a temperature of 300°C or less.

### Advantageous Effects of Invention

The ultraviolet absorbent composition of the present invention is excellent in absorbing ability of long-wavelength ultraviolet, less degree of yellow tint and less coloration during curing, and capabe of foring a coating film being excellent in light fastness with maintaining the absorbing ability for a long period of time.

Other and further features and advantages of the invention will appear more fully from the following description, taking the accompanying drawing into consideration.

### BRIEF DESCRIPTION OF DRAWINGS

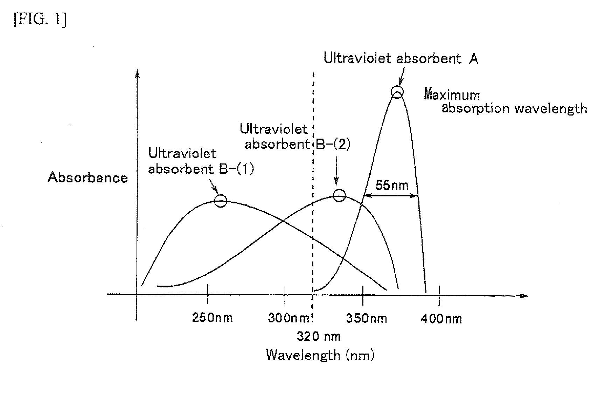

{Fig. 1} Fig. 1 shows preferred embodiment of absorption spectra of the ultraviolet absorbents A and B for use in the present invention.

### DESCRIPTION OF EMBODIMENTS

The ultraviolet absorbent composition of the present invention is a composition, which contains ultraviolet absorbent A having a particular structure and a silicon compound. The silicone compound is preferably a compound which is capable of forming a silicon oxide gel. The ultraviolet absorbent composition of the present invention may further contain ultraviolet absorbent B having a particular absorption spectral shape and may furthermore contain a compound C having a particular structure.

In the ultraviolet absorbent composition of the present invention, in the case where the ultraviolet absorbent B or the compound C is included, their mixing ratio can be any ratio. The ratio of the ultraviolet absorbent A to the ultraviolet absorbent B (A:B) may be arbitrary excluding 0:1 and 1:0. It is preferably 1:15 to 15:1, more preferably 10:1 to 1:10, particularly preferably 6:1 to 1:4, most preferably 4:1 to 1:1. The mixing ratio in the present invention is expressed by molar ratio. It is possible to convert the molar ratio to the mass ratio, when the molecular weight of the ultraviolet absorbent is known, and thus, those with normal skill in the art can mix the ingredients based on mass ratio.
Content of the compound C in the composition of the present invention is preferably 0.01 to 10, more preferably 0.02 to 7, still more preferably 0.02 to 5 and most preferably 0.02 to 2 in terms of the mole number ratio of the compound C when the smaller value, among the mole number of the ultraviolet absorbent A and the mole number of the ultraviolet absorbent B, is set to 1 (standard value).

The ultraviolet absorbent composition according to the present invention preferably includes two or less kinds of the ultraviolet absorbent A, particularly preferably one kind of the ultraviolet absorbent A. The ultraviolet absorbent composition preferably includes three or less kinds of the ultraviolet absorbent B, more preferably two or less kinds of the ultraviolet absorbent B, and particularly preferably one kind of the ultraviolet absorbent B. Many kinds of the compound C can be included.

The ultraviolet absorbent having a particular absorption spectral shape in the present invention will be described below.
The ultraviolet absorbent A characteristically has a maximum absorption wavelength from 350 nm to 400 nm and a half value width of 55 nm or less. The ultraviolet absorbent B characteristically represents an ultraviolet absorbent, in which the absorbance at 320 nm is 30% or more of the absorbance at the maximum absorption wavelength and the maximum absorption wavelength is 350 nm or less. In particular, the absorbance of the ultraviolet absorbent B at 320 nm is preferably 50% or more of the absorbance at the maximum absorption wavelength.

The ultraviolet absorbent B represents an ultraviolet absorbent, in which the absorbance at 320 nm is 30% or more of the absorbance at the maximum absorption wavelength and the maximum absorption wavelength is 350 nm or less. For example, as shown in Fig. 1, the ultraviolet absorbents can be classified into an ultraviolet absorbent (B-(1)) having a maximum absorption wavelength of less than 320 nm and an ultraviolet absorbent (B-(2)) having a maximum absorption wavelength from 320 nm to 350 nm. Fig. 1 shows preferable absorption spectra of the ultraviolet absorbent A and the ultraviolet absorbent B used in the present invention.

### [Measurement of absorption wavelength]

In the present invention, the concentration of the ultraviolet absorbents A and B and the compound C for the measurement of a wavelength of spectroscopic absorption maximum can be a concentration which can measure a wavelength of maximum spectroscopic absorption. Preferably, it is within the range of 1×10⁻⁷ to 1×10⁻² mol/L. A temperature for the measurement is not specifically limited, however, preferably it is from 0C° to 80C°
A measurement apparatus for spectroscopic absorption is not particularly limited. A common spectroscopic absorption measurement apparatus (e.g., U-4100 spectrophotometer, trade name, manufactured by Hitachi High-Technologies Corp.) can be used.

The maximum absorption wavelength and the half value width specified in the present invention can be measured easily by the person skilled in the art. The measuring methods are described, for example, in Chemical Society of Japan Ed., "Experimental Chemistry Lecture, Chapter 7 Spectroscopy II", 4th Ed., (Maruzen, 1992), p. 180 to 186. Specifically, they are determined by dissolving a sample in a suitable solvent and measuring in a spectrophotometer by using two quartz or glass cells for the sample and control. The solvent for use is required, for example, to be capable of dissolving the sample, have no absorption in the measurement wavelength range, have smaller interaction with the solute molecule, and have relatively low volatility. Any solvent may be used, as long as it satisfies the conditions above. In the present invention, the measurement is conducted by using ethyl acetate (EtOAc) as the solvent.

A solution for measuring the spectroscopic maximum absorption wavelength in the present invention is explained. The solution for measuring the spectroscopic maximum absorption wavelength is obtained by dissolving the ultraviolet absorbent A, the ultraviolet absorbent B, and the compound C in an organic or inorganic solvent or water, either singly or as a mixture.

Examples of the organic solvent include amide-series solvents (e.g., N,N-dimethylformamide, N,N-dimethylacetamide, and 1-methyl-2-pyrrolidone), sulfone-series solvents (e.g., sulfolane), sulfoxide-series solvents (e.g., dimethyl sulfoxide), ureido-series solvents (e.g., tetramethylurea), ether-series solvents (e.g., dioxane, tetrahydrofuran, and cyclopentyl methyl ether), ketone-series solvents (e.g., acetone and cyclohexanone), hydrocarbon-series solvents (e.g., toluene, xylene, and n-decane), halogen-containing solvents (e.g., tetrachloroethane, chlorobenzene, and chloronaphthalene), alcohol-series solvents (e.g., methanol, ethanol, isopropyl alcohol, ethylene glycol, cyclohexanol, and phenol), pyridine-series solvents (e.g., pyridine, γ-picoline, and 2,6-lutidine), ester-series solvents (e.g., ethyl acetate and butyl acetate), carboxylic acid-series solvents (e.g., acetic acid and propionic acid), nitrile-series solvents (e.g., acetonitrile), sulfonic acid-series solvents (e.g., methanesulfonic acid), and amine-series solvents (e.g., triethylamine and tributylamine). Examples of the inorganic solvent include sulfuric acid and phosphoric acid.

Among these, amide-series solvents, sulfone-series solvents, sulfoxide-series solvents, ureido-series solvents, ether-series solvents, ketone-series solvents, halogen-containing solvents, alcohol-series solvents, ester-series solvents, and nitrile-series solvents are preferable, from the viewpoint of solubility of the ultraviolet absorbents.

A maximum absorption wavelength and a half value width of a dye in the present invention are determined by preparing a solution in ethyl acetate, unless otherwise specified, as the solvent at a concentration of approximately 5×10⁻⁵ mol-dm⁻³ and measuring using a quartz cell having an optical path length of 10 mm.

The half value width of spectrum is described, for example, in Chemical. Society of Japan Ed., "Experimental Chemistry Lecture, Chapter 3 Basic Operation III", 4th Ed., (Maruzen, 1991), p. 154. The half value width is described in the literature above by using wave number scale as a horizontal axis, but the half value width is plotted against wavelength scale in the present invention and thus, the unit of the half value width is nm. Specifically, it is defined as the width of the absorption band at 1/2 of absorbance at the maximum absorption wavelength and used as a value indicating the shape of absorption spectrum. A spectrum having a small half value width is a sharp spectrum, while that having a large half value width is a broad spectrum. An ultraviolet absorbent giving a broad spectrum has absorption in a wide range from the maximum absorption wavelength to the long-wavelength side. For this reason, for shielding the light in the long-wavelength ultraviolet range effectively without coloration of yellow tint, an ultraviolet absorbent showing a spectrum having a small half value width is preferable.

As described in Sumio Tokita, "Chemistry Seminar 9, Color Chemistry ", (Maruzen, 1982), pp. 154 to 155, the absorption intensity of light, that is an oscillator intensity, is proportional to the integral of molar extinction coefficient. When the absorption spectrum is well in symmetry, the oscillator intensity is proportional to the product of the absorbance at the maximum absorption wavelength and the half value width (in this case, the half value width is a value expressed by wavelength scale). This means that a compound having a spectrum having a smaller half value width has a larger absorbance at the maximum absorption wavelength, in the case where the value of a transition moment is constant. Such an ultraviolet absorbent has a merit that it is possible to effectively shield the light in the range around the maximum absorption wavelength even when it is used in a small amount, but since the absorbance drops rapidly as the wavelength is slightly shifted from the maximum absorption wavelength, such the ultraviolet absorbent cannot shield the light.

### [Ultraviolet absorbent A]

The ultraviolet absorbent A in the present invention characteristically has a maximum absorption wavelength from 350 nm to 400 nm and a half value width of 55 nm or less. The use of the ultraviolet absorbent A having an absorption in the above-described wavelength range in combination with the ultraviolet absorbent B is suitable for the coverage of the ultraviolet absorption range. However, since there is a risk of coloration of yellow to a composition, the person skilled in the art cannot come up with the combination of these ultraviolet absorbents.

Hereinafter, the ultraviolet absorbent A used in the present invention will be described.
The ultraviolet absorbent A characteristically has a maximum absorption wavelength of from 350 nm to 400 nm, a half value width of 55 nm or less and a molar extinction coefficient of 20,000 or more at the maximum absorption wavelength. The ultraviolet absorbent A preferably has a half value width of 40 nm or less and a maximum absorption wavelength from 360 nm to 385 nm. The upper limit of the half value width is not particularly limited, but it is practical that the half value width is 100 nm or less. When the ultraviolet absorbent A having such the favorable maximum absorption wavelength is used in combination with the ultraviolet absorbent B, it is possible to cover the entire UV-A range from 350 nm to 400 nm with a small risk of coloration. The molar extinction coefficient at the maximum absorption wavelength is preferably 30,000 or more, more preferably 40,000 or more, and particularly preferably 50,000 or more. If the absorbance is too small, the absorption efficiency of the ultraviolet absorbent per mass becomes worse. Thus, a great amount of the ultraviolet absorbent has to be used in order to completely absorb the ultraviolet range. This is not preferable, since a working efficiency becomes worse and a risk of bleed out occurs. It has been found that as the molar extinction coefficient at the maximum absorption wavelength becomes larger toward a degree of 50,000 or more, the half value width becomes narrower, so that the risk of coloration can be lessened. Accordingly, it is practical that the molar extinction coefficient is less than 50,000. The molar extinction coefficient is defined, for example, in Chemical Society of Japan Ed., "New Experimental Chemistry Lecture, Chapter 9 Analytical Chemistry [II] ", (Maruzen, 1977), p. 244, and can be determined, together with the maximum absorption wavelength and the half value width above.

The ultraviolet absorbent A may have any structure, as long as it satisfies the conditions above. Examples thereof include triazine-based, benzotriazole-based, benzophenone-based, cyanine-based, dibenzoyl methane-based, cinnamic acid-based, p-aminobenzoic acid-based, benzoate-based, cyanoacrylate-based, indole-based compound, benzalmalonate-based, salicylic acid-based, anilide oxalate-based, formamidine-based and benzodithiol-based ultraviolet-absorbing structures. Among these, indol-based and benzodithiol-based structures that provide a relatively small half value width and are excellent in the long-wavelength ultraviolet absorbing ability are preferable.

Among these structures, a compound represented by the following formula (2) is particularly preferable, from the view point of a maximum absorption wavelength and a half value width being small. Hereinafter, a compound represented by the following formula (2) is described.

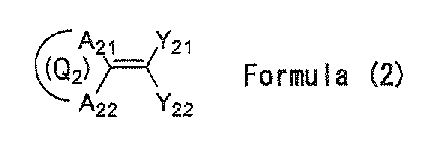

(In formula (2), A₂₁ and A₂₂ each independently represent an atom other than a hydrogen atom and a carbon atom; Y₂₁ and Y₂₂ each independently represent a hydrogen atom or a monovalent substituent; at least one of Y₂₁ and Y₂₂ represents a substituent having a Hammett substituent constant σp value of 0.2 or more; Y₂₁ and Y₂₂ may bind to each other to form a ring; and (Q₂,) represents a group of atoms necessary for forming a 5- or 6-membered ring with A₂₁, A₂₂ and the carbon atom.)

A₂₁ and A₂₂ each independently represent an atom other than a hydrogen atom and a carbon atom. Examples of A₂₁ and A₂₂ include boron, nitrogen, oxygen, fluorine, silicon, phosphorus, sulfur and selenium atoms.

Preferable examples of A₂₁ and A₂₂ include nitrogen, oxygen and sulfur. Of these atoms, sulfur atom is especially preferable. Preferable combinations of A₂₁ and A₂₂ are oxygen-nitrogen, nitrogen-sulfur, nitrogen-nitrogen or sulfur-sulfur. Especially preferable combination is sulfur-sulfur.

Y₂₁ and Y₂₂ each independently represent a hydrogen atom or a monovalent substituent. Examples of the monovalent substituent include a cyano group, a substituted or unsubstituted carbamoyl group, a substituted or unsubstituted sulfamoyl group, a nitro group, a substituted or unsubstituted acyl group, a substituted or unsubstituted alkylsulfonyl group, a substituted or unsubstituted arylsulfonyl group, a substituted or unsubstituted alkylsulfinyl group, a substituted or unsubstituted arylsulfinyl group, a substituted or unsubstituted alkoxycarbonyl group, a substituted or unsubstituted aryloxycarbonyl group, a substituted or unsubstituted alkyl group, a substituted or unsubstituted aryl group, and a substituted or unsubstituted heterocyclic group. The substituent may be further substituted, and multiple substituents, if present, may be the same as or different from each other. In the present case, the substituent is the above-described monovalent substituent. In addition, the substituents may bind to each other to form a ring.

Specific examples of Y₂₁ and Y₂₂ include a cyano group, a carbamoyl group having 1 to 10 carbon atoms, preferably 2 to 8 carbon atoms, more preferably 2 to 5 carbon atoms (e.g., methylcarbamoyl, ethylcarbamoyl, morpholinocarbonyl), a sulfamoyl group having 0 to 10 carbon atoms, preferably 2 to 8 carbon atoms, more preferably 2 to 5 carbon atoms (e.g., methylsulfamoyl, ethylsulfamoyl, piperidylsulfonyl), a nitro group, an acyl group having 1 to 20 carbon atoms, preferably 1 to 12 carbon atoms, more preferably 1 to 8 carbon atoms (e.g., formyl, acetyl, benzoyl, trichloroacetyl), an alkylsulfonyl group having 1 to 20 carbon atoms, preferably 1 to 10 carbon atoms, more preferably 1 to 8 carbon atoms, an arylsulfonyl group having 6 to 20 carbon atoms, preferably 6 to 10 carbon atoms (e.g., methanesulfonyl, ethanesulfonyl, benzenesulfonyl), an alkylsulfinyl group having 1 to 20 carbon atoms, preferably 1 to 10 carbon atoms, more preferably 1 to 8 carbon atoms, an arylsulfinyl group having 6 to 20 carbon atoms, preferably 6 to 10 carbon atoms (e.g., methanesulfinyl, benzenesulfinyl), an alkoxycarbonyl group having 2 to 20 carbon atoms, preferably 2 to 12 carbon atoms, more preferably 2 to 8 carbon atoms (e.g., methoxycarbonyl, ethoxycarbonyl, benzyloxycarbonyl), an aryloxycarbonyl group having 6 to 20 carbon atoms, preferably 6 to 12 carbon atoms, more preferably 6 to 8 carbon atoms (e.g., phenoxycarbonyl),

an unsubstituted alkyl group having 1 to 18 carbon atoms, preferably 1 to 10 carbon atoms, more preferably 1 to 5 carbon atoms (e.g., methyl, ethyl, propyl, butyl), a substituted alkyl group having 1 to 18 carbon atoms, preferably 1 to 10 carbon atoms, more preferably 1 to 5 carbon atoms (e.g., hydroxymethyl, trifluoromethyl, benzyl, carboxyethyl, ethoxycarbonylmethyl, acetylaminomethyl), a substituted or unsubstituted aryl group having 6 to 20 carbon atoms, preferably 6 to 15 carbon atoms, more preferably 6 to 10 carbon atoms (e.g., phenyl, naphthyl, p-carboxyphenyl, p-nitrophenyl, 3,5-dichlorophenyl, p-cyanophenyl, m-fluorophenyl, p-tolyl, p-bromophenyl), and a substituted or unsubstituted heterocyclic group having 1 to 20 carbon atoms, preferably 2 to 10 carbon atoms, more preferably 4 to 6 carbon atoms (e.g., pyridyl, 5-methylpyridyl, thienyl, furyl, morpholino, tetrahydrofurfuryl). The substituent may be further substituted, and multiple substituents, if present, may be the same as or different from each other. In the present case, the substituent is the above-described substituent. In addition, the substituents may bind to each other to form a ring.

As Y₂₁ and Y₂₂, it is preferable that at least one of Y₂₁ and Y₂₂ has a Hammett substituent constant σp value of 0.2 or more.
The expression "Hammett substituent constant σ value" used herein will be described. Hammett's rule is a rule of thumb advocated by L.P. Hammett in 1935 for quantitatively considering the affect of substituents on the reaction or equilibrium of benzene derivatives, and the appropriateness thereof has been widely recognized. The substituent constant determined in the Hammett's rule involves σₚ value and σₘ value. These values can be found in a multiplicity of general publications, and are detailed in, for example, "Lange's Handbook of Chemistry" 12th edition by J. A. Dean, 1979 (Mc Graw-Hill), "Region of Chemistry (Kagaku no Ryoiki)" special issue, No. 122, pp. 96 to 103, 1979 (Nankodo) and Chem. Rev., vol. 91, pp. 165 to 195, 1991. The substituent having a Hammett substituent constant σp value of 0.2 or more in the present invention represents an electron-withdrawing group. The σp value is preferably 0.25 or more, more preferably 0.3 or more, and particularly preferably 0.35 or more. The upper limit of the σp value is not particularly limited, but it is practical that the σp value is 2 or less.

Specific examples of Y₂₁ and Y₂₂ include a cyano group (0.66), a carboxyl group (-COOH: 0.45), an alkoxycarbonyl group (e.g. -COOMe: 0.45), an aryloxycarbonyl group (e.g. -COOPh: 0.44), a carbamoyl group (-CONH₂: 0.36), an alkylcarbonyl group (e.g. -COMe: 0.50), an arylcarbonyl group (e.g. -COPh: 0.43), an alkylsulfonyl group (e.g. -SO₂Me: 0.72), an arylsulfonyl group (e.g. -SO₂Ph: 0.68) and the like. In the present specification, "Me" represents a methyl group and "Ph" represents a phenyl group. The values in parenthesis are the σp values of typical substituents, as extracted from Chem. Rev., 1991, vol. 91, pp. 165 to 195.

Y₂₁ and Y₂₂ may bond to each other to form a ring. The σp values of Y₂₁ and Y₂₂ cannot be specified, in the case where a ring is formed by Y₂₁ and Y₂₂. However, the σp values thereof, in the case where a ring is formed, are defined, assuming that partial ring structures are substituted, respectively, as Y₂₁ and Y₂₂, in the present invention. For example, in the case where a 1,3-indandione ring is formed, benzoyl groups are considered to be substituted, respectively, as Y₂₁ and Y₂₂.

Preferred examples of Y₂₁ and Y₂₂ each independently include a cyano group, an alkylcarbonyl group, an arylcarbonyl group, an alkoxycarbonyl group, an aryloxycarbonyl group, a carbamoyl group, a sulfinyl group, a sulfonyl group, and a sulfamoyl group.
It is especially preferable that at least one of Y₂₁ and Y₂₂ is a cyano group, and the other is an alkylcarbonyl group, an arylcarbonyl group, a heterocyclic carbonyl group, an alkylsulfonyl group, or an arylsulfonyl group. It is preferable that Y₂₁ and Y₂₂ do not bind to each other to form any ring.

(Q₂) represents a ring formed of A₂₁, A₂₂ and the carbon atom.

As a ring (Q₂) formed by binding A₂₁, A₂₂ and the carbon atom, a 5- or 6-membered ring is preferable. Specifically, examples of the ring include a pyrimidine ring, an imidazolidine ring, an imidazoline ring, an oxazoline ring, a thiazoline ring, and a dithiol ring. These rings may have a monovalent substituent. Further, these rings may form a condensed ring structure with an aromatic ring or the like.

As the ring formed by (Q₂), an imidazoline ring, an oxazoline ring, a thiazoline ring, a dithiol ring, or a benzo-condensed ring thereof is preferable. More preferable ring is a benzodithiol ring, a benzoxazoline ring, a benzothiazoline ring, or a benzoimidazoline ring. Especially preferable ring is a benzodithiol ring.

A preferable combination of the substituents in formula (2) is such a combination that at least one of Y₂₁ and Y₂₂ is a cyano group, and the other is an alkylcarbonyl group, an arylcarbonyl group, a heterocyclic carbonyl group, an alkylsulfonyl group, or an arylsulfonyl group; both A₂₁ and A₂₂ are a sulfur atom; and the ring formed by (Q₂) is a benzodithiole ring.

The compound represented by formula (2) is preferably a compound represented by the following formula {3}. Hereinafter, the compound represented by formula (3) will be described.

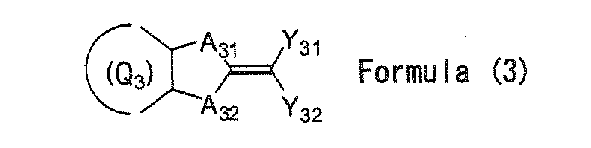

(In formula (3), A₃₁ and A₃₂ each independently represent a hetero atom selected from the group consisting of an oxygen atom, a nitrogen atom and a sulfur atom; Y₃₁ and Y₃₂ each independently represent a hydrogen atom or a monovalent substituent; at least one of Y₃₁ and Y₃₂ represents a substituent having a Hammett substituent constant σp value of 0.2 or more; Y₃₁ and Y₃₂ may bind to each other to form a ring; and (Q₃) represents a group of atoms necessary for forming a five- or six-membered ring with the carbon atoms.)

A₃₁ and A₃₂ each independently represent a hetero atom selected from the group consisting of an oxygen atom, a nitrogen atom and a sulfur atom; preferably a sulfur atom. Preferable combinations of A₃₁ and A₃₂ are oxygen-nitrogen, nitrogen-sulfur, nitrogen-nitrogen or sulfur-sulfur. Especially preferable combination is sulfur-sulfur.

Y₃₁ and Y₃₂ each independently represent a hydrogen atom or a monovalent substituent. Examples of the monovalent substituent include a cyano group, a substituted or unsubstituted carbamoyl group, a substituted or unsubstituted sulfamoyl group, a nitro group, a substituted or unsubstituted acyl group, a substituted or unsubstituted alkylsulfonyl group, a substituted or unsubstituted arylsulfonyl group, a substituted or unsubstituted alkylsulfinyl group, a substituted or unsubstituted arylsulfinyl group, a substituted or unsubstituted alkoxycarbonyl group, a substituted or unsubstituted aryloxycarbonyl group, a substituted or unsubstituted alkyl group, a substituted or unsubstituted aryl group, and a substituted or unsubstituted heterocyclic group. Herein, at least one of Y₃₁ and Y₃₂ represents a substituent having a Hammett substituent constant σp value of 0.2 or more. Examples of the substituent having a Hammett substituent constant σp value of 0.2 or more include a cyano group, an alkylcarbonyl group, an arylcarbonyl group, an alkoxycarbonyl group, an aryloxycarbonyl group, a carbamoyl group, a sulfinyl group, a sulfonyl group and a sulfamoyl group.

It is especially preferable that at least one of Y₃₁ and Y₃₂ is a cyano group, and the other is a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group.

Ring (Q₃) represents a group of atoms necessary for forming a five- or six-membered ring with the carbon atoms.
Specific examples of the ring (Q₃) include cycloalkanes such as cyclohexane and cyclopentane; aryls such as benzene; and heterocycles such as a pyridine ring, a pyrrole ring, a thiophene ring, a thiazole ring, an oxazole ring, and a pyrazole ring, and benzo-condensed rings thereof. The ring is more preferable is a benzene ring.

A preferable combination of the substituents in formula (3) is such a combination that at least one of Y₃₁ and Y₃₂ is a cyano group, and the other is a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group; both A₃₁ and A₃₂ are a sulfur atom; and the ring (Q₃) is a benzene ring thereby forming a benzodithiole ring with A₃₁ and A₃₂.

The compound represented by formula (3) is preferably a compound represented by the following formula (4). Hereinafter, the compound represented by formula (4) will be described.

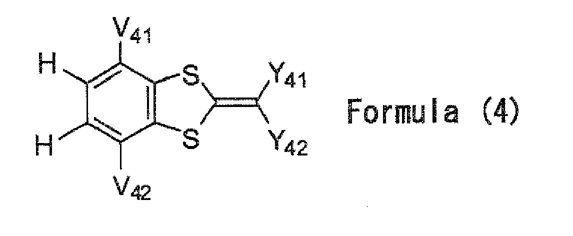

In formula (4), Y₄₁ and Y₄₂ each independently represent a monovalent substituent; at least one of Y₄₁ and Y₄₂ represents a cyano group, and the other represents a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group.

It is preferable that at least one of Y₄₁ and Y₄₂ is a cyano group, and the other is a substituted or unsubstituted alkylcarbonyl group, a substituted or unsubstituted arylcarbonyl group, or a substituted or unsubstituted heterocyclic carbonyl group. It is especially preferable that at least one of Y₄₁ and Y₄₂ is a cyano group, and the other is a substituted or unsubstituted alkylcarbonyl group, or a substituted or unsubstituted arylcarbonyl group. Further, it is preferable that Y₄₁ and Y₄₂ do not bind to each other to form any ring with other atom. It is further preferable that at least one of Y₄₁ and Y₄₂ is a cyano group, and the other is a substituted or unsubstituted alkylcarbonyl group having 3 to 18 carbon atoms, or a substituted or unsubstituted arylcarbonyl group having 7 to 18 carbon atoms.

V₄₁ and V₄₂ each independently represent a hydrogen atom or a monovalent substituent. Examples of the monovalent substituent include a halogen atom, a mercapto group, a cyano group, a carboxyl group, a phosphoric acid group, a sulfo group, a hydroxy group, a carbamoyl group, a sulfamoyl group, a nitro group, an alkoxy group, an aryloxy group, an acyl group, an acyloxy group, an acylamino group, a sulfonyl group, a sulfinyl group, a sulfonylamino group, an amino group, a substituted amino group, an ammonium group, a hydrazino group, a ureido group, an imido group, an alkyl- or aryl-thio group, a substituted or unsubstituted alkenylthio group, an alkoxycarbonyl group, an aryloxycarbonyl group, an unsubstituted alkyl group, a substituted alkyl group, a substituted or unsubstituted aryl group, and a substituted or unsubstituted heterocyclic group. Specific examples of these substituents include those groups recited as examples of Y₄₁ and Y₄₂. The substituent may be further substituted, and multiple substituents, if present, may be the same as or different from each other. In the present case, the substituent is the above-described substituent. In addition, the substituents may bind to each other to form a ring.

V₄₁ and V₄₂ each independently are preferably a cyano group, a nitro group, a hydroxyl group, an alkoxy group, an aryloxy group, or an acyloxy group; and particularly preferably an alkoxy group, an aryloxy group, or an acyloxy group.

A preferable combination of the substituents in formula (4) is such a combination that at least one of Y₄₁ and Y₄₂ is a cyano group, and the other is a substituted or unsubstituted alkylcarbonyl group having 3 to 18 carbon atoms, or a substituted or unsubstituted arylcarbonyl group having 7 to 18 carbon atoms; and both V₄₁ and V₄₂ are an alkoxy group, an aryloxy group, or an acyloxy group.

The compound represented by any one of formulae (2) to (4) in the present invention can be synthesized according to any one of the methods described or cited in Journal of Chemical Crystallography, 27, 1997, p. 516, right column, line 3 to p. 520, right column, line 15; Liebigs Annalen der Chemie, 726, p. 106, line 15 to p. 109, line 37; JP-A-49-1115, p. 3, left column, line 7 to p. 5, left column, line 8; Bioorganic & Medicinal Chemistry Letters, 7, 1997, p. 652, lines 9 to 19; Journal of Organic Chemistry, 43, 1978, p. 2153, left column, lines 2 to 12; JP-A-4-338759, p. 4, left column, line 2 to p. 5, left column, line 2; JP-A-3-54566, p. 7, left column, line 6 to p. 8, left column, line 10; Synthesis, 1986, p. 968, left column, lines 1 to 22, or a method similar to that.

Hereinafter, typical examples of the compound represented by any one of formulae (2) to (4) that can be used in the present invention will be described below, but the present invention is not restricted thereby.

### [Examples of the compound corresponding to a compound represented by formula (4)]

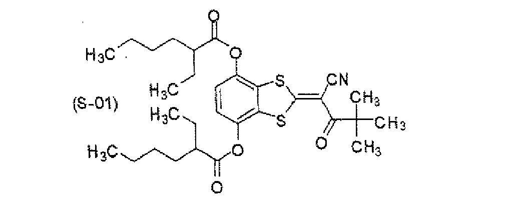

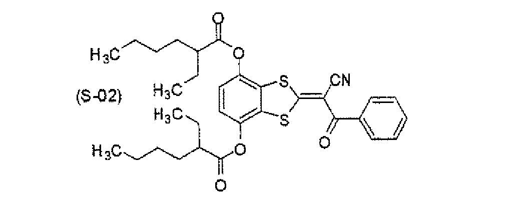

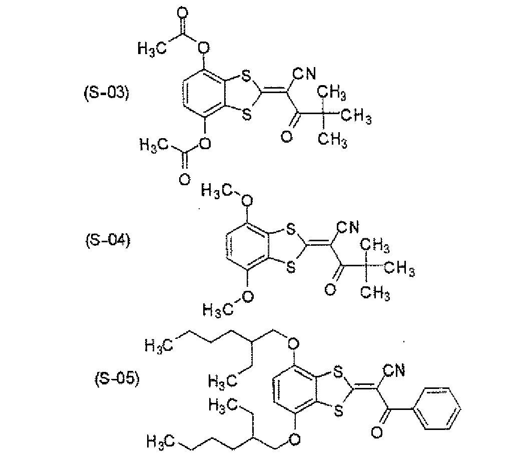

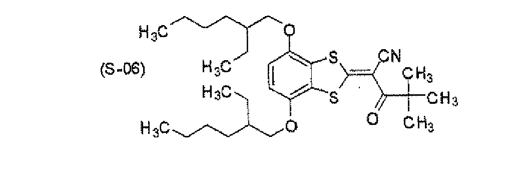

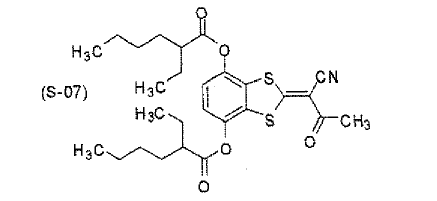

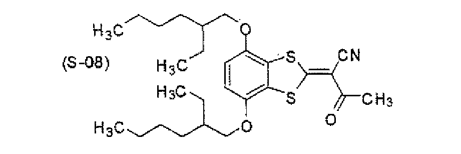

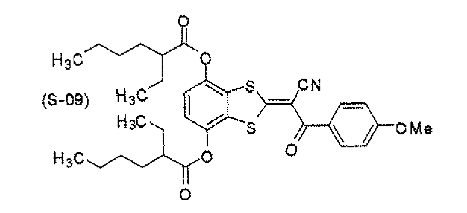

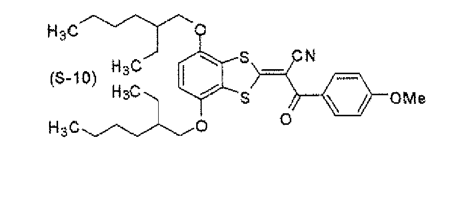

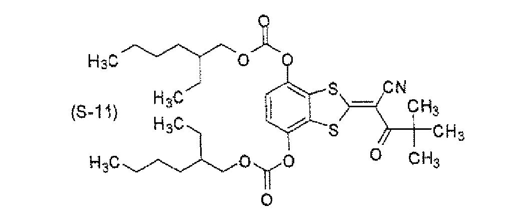

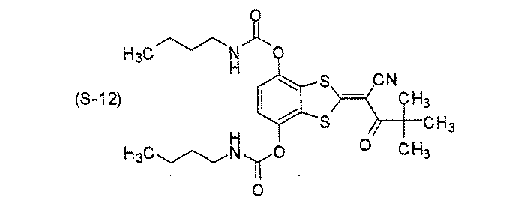

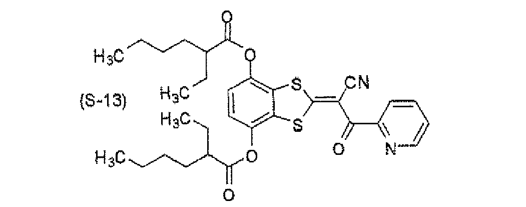

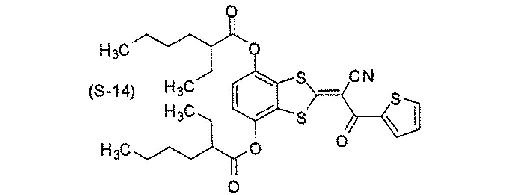

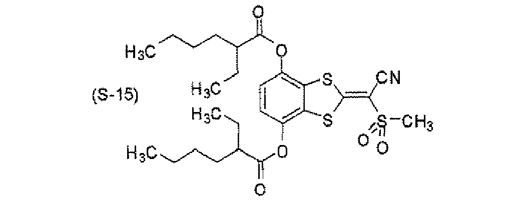

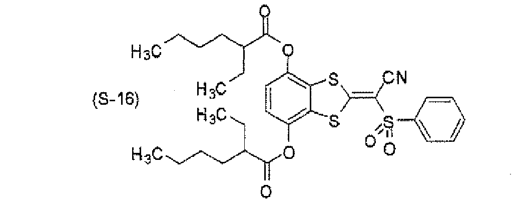

### [Examples of the compound corresponding to a compound represented by not formula (4) but formula (3)]

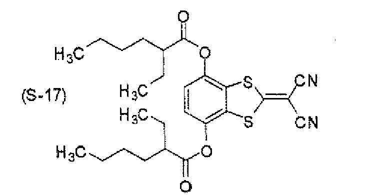

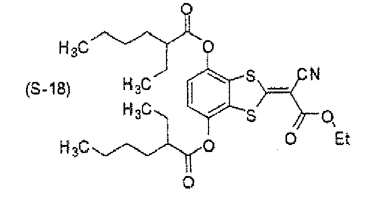

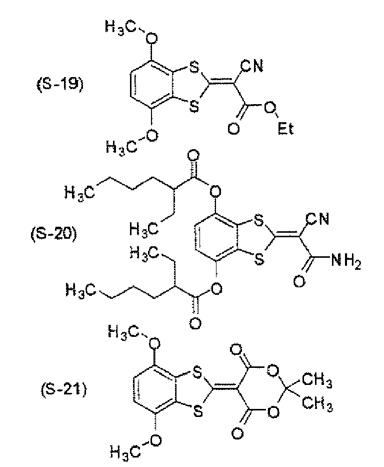

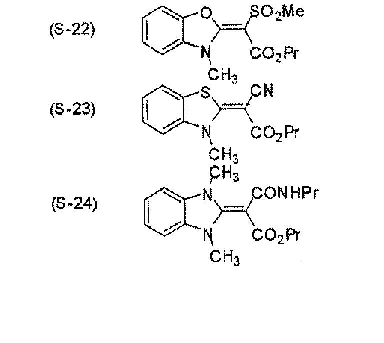

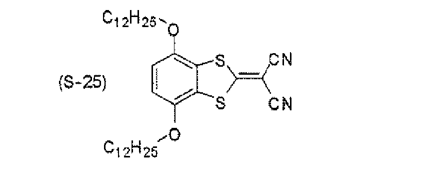

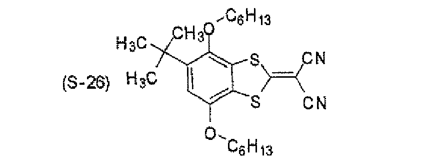

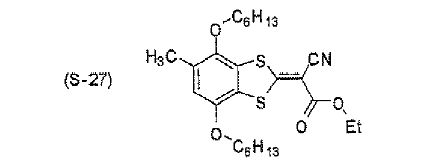

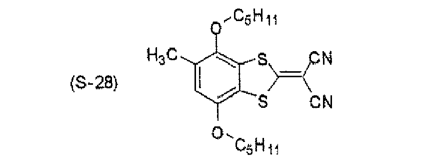

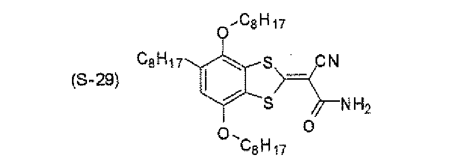

### [Examples of the compound corresponding to a compound represented by not formula (3) but formula (2)]

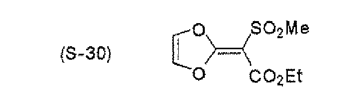

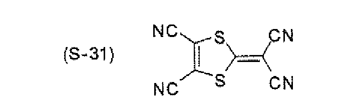

Next, the compound represented by the following formula (5) will be described.

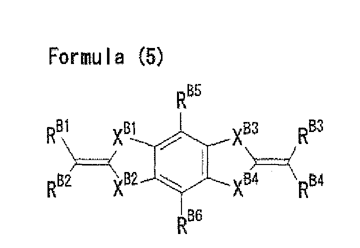

(In formula (5), R^{B1}, R^{B2}, R^{B3} and R^{B4} each independently represent a hydrogen atom or a monovalent substituent; R^{B5} and R^{B6} each independently represent a hydrogen atom or a monovalent substituent; and X^{B1}, X^{B2}, X^{B3} and X^{B4} each independently represent a hetero atom.)

In formula (5), R^{B1}, R^{B2}, R^{B3} and R^{B4} each independently represent a hydrogen atom or a monovalent substituent. Examples of the monovalent substituent include the monovalent substituent in formula (2) explained above. The substituent may be further substituted, and multiple substituents, if present, may be the same as or different from each other. In addition, the substituents may bind to each other to form a ring.

Examples of the monovalent substituent of R^{B1}, R^{B2}, R^{B3} and R^{B4} include a cyano group, a substituted or unsubstituted carbamoyl group, a substituted or unsubstituted sulfamoyl group, a nitro group, a substituted or unsubstituted acyl group, a substituted or unsubstituted alkylsulfonyl group, a substituted or unsubstituted arylsulfonyl group, a substituted or unsubstituted alkylsulfinyl group, a substituted or unsubstituted arylsulfinyl group, a substituted or unsubstituted alkoxycarbonyl group, a substituted or unsubstituted aryloxycarbonyl group, a substituted or unsubstituted alkyl group, a substituted or unsubstituted aryl group, and a substituted or unsubstituted heterocyclic group. The substituent may be further substituted, and multiple substituents, if present, may be the same as or different from each other. In the present case, the substituent is the above-described monovalent substituent. In addition, the substituents may bind to each other to form a ring.

Examples of R^{B1}, R^{B2}, R^{B3} and R^{B4} include a cyano group, a carbamoyl group having 1 to 10 carbon atoms, preferably 2 to 8 carbon atoms, more preferably 2 to 5 carbon atoms (e.g., methylcarbamoyl, ethylcarbamoyl, morpholinocarbonyl), a sulfamoyl group having 0 to 10 carbon atoms, preferably 2 to 8 carbon atoms, more preferably 2 to 5 carbon atoms (e.g., methylsulfamoyl, ethylsulfamoyl, piperidylsulfonyl), a nitro group, an acyl group having 1 to 20 carbon atoms, preferably 1 to 12 carbon atoms, more preferably 1 to 8 carbon atoms (e.g., formyl, acetyl, benzoyl, trichloroacetyl), an alkylsulfonyl group having 1 to 20 carbon atoms, preferably 1 to 10 carbon atoms, more preferably 1 to 8 carbon atoms, an arylsulfonyl group (e.g., methanesulfonyl, ethanesulfonyl, benzenesulfonyl), an alkylsulfonyl group having 1 to 20 carbon atoms, preferably 1 to 10 carbon atoms, more preferably 1 to 8 carbon atoms, an arylsulfinyl group (e.g., methanesulfinyl, benzenesulfinyl), an alkoxycarbonyl group having 2 to 20 carbon atoms, preferably 2 to 12 carbon atoms, more preferably 2 to 8 carbon atoms (e.g., methoxycarbonyl, ethoxycarbonyl, benzyloxycarbonyl), an aryloxycarbonyl group having 6 to 20 carbon atoms, preferably 6 to 12 carbon atoms, more preferably 6 to 8 carbon atoms (e.g., phenoxycarbonyl),

an unsubstituted alkyl group having 1 to 18 carbon atoms, preferably 1 to 10 carbon atoms, more preferably 1 to 5 carbon atoms (e.g., methyl, ethyl, propyl, butyl), a substituted alkyl group having 1 to 18 carbon atoms, preferably 1 to 10 carbon atoms, more preferably 1 to 5 carbon atoms (e.g., hydroxymethyl, trifluoromethyl, benzyl, carboxyethyl, ethoxycarbonylmethyl, acetylaminomethyl), a substituted or unsubstituted aryl group having 6 to 20, preferably 6 to 15 carbon atoms, more preferably 6 to 10 carbon atoms (e.g., phenyl, naphthyl, p-carboxyphenyl, p-nitrophenyl, 3,5-dichlorophenyl, p-cyanophenyl, m-fluorophenyl, p-tolyl, p-bromophenyl), and a substituted or unsubstituted heterocyclic group having 1 to 20 carbon atoms, preferably 2 to 10 carbon atoms, more preferably 4 to 6 carbon atoms (e.g., pyridyl, 5-methylpyridyl, thienyl, furyl, morpholino, tetrahydrofurfuryl). The substituent may be further substituted, and multiple substituents, if present, may be the same as or different from each other. In the present case, the substituent is the above-described substituent. In addition, the substituents may bind to each other to form a ring.

It is particularly preferable that at least one of R^{B1}, R^{B2}, R^{B3} and R^{B4} represents a substituent having a Hammett substituent constant σp value of 0.2 or more.

R^{B1} and R^{B2}, and R^{B3} and R^{B4}, respectively, may bind to each other to form a ring. As the σp value of each of R^{B1}, R^{B2}, R^{B3} and R^{B4} in the case where a ring is formed with these members, the same way as described in formula (2) is applied.

At least one of R^{B1}, R^{B2}, R^{B3} and R^{B4} represents a substituent having a Hammett substituent constant σp value of 0.2 or more. Each of the groups in at least one of the combination of R^{B1} and R^{B2} and the combination of R^{B3} and R^{B4} is preferably the substituent above. More preferably, three groups of R^{B1}, R^{B2}, R^{B3} and R^{B4} are the substituent. Particularly preferably, all of R^{B1}, R^{B2}, R^{B3} and R^{B4} are the substituent.

At least one of R^{B1}, R^{B2}, R^{B3} and R^{B4} is more preferably -CN, -COOR^{B8}, -CONR^{B9}R^{B10}, -COR^{B11}, or -SO₂R¹² (wherein, R^{B8}, R^{B9}, R^{B10}, R^{B11} and R^{B12} each represent a hydrogen atom or a monovalent substituent); more preferably, -CN, -COOR^{B8}, -COR^{B11} or -SO₂R^{B12}; still more preferably -CN or -COOR^{B8}; and particularly preferably -CN.
At least one of R^{B1}, R^{B2}, R^{B3} and R^{B4} is still more preferably an alkoxycarbonyl group having 6 or more carbon atoms, still more preferably an alkoxylcarbony group having 6 or more and 20 or less carbon atoms, still more preferably an alkoxylcarbony group having 6 or more and 12 or less carbon atoms. The alkoxy group may have any substituent on any positions. Examples of the substituent include those described above. Examples of the alkoxy group in the alkoxycarbonyl group include a hexyloxy group, a 2-ethylhexyloxy group, an octyloxy group, a decyloxy group, and a dodecyloxy group.

The combination of R^{B1} and R^{B2} and the combination of R^{B3} and R^{B4} may be arbitrary as long as the conditions described above are satisfied, but the combination of R^{B1} and R^{B2} and that of R^{B3} and R^{B4} are preferably the same as each other.

R^{B1} and R^{B2}, R^{B3} and R^{B4}, respectively, may bind to each other to form a ring. The ring formed may be a saturated or unsaturated, hydrocarbon or hetero ring. However, the ring formed is not a dithiol or dithiolane ring. Examples of the carbon-atom containing ring formed by R^{B1} and R^{B2} defined in formula (5) include a cyclopropane ring, a cyclobutane ring, a cyclopentane ring, a cyclohexane ring, a cycloheptane ring, a pyrrolidine ring, a tetrahydrofuran ring, a tetrahydrothiophene ring, an oxazoline ring, a thiazoline ring, a pyrroline ring, a pyrazolidine ring, a pyrazoline ring, an imidazolidine ring, an imidazoline ring, a piperidine ring, a piperazine ring, and a pyran ring. Each of the rings may be substituted at any positions additionally. The substituent is, for example, the monovalent substituent described above. Examples of a bivalent substituent include a carbonyl group and an imino group. Multiple substituents, when present, may be the same as or different from each other. The substituents may bind to each other, forming a condensed ring or a spiro ring.

Preferable specific examples of the combination of R^{B1} and R^{B2} or the combination of R^{B3} and R^{B4} are shown in the following Table 1, but the present invention is not restricted thereby. Et represents an ethyl group and Bu represents a butyl group in the present description. The wavy line in the Table indicates the binding site on the heterocycle shown in formula (5).

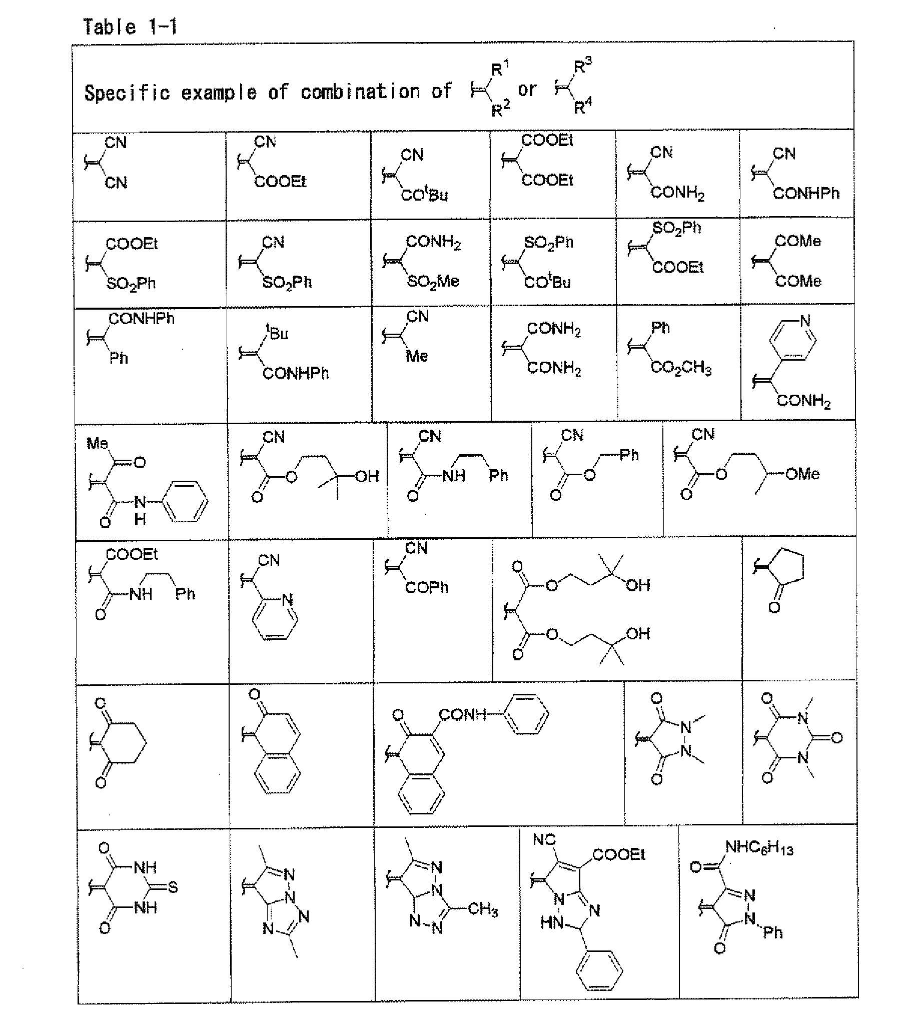

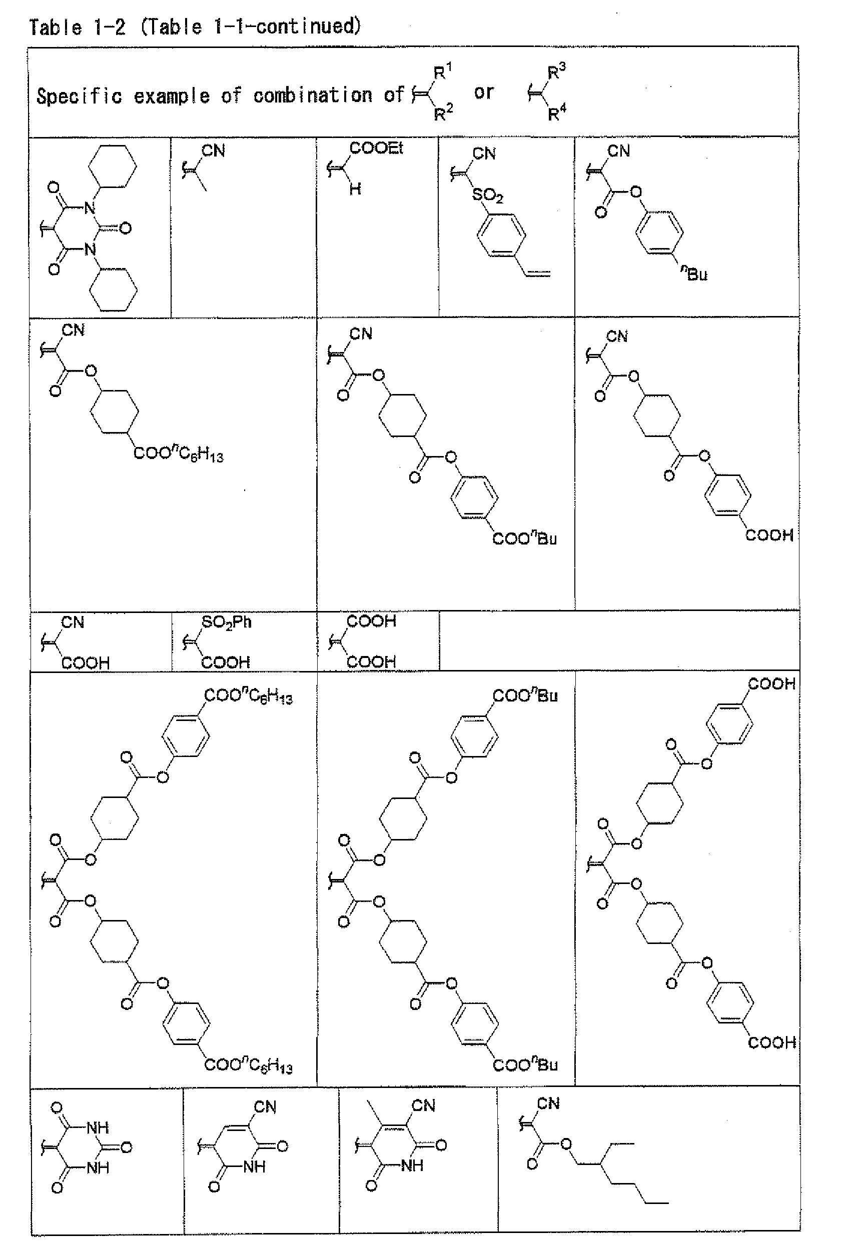

R^{B5} and R^{B6} each independently represent a hydrogen atom or a monovalent substituent. The monovalent substituent is, for example, a monovalent substituent described above.
In particular, R^{B5} and R^{B6} are preferably a hydrogen atom, a halogen atom, an alkyl group, an aryl group, a cyano group, a carboxyl group, an alkoxycarbonyl group, an aryloxycarbonyl group, a carbamoyl group, an alkylcarbonyl group, an arylcarbonyl group, a nitro group, an amino group, an acylamino group, a sulfonamido group, a hydroxy group, an alkoxy group, an aryloxy group, an acyloxy group, an alkylsulfonyloxy group, an arylsulfonyloxy group, a sulfo group, an alkylthio group, or an arylthio group. R^{B5} and R^{B6} are more preferably a hydrogen atom, a halogen atom, an amino group, an acylamino group, a hydroxy group, an alkoxy group, an aryloxy group, an acyloxy group, an alkylthio group or an arylthio group. R^{B5} and R^{B6} are further preferably an alkoxy group, an aryloxy group, an acyloxy group, an alkoxycarbonyloxy group, an aryloxycarbonyloxy group, an acylamino group, a carbamoyloxy group, or a carbamoylamino group. R^{B5} and R^{B6} are particularly preferably an alkoxy group, an aryloxy group or an acyloxy group. R^{B5} and R^{B6} are still more preferably an alkoxy group having 2 or more carbon atoms.

The alkyl group in the alkoxy group is preferably an alkyl group having 1 to 20 carbon atoms, such as a methyl group, an ethyl group, a propyl group, a hexyl group, and an octyl group. The alkyl group may be substituted with a monovalent substituent at any position. The monovalent substituent is, for example, a monovalent substituent described above. Any of the substituents may bind to each other to form a ring. The alkyl group in the alkoxy group is preferably an alkyl group having 3 to 20 carbon atoms, more preferably an alkyl group having 5 to 18 carbon atoms, and particularly preferably an alkyl group having 6 to 12 carbon atoms.

The aryl group in the aryloxy group is preferably an aryl group having 6 to 20 carbon atoms, such as a phenyl group and a naphthyl group. The aryl group may be substituted with a monovalent substituent at any position. The monovalent substituent is, for example, a monovalent substituent described above. Any of the substituents may bind to each other to form a ring. The aryl group in the aryloxy group is preferably an aryl group having 6 to 14 carbon atoms, more preferably an aryl group having 6 to 10 carbon atoms, and particularly preferably a phenyl group.

The acyl group in the acyloxy group is preferably an acyl group having 1 to 20 carbon atoms, such as an acetyl group, a propionyl group, a butanoyl group, a hexanoyl group, an octanoyl group, a benzoyl group, and a naphthoyl group. The acyl group may be substituted with a monovalent substituent at any position. The monovalent substituent is, for example, a monovalent substituent described above. Any of the substituents may bind to each other to form a ring. The acyl group in the acyloxy group is preferably an acyl group having 1 to 15 carbon atoms, more preferably an acyl group having 1 to 10 carbon atoms, and particularly preferably an acyl group having 4 to 8 carbon atoms.

The alkyl group in the alkoxycarbonyloxy group is preferably an alkyl group having 1 to 20 carbon atoms, such as a methyl group, an ethyl group, a propyl group, a hexyl group, and an octyl group. The alkyl group may be substituted with a monovalent substituent at any position. The monovalent substituent is, for example, a monovalent substituent described above. Any of the substituents may bind to each other to form a ring. The alkyl group in the alkoxycarbonyloxy group is preferably an alkyl group having 3 to 20 carbon atoms, more preferably an alkyl group having 5 to 18 carbon atoms, and particularly preferably an alkyl group having 6 to 12 carbon atoms.

The aryl group in the aryloxycarbonyloxy group is preferably an aryl group having 6 to 20 carbon atoms, such as a phenyl group and a naphthyl group. The aryl group may be substituted with a monovalent substituent at any position. The monovalent substituent is, for example, a monovalent substituent described above. Any of the substituents may bind to each other to form a ring. The aryl group in the aryloxycarbonyloxy group is preferably an aryl group having 6 to 14 carbon atoms, more preferably an aryl group having 6 to 10 carbon atoms, and particularly preferably a phenyl group.

The acyl group in the acylamino group is preferably an acyl group having 1 to 20 carbon atoms, such as an acetyl group, a propionyl group, a butanoyl group, a hexanoyl group, an octanoyl group, a benzoyl group, and a naphthoyl group. The acyl group may be substituted with a monovalent substituent at any position. The monovalent substituent is, for example, a monovalent substituent described above. Any of the substituents may bind to each other to form a ring. The acyl group in the acylamino group is preferably an acyl group having 1 to 15 carbon atoms, more preferably an acyl group having 1 to 10 carbon atoms, and particularly preferably an acyl group having 4 to 8 carbon atoms.

The substituent on the nitrogen atom in the carbamoyloxy group is preferably a hydrogen atom, an alkyl group having 1 to 20 carbon atoms, or an aryl group having 6 to 20 carbon atoms. Examples thereof include a hydrogen atom, a methyl group, an ethyl group, a propyl group, a hexyl group, an octyl group, a phenyl group, and a naphthyl group. The alkyl group and the aryl group may be substituted with a monovalent substituent at any position. The monovalent substituent is, for example, a monovalent substituent described above. The alkyl group and the aryl group in the carbamoyloxy group is preferably an alkyl group having 3 to 20 carbon atoms and an aryl group having 6 to 14 carbon atoms, respectively, and more preferably an alkyl group having 6 to 12 carbon atoms and an aryl group having 6 to 10 carbon atoms, respectively.

The substituent on the nitrogen atom in the carbamoylamino group is preferably a hydrogen atom, an alkyl group having 1 to 20 carbon atoms, or an aryl group having 6 to 20 carbon atoms. Examples thereof include a hydrogen atom, a methyl group, an ethyl group, a propyl group, a hexyl group, an octyl group, a phenyl group, and a naphthyl group. The alkyl group and the aryl group may be substituted with a monovalent substituent at any position. The monovalent substituent is, for example, a monovalent substituent described above. The alkyl group and the aryl group in the carbamoylamino group is preferably an alkyl group having 3 to 20 carbon atoms and an aryl group having 6 to 14 carbon atoms, respectively, and more preferably an alkyl group having 6 to 12 carbon atoms and an aryl group having 6 to 10 carbon atoms, respectively.

R^{B5} and R^{B6} may be different from each other, but are preferably the same as each other.

Preferable specific examples of R^{B5} and R^{B6} are shown in the following Table 2, but the present invention is not restricted thereby. The wavy line in the Table indicates the binding site on the benzene ring shown in formula (5).

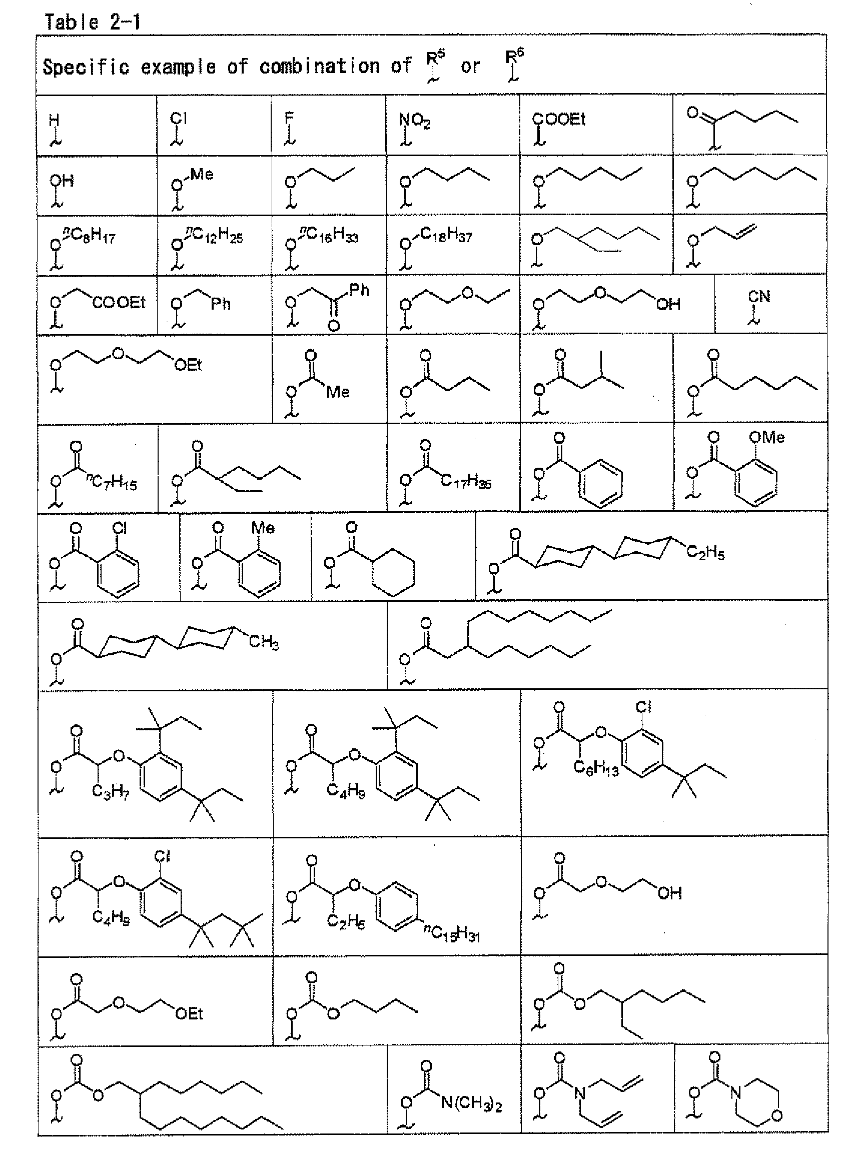

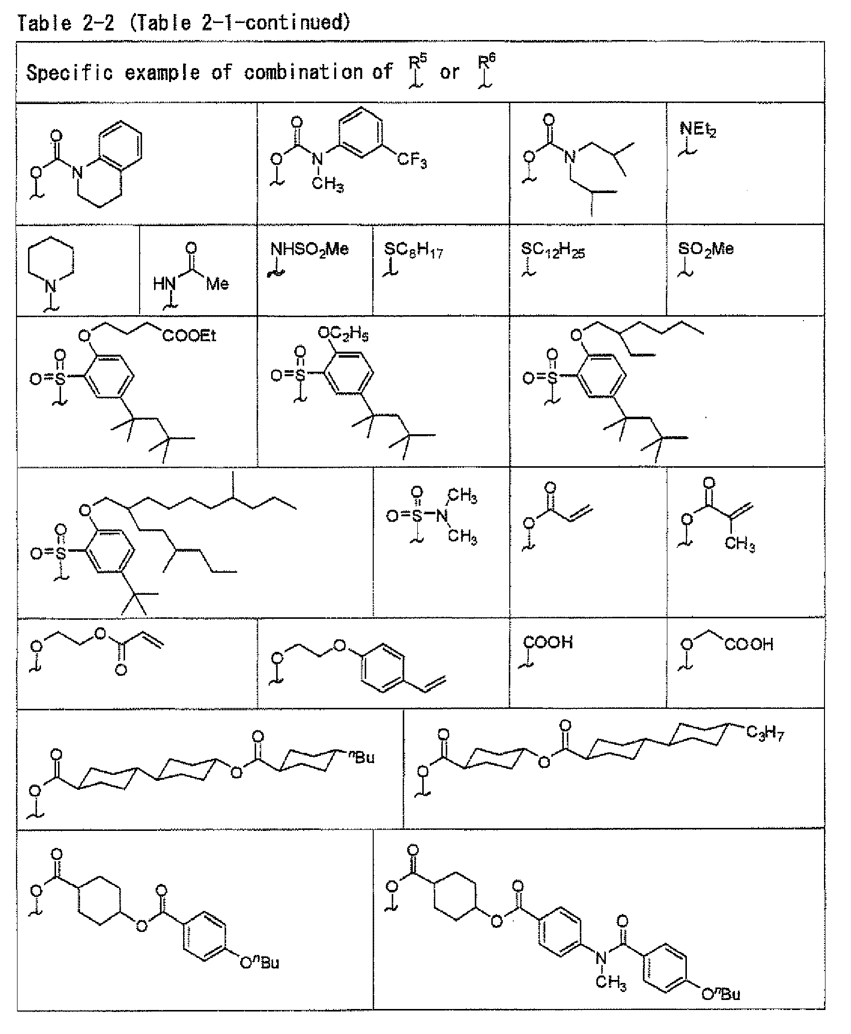

X^{B1}, X^{B2}, X^{B3} and X^{B4} each independently represent a hetero atom. Examples of the hetero atom include a boron atom, a nitrogen atom, an oxygen atom, a silicon atom, a phosphorus atom, a sulfur atom, a selenium atom, and a tellurium atom. X^{B1}, X^{B2}, X^{B3} and X^{B4} each are preferably a nitrogen atom, an oxygen atom or a sulfur atom; more preferably a nitrogen atom or a sulfur atom; and particularly preferably a sulfur atom.
X^{B1}, X^{B2}, X^{B3} and X^{B4} may be different from each other, but the combination of X^{B1} and X^{B2} and the combination of X^{B3} and X^{B4} are preferably the same as each other. Most preferably, all groups each represent a sulfur atom.

Preferable specific examples of the combination of X^{B1} and X^{B2} or the combination of X^{B3} and X^{B4} are shown in the following Table 3, but the present invention is not restricted thereby. Ac represents an acetyl group in the present description. The wavy line in the Table indicates the binding site on the carbon atoms in formula (5) to which R^{B1} and R^{B2} or R^{B3} and R^{B4} bind.

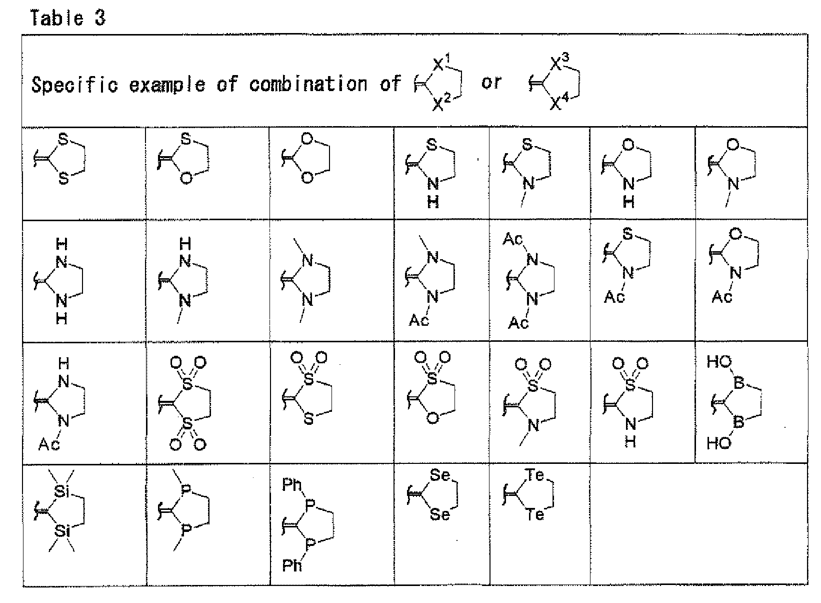

The compound represented by formula (5) is preferably a compound represented by the following formula (5a).

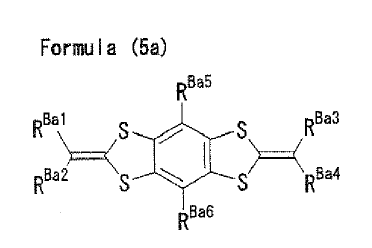

In formula (5a), R^{Ba1}, R^{Ba2}, R^{B3} and R^{Ba4} each represent a monovalent substituent. At least one of R^{Ba1}, R^{Ba2}, R^{Ba3} and R^{Ba4} represents a cyano group, an alkoxycarbonyl group having 1 to 20 carbon atoms (preferably 1 to 10 carbon atoms), an aryloxycarbonyl group having 6 to 20 carbon atoms (preferably 6 to 10 carbon atoms), a carbamoyl group having 1 to 20 carbon atoms (preferably 1 to 10 carbon atoms), an alkylcarbonyl group having 1 to 20 carbon atoms (preferably 1 to 10 carbon atoms), an arylcarbonyl group having 6 to 20 carbon atoms (preferably 6 to 10 carbon atoms), an alkylsulfonyl group having 1 to 20 carbon atoms (preferably 1 to 10 carbon atoms) or an arylsulfonyl group having 6 to 20 carbon atoms (preferably 6 to 10 carbon atoms).

It is preferable that R^{Ba1}, R^{Ba2}, R^{Ba3}, and R^{Ba4} each are a monovalent substituent by which at least one of the combination of (R^{Ba1}, R^{Ba2}) and the combination of (R^{Ba3}, R^{Ba4}) does not form a ring.
It is especially preferable that each of R^{Ba1}, R^{Ba2}, R^{Ba3}, and R^{Ba4} is a monovalent substituent by which neither the combination of (R^{Ba1}, R^{Ba2}) nor the combination of (R^{Ba3}, R^{Ba4}) forms a ring.
In the case where the ring is not formed, there are such advantages that the ultraviolet absorbent is excellent in the long-wavelength ultraviolet absorbing ability and also coloration of yellow to the ultraviolet absorbent itself can be suppressed. In addition, comparing with the case of forming a ring, the case of not forming a ring has such an advantage that the ultraviolet absorbent is excellent both in a solubility to a solvent and a compatibility with a polymer.

In the present specification, examples of the monovalent substituent that does not form any ring include a straight-chain or branched alkyl group having 1 to 20 carbon atoms (preferably 1 to 10 carbon atoms) (e.g., methyl, ethyl), an aryl group having 6 to 20 carbon atoms (preferably 6 to 10 carbon atoms) (e.g., phenyl, naphthyl), a cyano group, an alkoxycarbonyl group having 1 to 20 carbon atoms (preferably 1 to 10 carbon atoms) (e.g., methoxycarbonyl), an aryloxycarbonyl group having 6 to 20 carbon atoms (preferably 6 to 10 carbon atoms) (e.g., phenoxycarbonyl), a substituted or unsubstituted carbamoyl group having 1 to 20 carbon atoms (preferably 1 to 10 carbon atoms) (e.g., carbamoyl, N-phenylcarbamoyl, N,N-dimethylcarbamoyl), an alkylcarbonyl group having 1 to 20 carbon atoms (preferably 1 to 10 carbon atoms) (e.g., acetyl), an arylcarbonyl group having 6 to 20 carbon atoms (preferably 6 to 10 carbon atoms) (e.g., benzoyl), a nitro group, a substituted or unsubstituted sulfamoyl group having 0 to 20 carbon atoms (preferably 0 to 10 carbon atoms) (e.g., sulfamoyl, N-phenylsulfamoyl), an alkylsulfinyl group having 1 to 20 carbon atoms (preferably 1 to 10 carbon atoms) (e.g., methansulfonyl), an arylsulfonyl group having 6 to 20 carbon atoms (preferably 6 to 10 carbon atoms) (e.g., benzenesulfonyl), and a four- to seven-membered (preferably five- to six-membered) heterocyclic group (e.g., pyridyl, morpholino). The substituent may be further substituted, and multiple substituents, if present, may be the same as or different from each other.

Herein, at least one of the monovalent substituents R^{Ba1}, R^{Ba2}, R^{Ba3} and R^{Ba4} is a cyano group, an alkoxycarbonyl group having 1 to 20 carbon atoms (preferably 1 to 10 carbon atoms), an aryloxycarbonyl group having 6 to 20 carbon atoms (preferably 6 to 10 carbon atoms), a carbamoyl group having 1 to 20 carbon atoms (preferably 1 to 10 carbon atoms), an alkylcarbonyl group having 1 to 20 carbon atoms (preferably 1 to 10 carbon atoms), an arylcarbonyl group having 6 to 20 carbon atoms (preferably 6 to 10 carbon atoms), an alkylsulfonyl group having 1 to 20 carbon atoms (preferably 1 to 10 carbon atoms) or an arylsulfonyl group having 6 to 20 carbon atoms (preferably 6 to 10 carbon atoms).

R^{1a}, R^{2a}, R^{3a} and R^{4a} each are particularly preferably selected from a cyano group, an alkoxycarbonyl group having 1 to 20 carbon atoms (preferably 1 to 10 carbon atoms), an aryloxycarbonyl group having 6 to 20 carbon atoms (preferably 6 to 10 carbon atoms), a carbamoyl group having 1 to 20 carbon atoms (preferably 1 to 10 carbon atoms), an alkylcarbonyl group having 1 to 20 carbon atoms (preferably 1 to 10 carbon atoms), an arylcarbonyl group having 6 to 20 carbon atoms (preferably 6 to 10 carbon atoms), an alkylsulfonyl group having 1 to 20 carbon atoms (preferably 1 to 10 carbon atoms) and an arylsulfonyl group having 6 to 20 carbon atoms (preferably 6 to 10 carbon atoms). It is more preferable that the combination of R^{1a} and R^{2a}, and the combination of R^{3a} and R^{4a}, respectively, are the same in terms of combination of the members in each pair.

R^{Ba5} and R^{Ba6} each represent an alkoxy group having 1 to 20 carbon atoms (preferably 1 to 10 carbon atoms), an aryloxy group having 6 to 20 carbon atoms (preferably 6 to 10 carbon atoms), an acyloxy group having 1 to 20 carbon atoms (preferably 1 to 10 carbon atoms), an alkoxycarbonyloxy group having 1 to 20 carbon atoms (preferably 1 to 10 carbon atoms), an aryloxycarbonyloxy group having 6 to 20 carbon atoms (preferably 6 to 10 carbon atoms), a carbamoyloxy group having 1 to 20 carbon atoms (preferably 1 to 10 carbon atoms), an amino group having 0 to 20 carbon atoms (preferably 0 to 10 carbon atoms), an acylamino group having 1 to 20 carbon atoms (preferably 1 to 10 carbon atoms), or a carbamoylamino group having 1 to 20 carbon atoms (preferably 1 to 10 carbon atoms).

R^{Ba5} and R^{Ba6} may further have a substituent. Examples of the substituent include the monovalent substituents described above. Examples of a bivalent substituent include a carbonyl group and an imino group. Multiple substituents, when present, may be the same as or different from each other. The substituents may bind to each other, forming a condensed ring or a spiro ring.

Hereinafter, specific examples of the compound represented by formula (5) or (5a) that can be used in the present invention will be described, but the present invention is not restricted thereby.

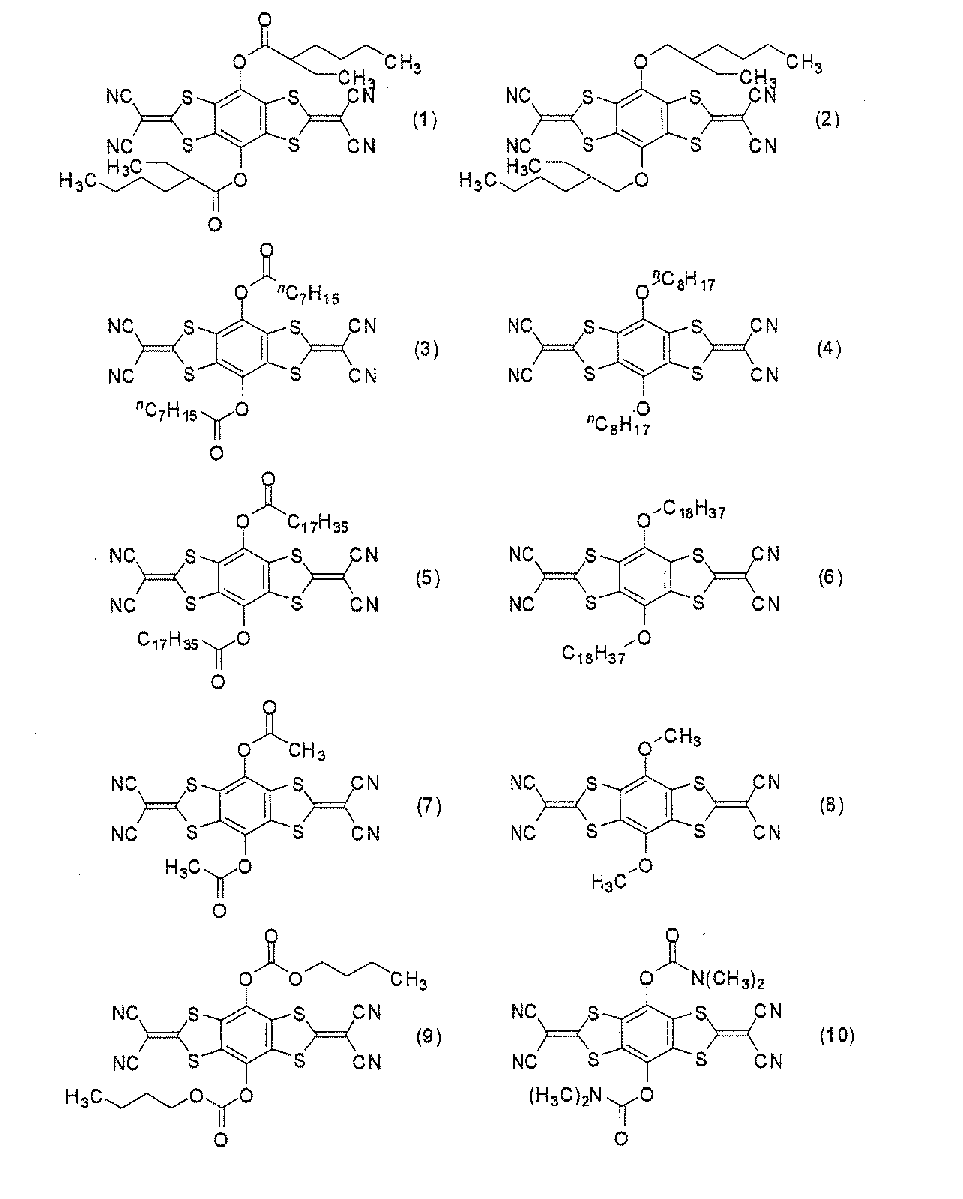

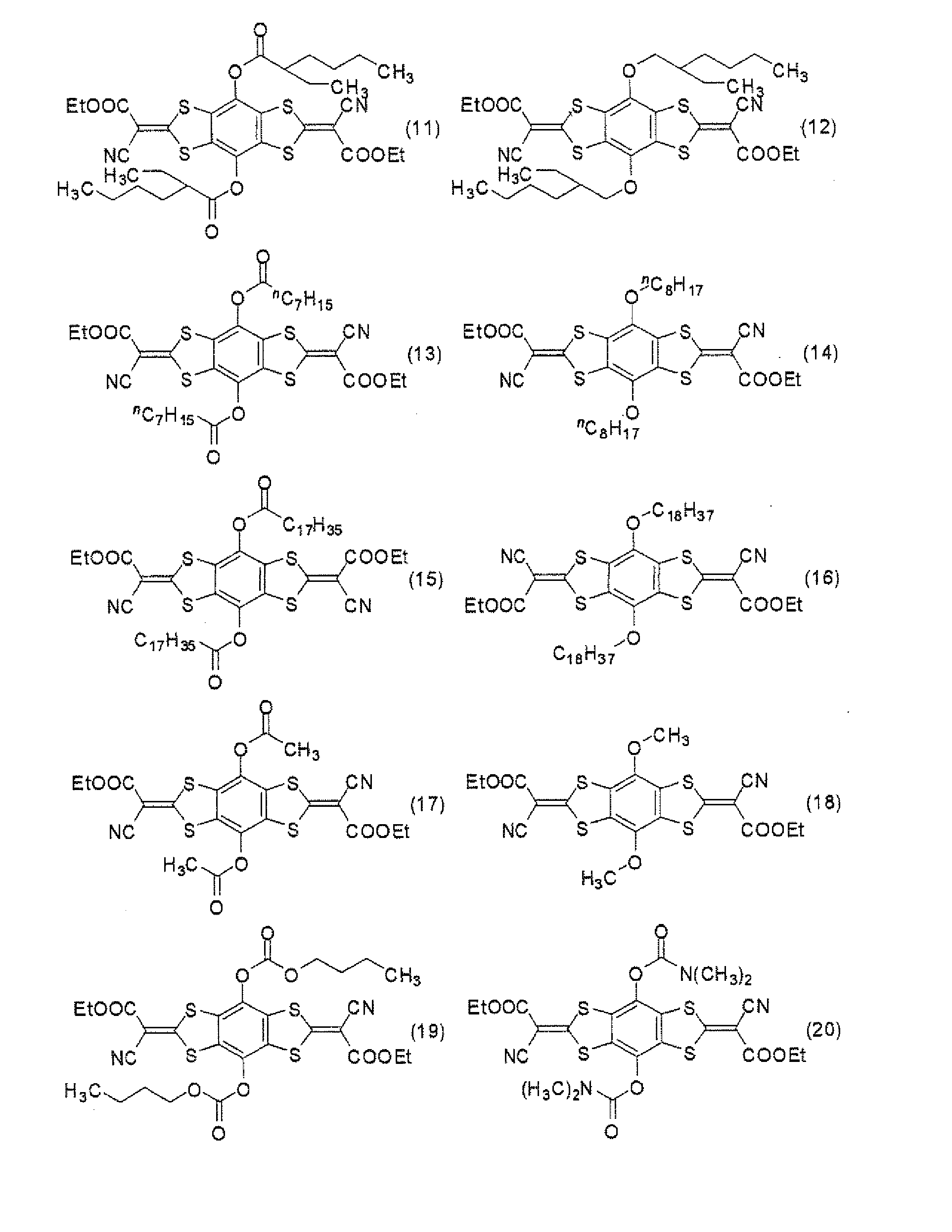

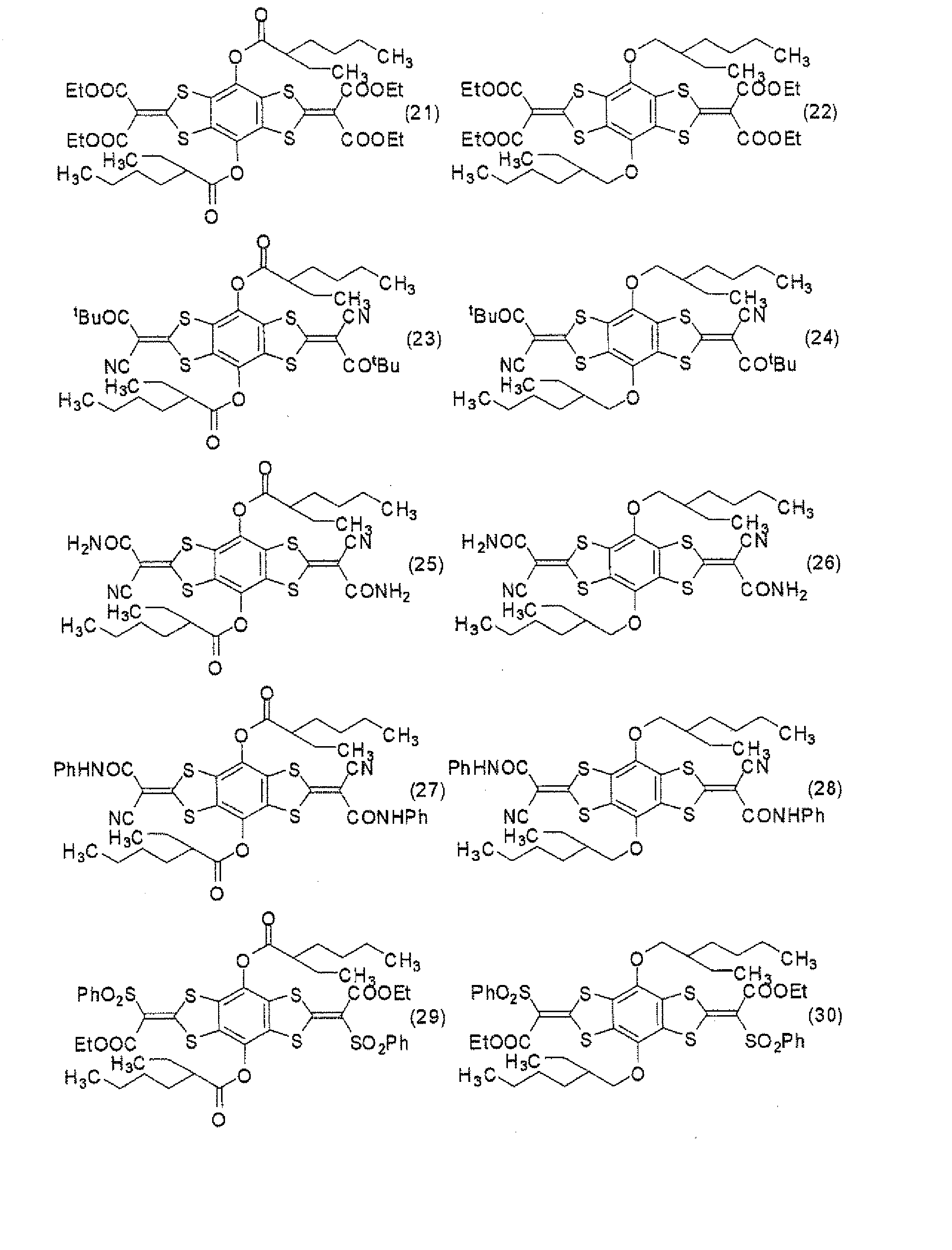

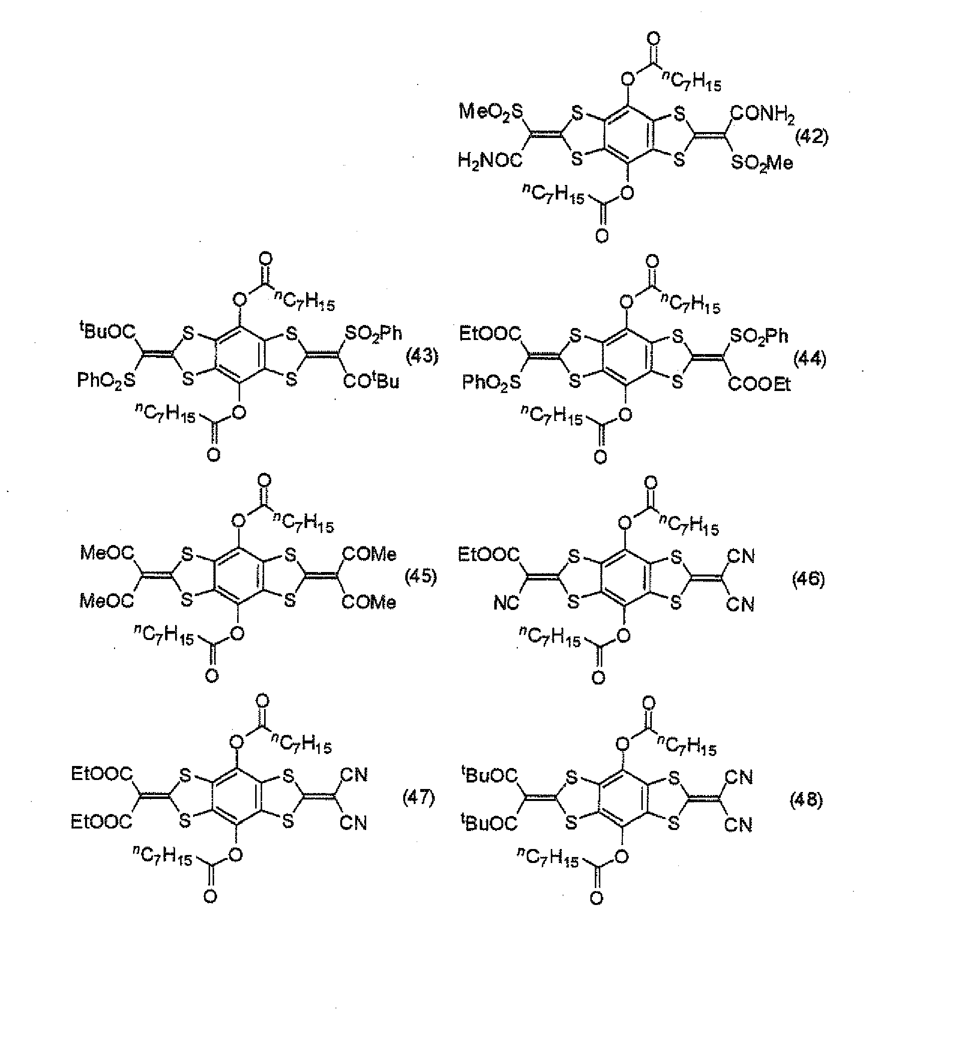

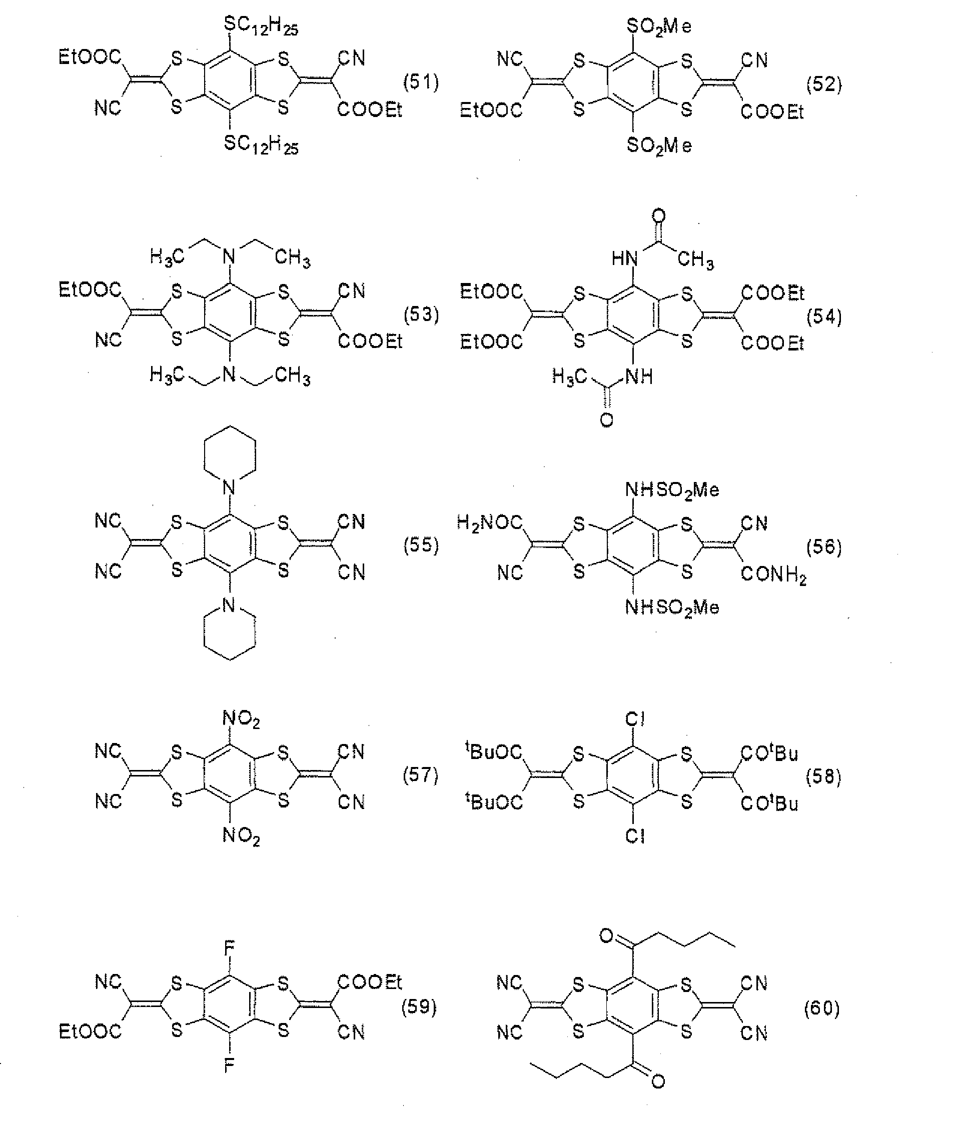

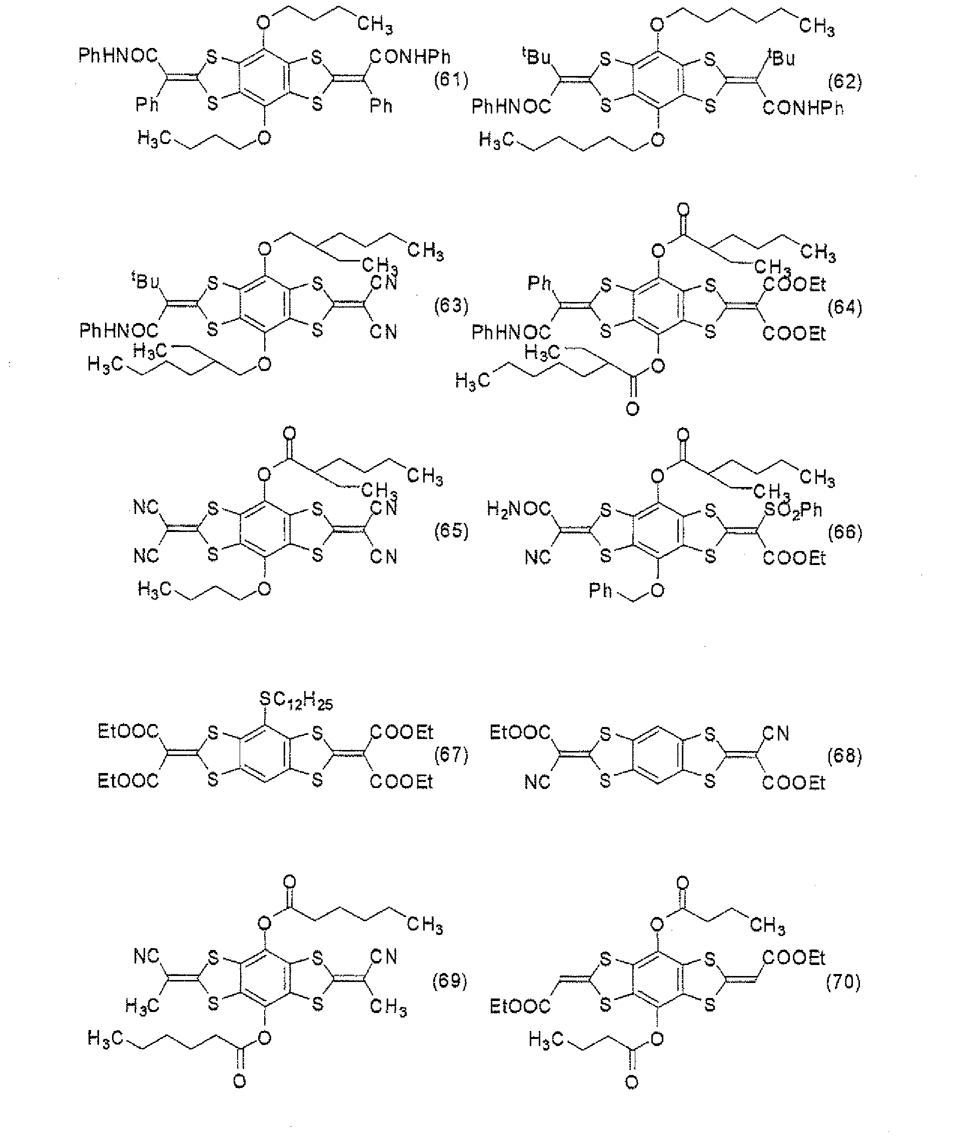

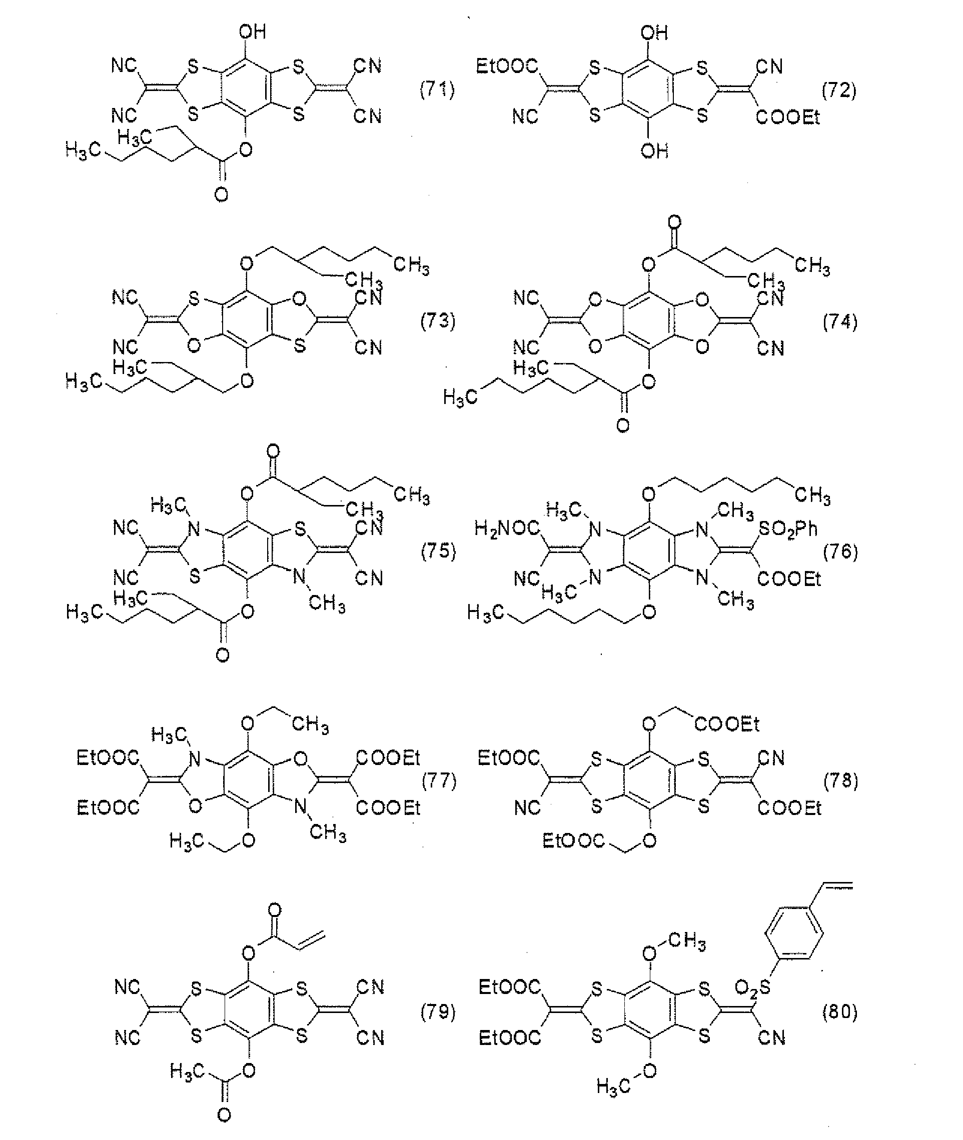

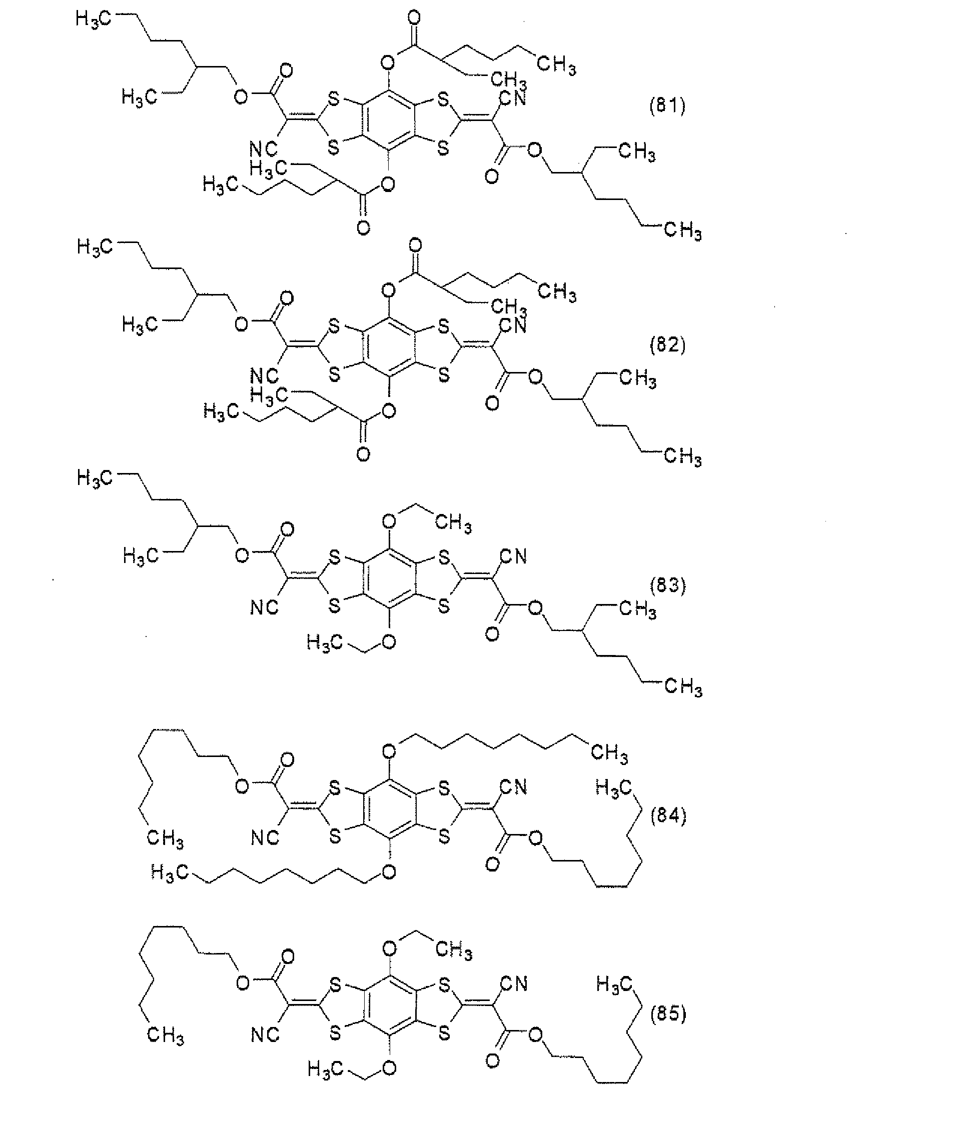

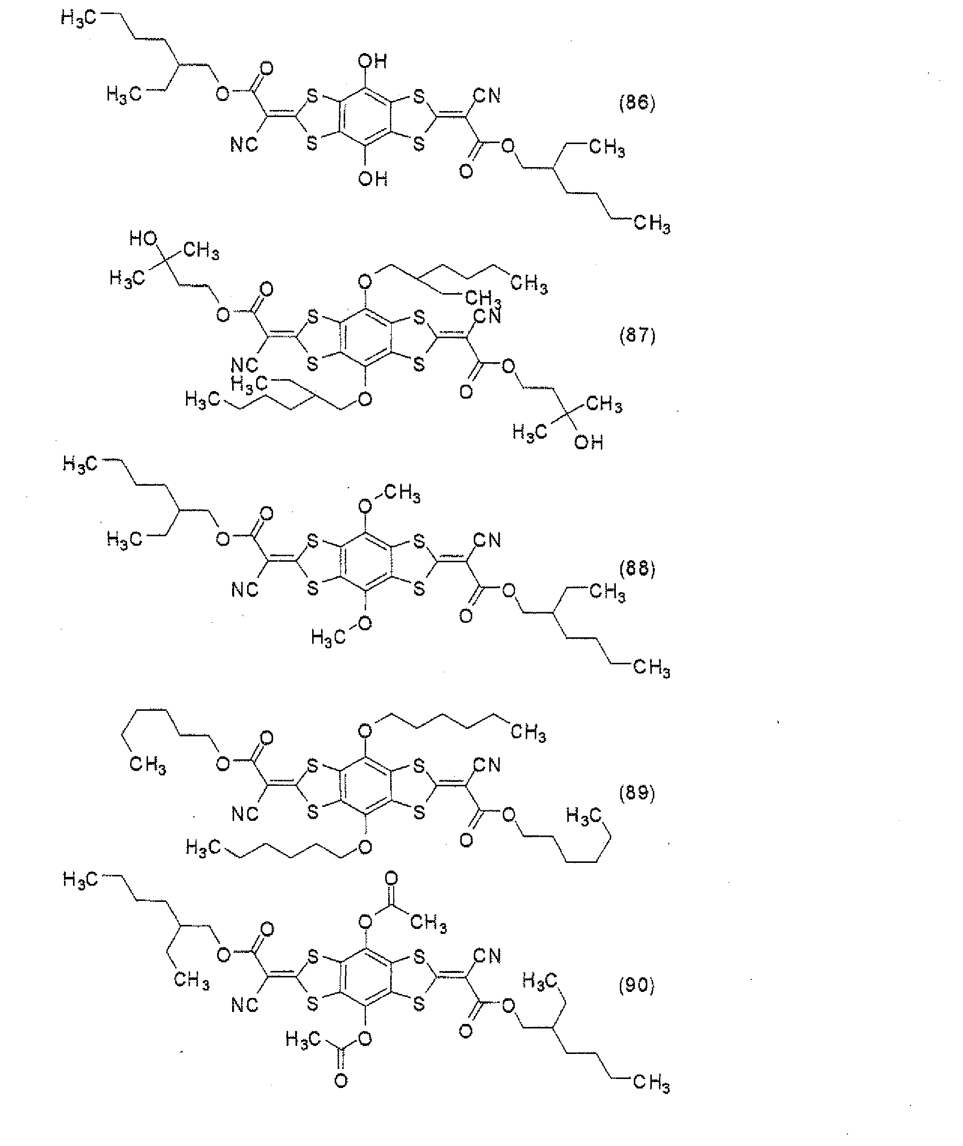

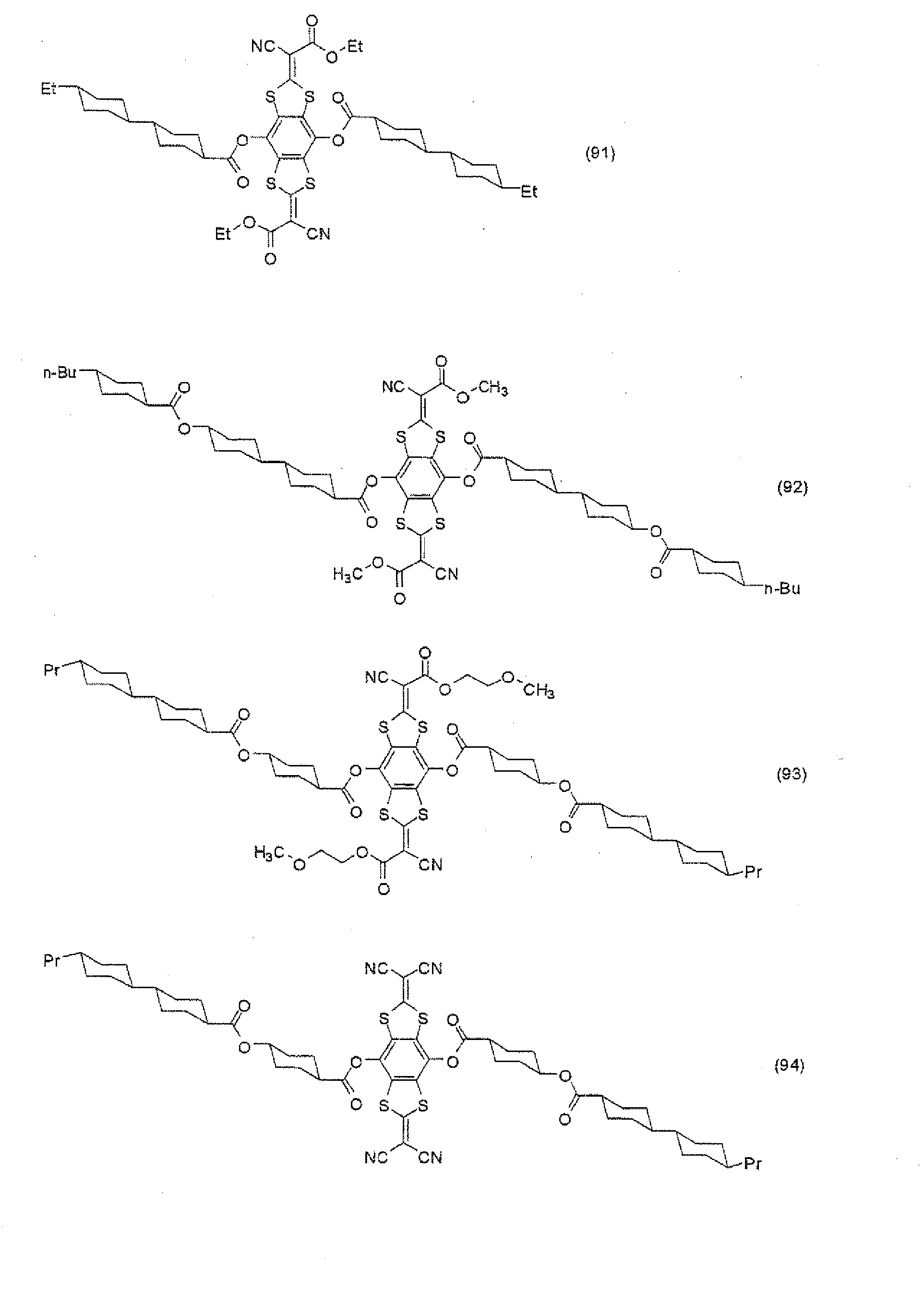

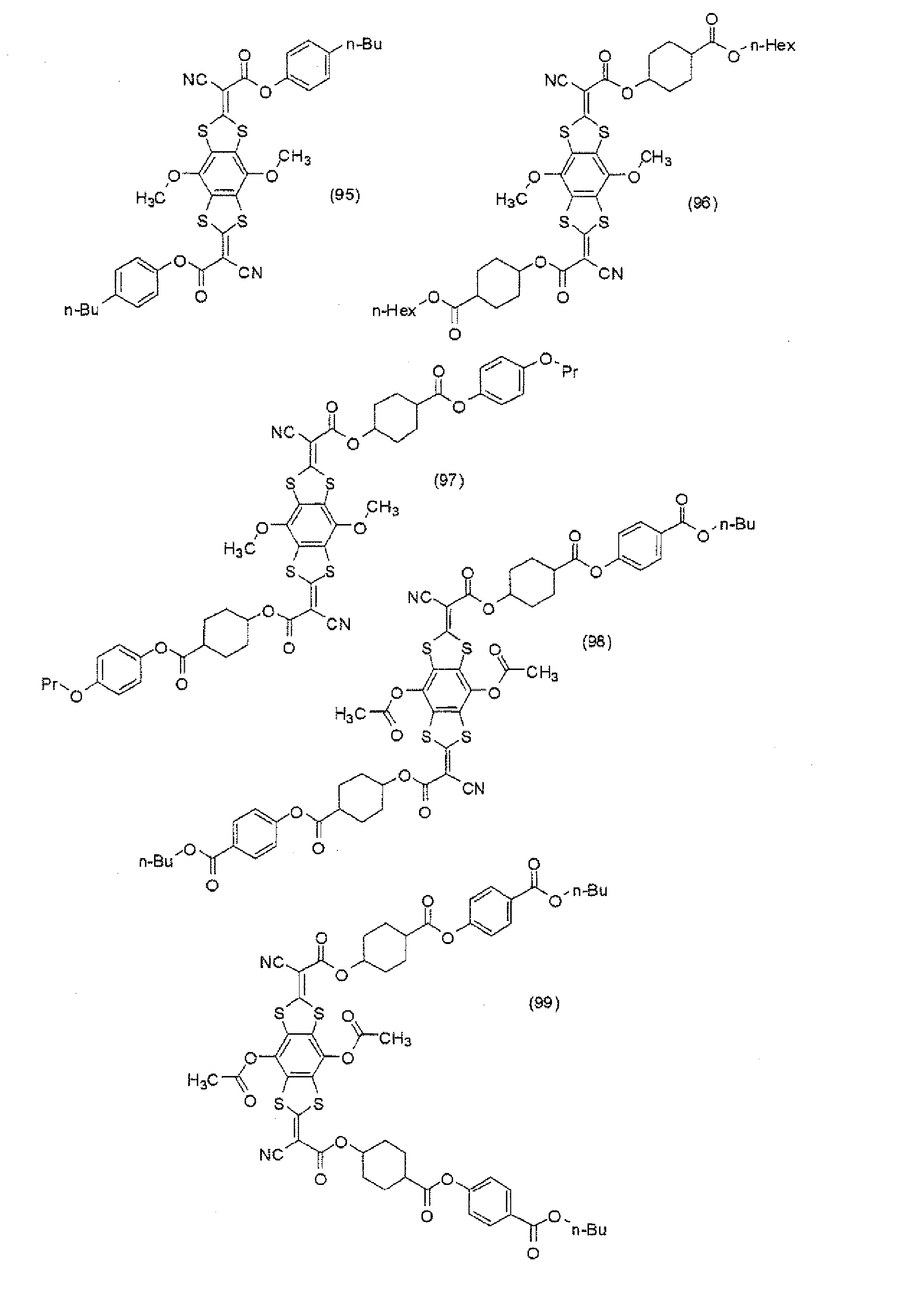

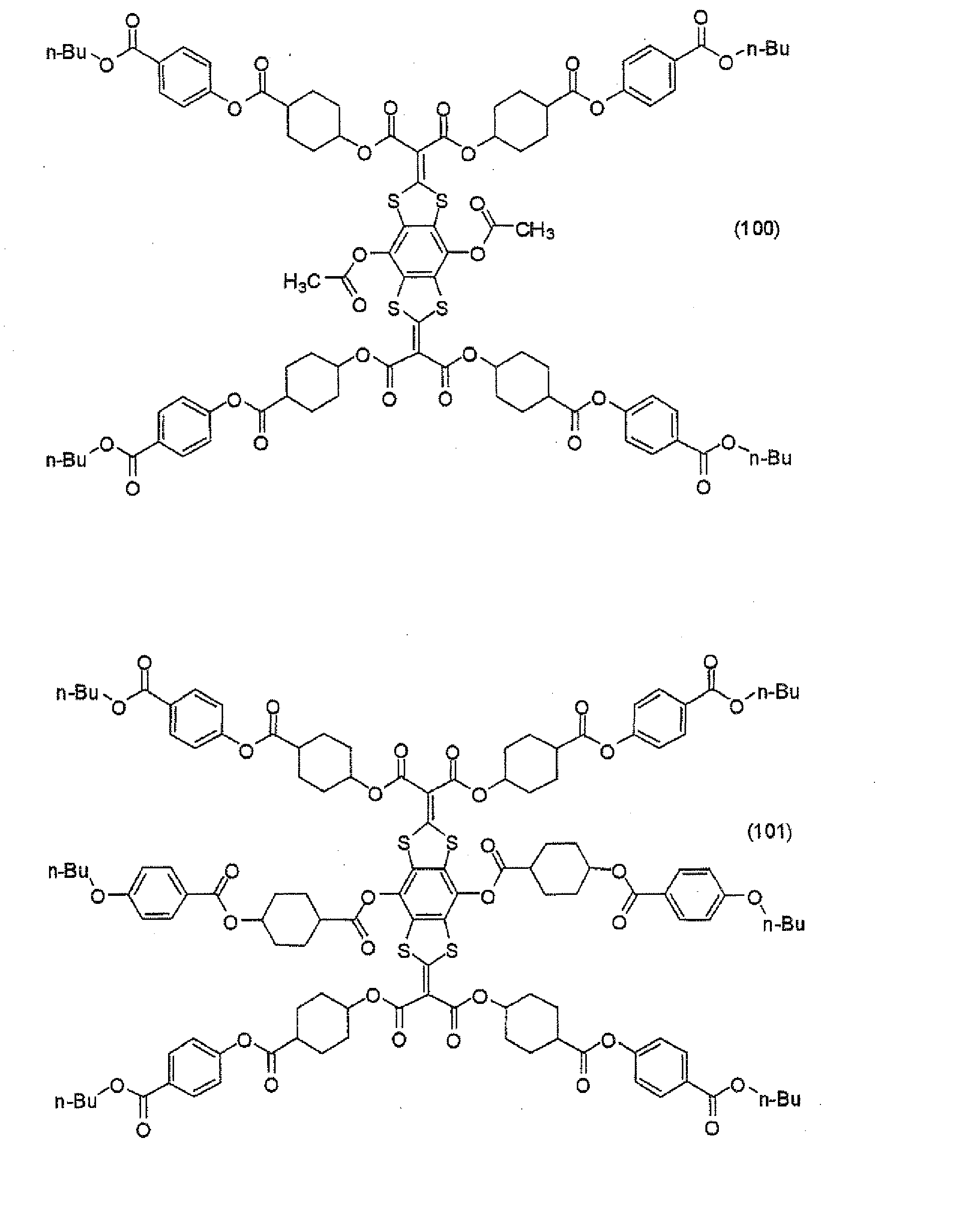

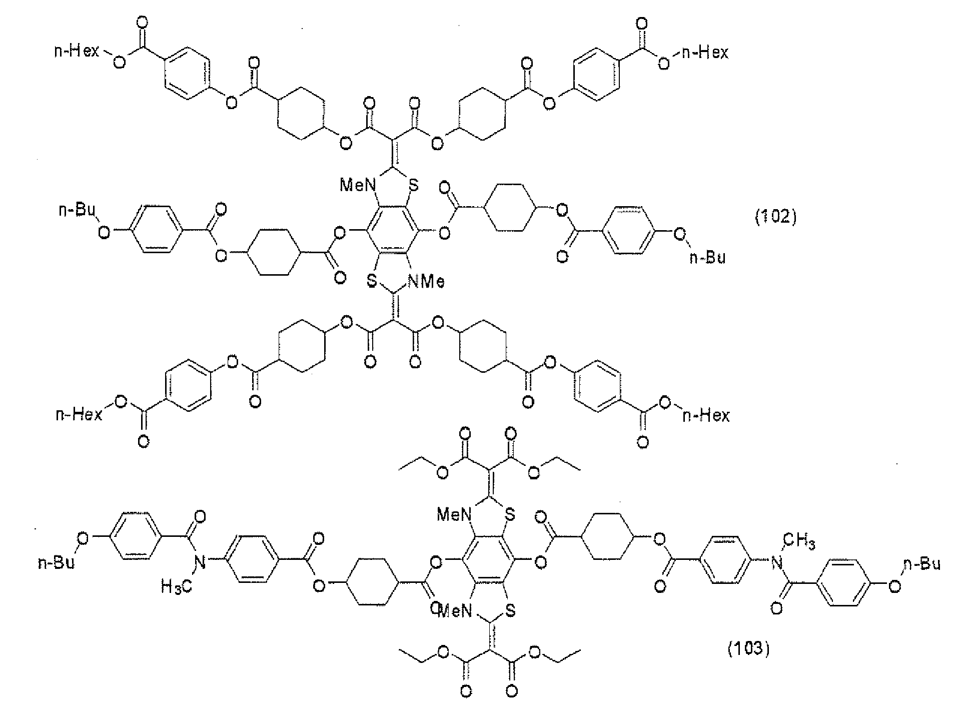

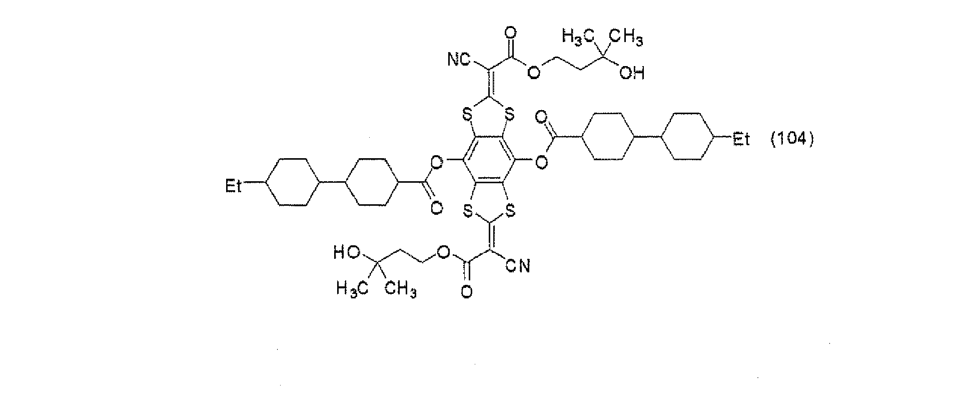

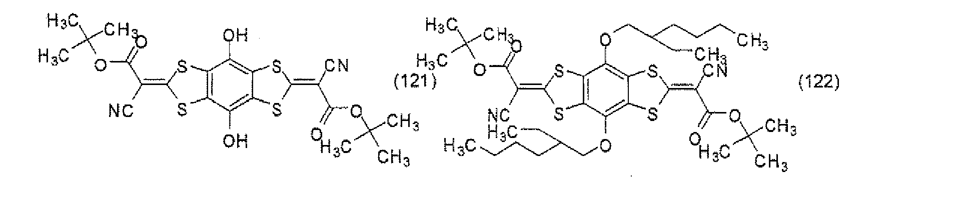

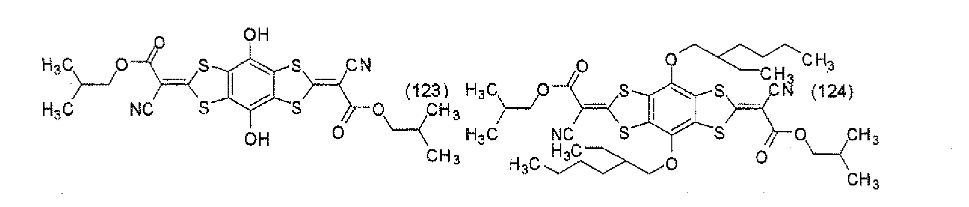

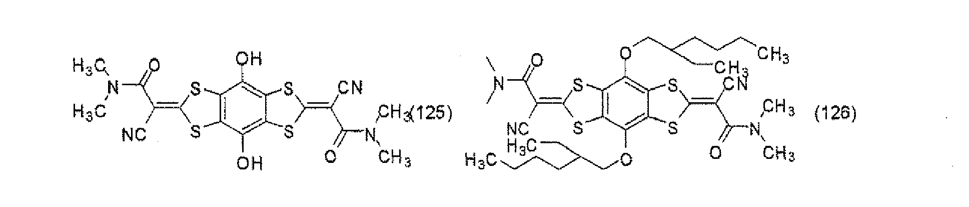

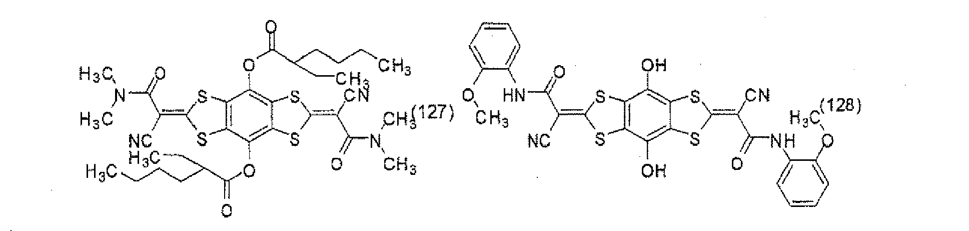

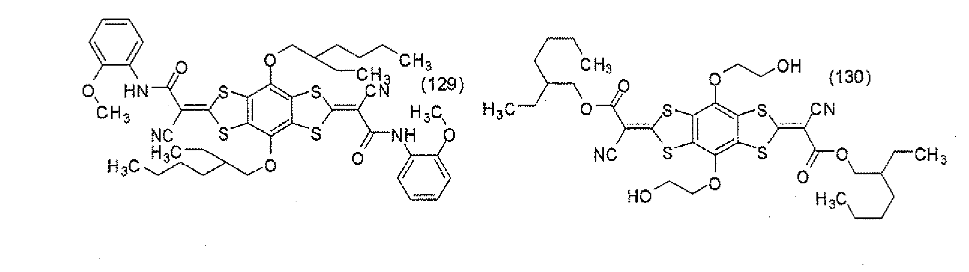

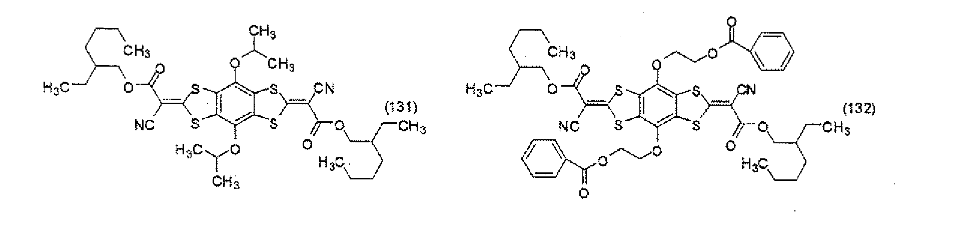

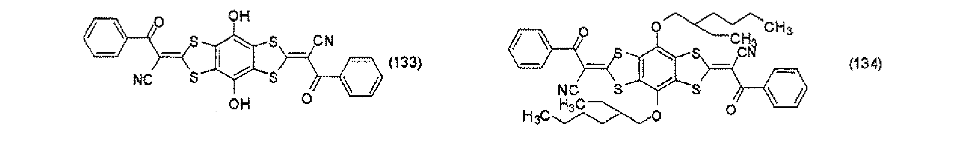

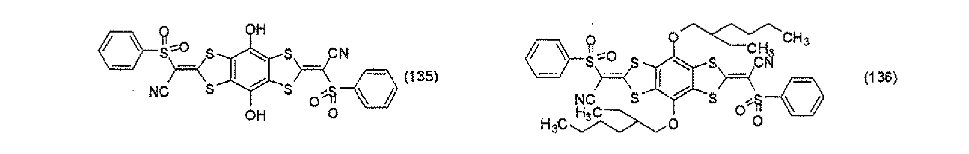

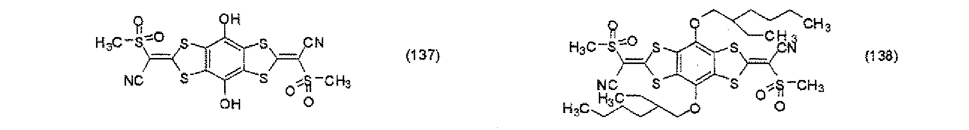

The compound represented by formula (5) or (5a) can be synthesized by any method. For example, such a compound can be synthesized by introducing an intended substituent into a synthetic intermediate of a compound represented by formula (5), in which R^{B5} and R^{B6} each are a hydroxy group, and by alkylation or acylation.
For example, in the case where X^{B1}, X^{B2}, X^{B3} and X^{B4} each are a sulfur atom, the synthetic intermediate represented by the formula (5), in which R^{B5} and R^{B6} each are a hydroxy group, can be synthesized according to the method in any one of known Patent Literatures and non-Patent Literatures, for example, JP-A-63-225382, p. 3, right upper column, line 1 to left lower column, line 1 Reference Examples; and Liebigs Ann. Chem., 1969, vol. 726, pp. 103-109, lines 5 to 12, p. 109.
In addition, the compound represented by formula (5) or (5a) can be synthesized according to the synthetic routes for preparation of similar compounds described, for example, in Journal of Organic Chemistry, 1990, vol. 55, pp. 5347-5350, experimental section on p. 5349, right column, line 27; ibid., 1994, vol. 59, pp. 3077-3081, p. 3081, lines 11 to 16; Tetrahedron Letters, 1991, vol. 32, pp. 4897-4900, p. 4897, line 9 to p. 4899, line 3; ibid., 1977, vol. 26, p. 2225, Table 1; Tetrahedron, 1993, vol. 49, pp. 3035-3042, p. 3037, lines 11 to 20 and p. 3040, lines 22 to 38; Journal of the American Chemical Society, 1958, vol. 80, pp. 1662-1664, p. 1664, right column, lines 6 to 15; ibid., 1995, vol. 117, pp. 9995-10002, p. 9996, right column, line 12 to p. 9997, left column, line 46; JP-A-6-80672, p. 4, left column, line 43 to right column, line 45; Phosphorus, Sulfur, and Silicon, 1997, vol. 120 & 121, pp. 121-143, p. 123, line 18 to p. 124, line 3; Chem. Commun., 2004, pp. 1758-1759, p. 1758, left column, lines 44 to 54; Germany Patent No. 3728452, p. 4, line 46 to p. 5, line 16; JP-A-51-100097, p. 3, left upper column, line 3 to p. 4, left lower column, line 4; and JP-T-5-506428, p. 12, right lower column, line 1 to p. 35, right lower column, line 1.

For example, the exemplified compound (1) can be synthesized by allowing carbon disulfide and malononitrile to react with each other in the presence of sodium hydroxide to obtain a disodium salt, and allowing the disodium salt to react with chloranile, and then allowing the resultant product to react with 2-ethylhexanoyl chloride in the presence of a base. The exemplified compound (2) can be synthesized by allowing carbon disulfide and malononitrile to react with each other in the presence of sodium hydroxide to obtain a disodium salt, and allowing the disodium salt to react with chloranile, and then allowing the resultant product to react with 2-ethylhexyl bromide in the presence of a base.
The exemplified compound (11) can be synthesized by allowing carbon disulfide and cyanoethyl acetate to react with each other in the presence of potassium hydroxide to obtain a dipotassium salt, and allowing the dipotassium salt to react with chloranil to obtain the exemplified compound (72), and allowing the exemplified compound (72) to react with 2-ethylhaxanoyl chloride in the presence of a base. The exemplified compound (12) can be synthesized by allowing the exemplified compound (72) to react with 2-ethylhexyl bromide in the presence of a base.
The exemplified compound (59) can be synthesized by allowing carbon disulfide and cyanoethyl acetate to react with each other in the presence of potassium hydroxide to obtain a dipotassium salt, and allowing the dipotassium salt to react with hexafluorobenzene.
The exemplified compound (51) can be synthesized by allowing the exemplified compound (59) to react with sodium dodecanethiolate.

In the case where R^{B1} and R^{B2}, R^{B3} and R^{B4}, X^{B1} and X^{B2}, X^{B3} and X^{B4}, or R^{B5} and R^{B6} are different from each other, the compound represented by formula (5) may have a geometrical isomer, in which the respective groups are exchanged. Such a geometrical isomer is also included in the compound represented by formula (5) that can be used in the present invention, even in the case where only one geometrical isomer is described in the present specification. In addition, even in the case where a mixture of the geometrical isomers is formed in the synthetic or purification process, only a typical isomeric structure is shown in the present specification. In the case where the compound is a geometrical isomer mixture, the abundance ratio is arbitrary between 0:1 1 to 1:0.

The compound represented by any one of formulae (2), (3), (4), (5) and (5a) that can be used in the present invention may have a tautomer, depending on its structure and the environment to which the compound is exposed. In the present specification, only a typical tautomer is described, but other tautomers different from that described in the present specification are also included in the compound that can be used in the present invention.

The compound represented by any one of formulae (2), (3), (4), (5) and (5a) that can be used in the present invention may contain an isotopic element (such as ²H, ³H, ¹³C, ¹⁵N, ¹⁷O, or ¹⁸O).

A polymer, having the structure of the compound represented by any one of formulae (2), (3), (4), (5) and (5a) in its repeating unit as an ultraviolet absorptive group, can be also used favorably in the present invention. Hereinafter, examples of the repeating unit containing the structure of the compound represented by formula (2), (3), (4), (5) or (5a) will be shown.

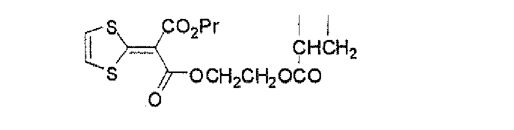

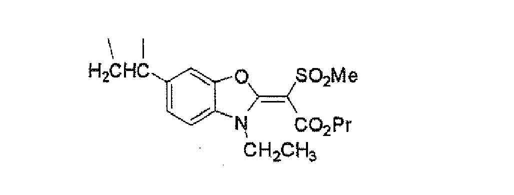

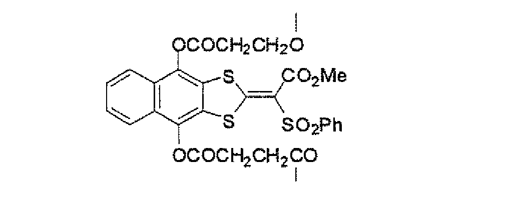

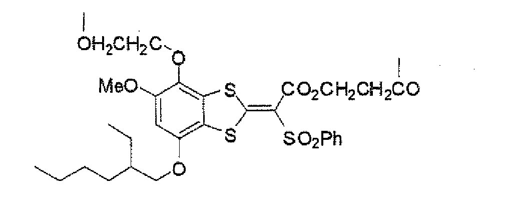

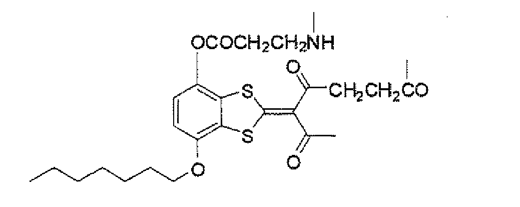

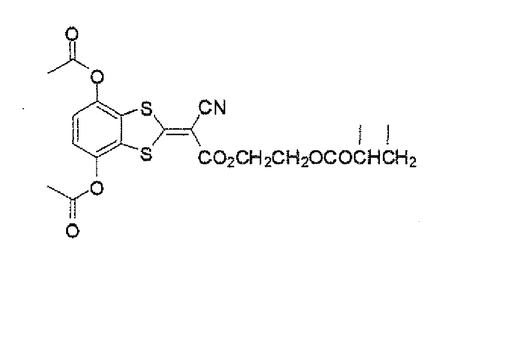

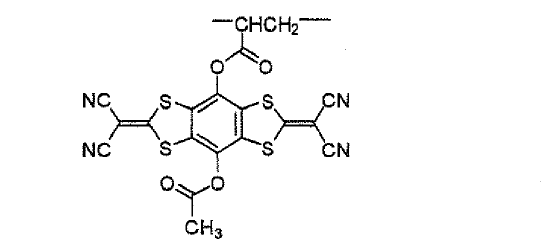

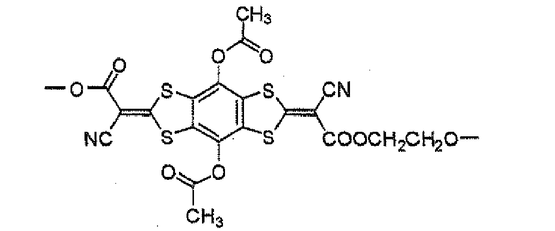

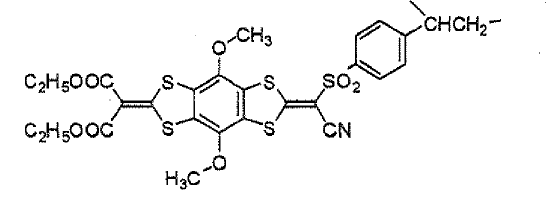

The polymer may be a homopolymer having one kind of repeating unit described above or a copolymer having two or more kinds of repeating units. It may be a copolymer having another repeating unit additionally. Hereinafter, examples of the other repeating unit are shown.

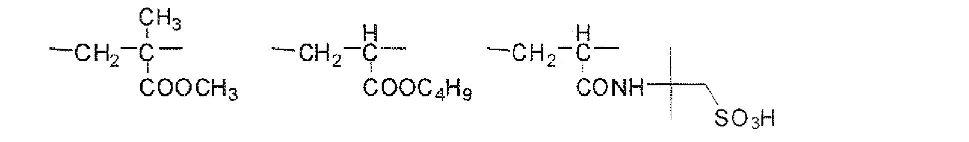

Examples of the polymer having the structure of the ultraviolet absorbent in the repeating unit are described, for example, in JP-B-1-53455, left column, line 39 to p. 12, right column, line 38; JP-A-61-189530, p. 3, right upper column, line 8 to p. 7, left lower column, line 15; JP-A-62-260152, right lower column, line 3 to p. 12, right upper column, line 10; JP-A-63-53544, left upper column, line I to p. 15, right lower column, line 19; JP-A-63-56651, p. 2, right upper column, line 10 to p. 14, left lower column, line 3; EP Patent No. 27242, p. 4, line 29 to p. 16, line 34; and WO 2006/009451 pamphlet, p. 3, line 28 to p. 26, line 1. The polymer can be prepared with reference to the methods described in these Patent Literatures.

### [Ultraviolet absorbent B]

Hereinafter, the ultraviolet absorbent B used in the present invention is explained.
In the ultraviolet absorbent B, the absorbance at 320nm characteristically shows 30% or more, more preferably of 50% or more, of the absorbance at the maximum absorption wavelength. There is no particular upper limit, but this ratio is less than 100%. If the absorbance at 320 nm is less than 30% of the absorbance at the maximum absorption wavelength, a wavelength range that cannot be entirely covered by both the ultraviolet absorbent A and the ultraviolet absorbent B generates in the range from 310 nm to 330 nm. The maximum absorption wavelength of the ultraviolet absorbent B is preferably 350 nm or less.

As the ultraviolet absorbent B, in which the absorption at 320nm is 30% or more of the absorbance at the maximum absorption wavelength and the maximum absorption wavelength is 350 nm or less, two types of the ultraviolet absorbent, i.e., the ultraviolet absorbent B-(1) having a maximum absorption wavelength of 320 nm or less and the ultraviolet absorbent B-(2) having a maximum absorption wavelength of from 320 nm to 350 nm, are considered as described above. These ultraviolet absorbents may be properly selected in accordance with their use.

For example, it is especially preferable that the ultraviolet absorbent B-(1) is used when any other short-wavelength ultraviolet-absorbing element is not present at the time of, for example, kneading the ultraviolet absorbent into a plastic molding, or a polymer. On account that any other element capable of absorbing a short-wavelength ultraviolet of 300 nm or less is not present at the time of kneading the ultraviolet absorbent into the plastic molding or the polymer, usage of the ultraviolet absorbent B-(1), which is capable of effectively absorbing light in the short-wavelength ultraviolet range, enables to prevent the plastic molding itself and its content from ultraviolet lays without another short-wavelength ultraviolet range-absorbing filter. Further, such unexpected effects that both compatibility with respect to a polymer and light fastness are improved are achieved by using the ultraviolet absorbent B-(1) in combination with the ultraviolet absorbent A that is used in the present invention.

It is especially preferable that the ultraviolet absorbent B-(2) is used in the case where another short-wavelength ultraviolet-absorbing element is present at the time of, for example, coating the ultraviolet absorbent on a glass film or dissolving the ultraviolet absorbent with a polymer to coat on a substrate. The ultraviolet absorbent B-(2) is excellent in capability of shielding light of around 320 nm, and is capable of efficiently absorbing a short-wavelength ultraviolet range of 300 nm or less. However, it is sometimes difficult for the ultraviolet absorbent B-(2) to absorb the short-wavelength ultraviolet range. Accordingly, it is preferable that the ultraviolet absorbent B-(2) is coated on a polymer or a glass substrate capable of shielding the short-wavelength ultraviolet range and capable of using as a filter. Further, in the solvent-coating process, improvement of both solubility to the solvent (for example, ethyl acetate, methylethyl ketone, toluene) when a coating film is used and light fastness are unexpectedly achieved by using the ultraviolet absorbent B-(2) in combination with the ultraviolet absorbent A that is used in the present invention.

The ultraviolet absorbent B may have any structure if these conditions are satisfied. Examples thereof include those described, for example, in Yasuichi Okatsu Ed., "Development of Polymer Additives and Environmental Measures" (CMC Publishing, 2003), Chapter 2; and Toray Research Center Inc., Technical Survey Dept., Ed., "New Trend of Functional Polymer Additives" (Toray Research Center Inc., 1999), Chapter 2.3.1. Examples thereof include ultraviolet absorbing structures such as triazine-based, benzotriazole-based, benzophenone-based, cyanine-based, dibenzoylmethane-based, cinnamic acid-based, acrylate-based, benzoic ester-based, and oxalic diamide-based compounds. Specific examples thereof are described, for example, in Fine Chemicals, 2004, May, pp. 28 to 38; Toray Research Center Inc., Technical Survey Dept., Ed., "New Trend of Functional Polymer Additives" (Toray Research Center Inc., 1999), pp. 96 to 140; and Yasuichi Okatsu Ed., "Development of Polymer Additives and Environmental Measures" (CMC Publishing, 2003), pp. 54 to 64.

From the consideration of the latitude of the molar extinction coefficient at 320 nm, benzotriazole-based, benzophenone-based, salicylic acid-based, acrylate-based and triazine-based compounds are preferable. Among these compounds, benzotriazole-based, benzophenone-based and triazine-based compounds, each of which is excellent in light fastness, are more preferable. When these preferable ultraviolet absorbent B is used in combination with the ultraviolet absorbent A comprising of the compound represented by any one of formulae (2), (3), (4), (5) and (5a), it is possible to efficiently absorb the ultraviolet range without a problem of coloration.

The benzotriazole-based compound has an effective absorption wavelength of approximately 270 to 380 nm, and is preferably represented by the following formulae (IIa) or (IIb). Hereinafter, (IIa) and (IIb) are described detail.

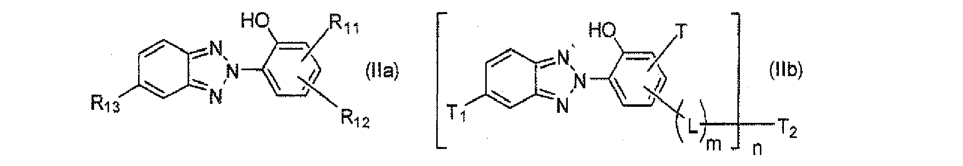

### [In formula (IIa),

R₁₁ represents a hydrogen atom, a substituted or unsubstituted alkyl group, a substituted or unsubstituted cycloalkyl group, or a substituted or unsubstituted aryl group;
R₁₂ represents a hydrogen atom, a halogen atom, a substituted or unsubstituted alkyl group, or a substituted or unsubstituted aryl group; and
R₁₃ represents a hydrogen atom, a halogen atom, a substituted or unsubstituted alkyl group, a substituted or unsubstituted alkoxy group, or -COOR₁₄ group (herein, R₁₄ represents a hydrogen atom, a substituted or unsubstituted alkyl group or a substituted or unsubstituted aryl group.)]

### [In formula (IIb),

T represents a hydrogen atom, or a substituted or unsubstituted alkyl group;
T₁ represents a hydrogen atom, a halogen atom, a substituted or unsubstituted alkyl group, a substituted or unsubstituted aryl group, or a substituted or unsubstituted alkoxy group;
L represents a divalent linking group or a single bond;
m represents 0 or 1;
n represents an integer of 1 to 4; and
when n is 1, T₂ represents a halogen atom, a substituted or unsubstituted alkyl group or a substituted or unsubstituted aryl group; when n is 2, T₂ represents a divalent substituent; when n is 3, T₂ represents a trivalent substituent; and when n is 4, T₂ represents a tetravalent substituent.]

### (Formula (IIa))

R₁₁ represents a hydrogen atom, a substituted or unsubstituted alkyl group, a substituted or unsubstituted cycloalkyl group or a substituted or unsubstituted aryl group.
R₁₁ is preferably a substituted or unsubstituted alkyl group having 1 to 18 carbon atoms, a substituted or unsubstituted cycloalkyl group having 5 to 18 carbon atoms, or a substituted or unsubstituted aryl group having 6 to 24 carbon atoms; and particularly preferably a substituted or unsubstituted alkyl group having 1 to 18 carbon atoms, or a substituted or unsubstituted alkyl group having 1 to 18 carbon atoms.

The substituted alkyl group, the substituted cycloalkyl group and the substituted aryl group each are referred to as an alkyl group, a cycloalkyl group and an aryl group, each of which has a monovalent substituent at an arbitrary position thereof, respectively. Examples of the monovalent substituent include a halogen atom (e.g., a fluorine atom, a chlorine atom, a bromine atom and an iodine atom), a straight-chain or branched alkyl group having 1 to 20 carbon atoms (preferably 1 to 10 carbon atoms) (e.g., methyl, ethyl), an aryl group having 6 to 20 carbon atoms (preferably 6 to 10 carbon atoms) (e.g., phenyl, naphthyl), a cyano group, a carboxyl group, an alkoxycarbonyl group having 1 to 20 carbon atoms (preferably 1 to 10 carbon atoms) (e.g., methoxycarbonyl), an aryloxycarbonyl group having 6 to 20 carbon atoms (preferably 6 to 10 carbon atoms) (e.g., phenoxycarbonyl), a substituted or unsubstituted carbamoyl group having 0 to 20 carbon atoms (preferably 0 to 10 carbon atoms) (e.g., carbamoyl, N-phenylcarbamoyl, N,N-dimethylcarbamoyl), an alkylcarbonyl group having 1 to 20 carbon atoms (preferably 1 to 10 carbon atoms) (e.g., acetyl), an arylcarbonyl group having 6 to 20 carbon atoms (preferably 6 to 10 carbon atoms) (e.g., benzoyl), a nitro group, a substituted or unsubstituted amino group having 0 to 20 carbon atoms (preferably 0 to 10 carbon atoms) (e.g., amino, dimethylamino, anilino), an acylamino group having 1 to 20 carbon atoms (preferably 1 to 10 carbon atoms) (e.g., acetamido, ethoxycarbonylamino),

a sulfonamido group having 0 to 20 carbon atoms (preferably 0 to 10 carbon atoms) (e.g., methanesulfonamido), an imido group having 2 to 20 carbon atoms (preferably 2 to 10 carbon atoms) (e.g., succinimido, phthalimido), an imino group having 1 to 20 carbon atoms (preferably 1 to 10 carbon atoms) (e.g., benzylideneamino), a hydroxy group, an alkoxy group having 1 to 20 carbon atoms (preferably 1 to 10 carbon atoms) (e.g., methoxy), an aryloxy group having 6 to 20 carbon atoms (preferably 6 to 10 carbon atoms) (e.g., phenoxy), an acyloxy group having 1 to 20 carbon atoms (preferably 1 to 10 carbon atoms) (e.g., acetoxy), an alkylsulfonyloxy group having 1 to 20 carbon atoms (preferably 1 to 10 carbon atoms) (e.g., methanesulfonyloxy), an arylsulfonyloxy group having 6 to 20 carbon atoms (preferably 6 to 10 carbon atoms) (e.g., benzenesulfonyloxy), a sulfo group, a substituted or unsubstituted sulfamoyl group having 0 to 20 carbon atoms (preferably 0 to 10 carbon atoms) (e.g., sulfamoyl, N-phenylsulfamoyl), an alkylthio group having 1 to 20 carbon atoms (preferably 1 to 10 carbon atoms) (e.g., methylthio), an arylthio group having 6 to 20 carbon atoms (preferably 6 to 10 carbon atoms) (e,g., phenylthio), an alkylsulfonyl group having 1 to 20 carbon atoms (preferably 1 to 10 carbon atoms) (e.g., methansulfonyl), an arylsulfonyl group having 6 to 20 carbon atoms (preferably 6 to 10 carbon atoms) (e.g., benzenesulfonyl) and a four- to seven-membered (preferably five- to six-membered) heterocyclic group (e.g., pyridyl, morpholino).

R₁₂ represents a hydrogen atom, a halogen atom, a substituted or unsubstituted alkyl group or a substituted or unsubstituted aryl group. R₁₂ is preferably a hydrogen atom, a chlorine atom, a substituted or unsubstituted alkyl group having 1 to 18 carbon atoms, a substituted or unsubstituted cycloalkyl group having 5 to 18 carbon atoms, or a substituted or unsubstituted aryl group having 6 to 24 carbon atoms; and particularly preferably a hydrogen atom, a chlorine atom, a substituted or unsubstituted alkyl group having 1 to 18 carbon atoms, or a substituted or unsubstituted aryl group having 6 to 24 carbon atoms.

R₁₃ represents a hydrogen atom, a halogen atom, a substituted or unsubstituted alkyl group, a substituted or unsubstituted alkoxy group or -COOR₁₄ group (herein, R₁₄ represents a hydrogen atom, a substituted or unsubstituted alkyl group, or a substituted or unsubstituted aryl group). R₁₃ is preferably a hydrogen atom, a chlorine atom, a substituted or unsubstituted alkyl group having 1 to 18 carbon atoms, a substituted or unsubstituted alkoxy group having 1 to 18 carbon atoms, or -COOR₁₄ group (herein, R₁₄ represents a hydrogen atom, a substituted or unsubstituted alkyl group having 1 to 18 carbon atoms, or a substituted or unsubstituted aryl group having 6 to 24 carbon atoms).

R₁₁ and R₁₂ may be substituted at an arbitrary position of the benzene ring. The substitution at 2- or 4- position to the hydroxyl group is preferable.

### (Formula (IIb))

T represents a hydrogen atom or a substituted or unsubstituted alkyl group. T is preferably a hydrogen atom or a substituted or unsubstituted alkyl group having 1 to 18 carbon atoms.
T₁ represents a hydrogen atom, a halogen atom, a substituted or unsubstituted alkyl group, a substituted or unsubstituted aryl group or a substituted or unsubstituted alkoxy group. T₁ is preferably a hydrogen atom, a chlorine atom, a substituted or unsubstituted alkyl group having 1 to 18 carbon atoms, an aryl group having 6 to 24 carbon atoms, or an alkoxy group having I to 18 carbon atoms.

-L- represents a divalent linking group or a single bond, m represents 0 or 1.
The case where m is 0 (zero) means that T₂ directly bonds with the benzene ring without involving L, that is, -L- represents a single bond.
The divalent linking group -L- is explained. -L- is a divalent substituent represented by the following formula (a).

Formula (a) -(L₁)ₘ₁-(L₂)ₘ₂-(L₃)ₘ₃-(L₄)ₘ₄-(L₅)ₘ₅-

In formula (a), m1 to m5 each represent an integer of 0 to 2.
L₁ to L₅ each independently represent -CO-, -O-, -SO₂-, -SO-, -NR_{L}-, a substituted or unsubstituted divalent alkyl group, a substituted or unsubstituted divalent alkenyl group, or a substituted or unsubstituted divalent aryl group. R_{L} represents a hydrogen atom, a substituted or unsubstituted alkyl group, or a substituted or unsubstituted aryl group.

Specific examples of R_{L} include a hydrogen atom, a methyl group, an ethyl group, a propyl group, a hexyl group, an octyl group, a phenyl group, and a naphthyl group. The group may be substituted with one or more monovalent substituents at any position of the alkyl or aryl group. The monovalent substituent is, for example, the monovalent substituent described above. R_{L} is preferably a substituted or unsubstituted alkyl group having 3 to 20 carbon atoms or a substituted or unsubstituted aryl group having 6 to 14 carbon atoms; and more preferably a substituted or unsubstituted alkyl group having 6 to 12 carbon atoms or a substituted or unsubstituted aryl group having 6 to 10 carbon atoms.

Preferred examples of the divalent substituent -L- include -O-CO-C₂H₄-CO-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄- and -NH-SO₂-C₃H₆-.

In formula (IIb), n represents an integer of 1 to 4.
When n is 1, T₂ represents a halogen atom, a substituted or unsubstituted alkyl group or a substituted or unsubstituted aryl group. When n is 1, T₂ is preferably a chlorine atom, a substituted or unsubstituted alkyl group having 1 to 18 carbon atoms, or a substituted or unsubstituted aryl group having 6 to 24 carbon atoms.

When n is 2, T₂ represents a divalent substituent. When n is 2, specific examples of T₂ include the same examples as the above-described divalent substituent - L-. When n is 2, T₂ is preferably -CH₂-, -O-CO-C₂H₄-CO-O-, or -NH-CO-C₃H₆-CO-NH-.

When n is 3, T₂ represents a trivalent substituent. The trivalent substituent is explained. The trivalent substituent is a trivalent alkyl group, a trivalent aryl group or a substituent represented by the following formula. 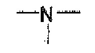 The trivalent substituent is preferably a trivalent alkyl group having 1 to 8 carbon atoms, a trivalent aryl group having 6 to 14 carbon atoms or a substituent represented by the following formula.

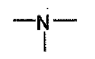

When n is 4, T₂ represents a tetravalent substituent. The tetravalent substituent is explained. The tetravalent substituent is a tetravalent alkyl group or a tetravalent aryl group. Among the tetravalent substituents, a tetravalent alkyl group having 1 to 8 carbon atoms and a tetravalent aryl group having 6 to 14 carbon atoms are preferable.

In formula (IIb), it is especially preferable that n is 1 or 2.
Specifically, the components of formula (IIb) are preferably combined as follows:
when n is 1, T is a hydrogen atom, or a substituted or unsubstituted alkyl group having 1 to 18 carbon atoms; T₁ is a hydrogen atom, a chlorine atom, a substituted or unsubstituted alkyl group having 1 to 18 carbon atoms, a substituted or unsubstituted aryl group having 6 to 24 carbon atoms, or an alkoxy group having 1 to 18 carbon atoms; L is -O-CO-C₃H₆-, -CH₂-, -C₃H₆-, -C₅H₁₀-, -C₈H₁₆-, -NH-CO-C₄H₈- or a single bond; and T₂ is a chlorine atom, a substituted or unsubstituted alkyl group having 1 to 18 carbon atoms, or a substituted or unsubstituted aryl group having 6 to 24 carbon atoms;
when n is 2, a preferable combination is that T is a hydrogen atom, or a substituted or unsubstituted alkyl group having 1 to 18 carbon atoms; T₁ is a hydrogen atom, a chlorine atom, a substituted or unsubstituted alkyl group having 1 to 18 carbon atoms, an aryl group having 6 to 24 carbon atoms, or an alkoxy group having 1 to 18 carbon atoms; L is -CH₂- or a single bond; and T₂ is -CH₂-, -O-CO-C₂H₄-CO-O- or NH-CO-C₃H₆-CO-NH-; and
when n is 2, a preferable combination is that m is 0 and T is a hydrogen atom or substituted or unsubstituted alkyl group having 1 to 18 carbon atoms; T₁ is a hydrogen atom, chlorine atom, a substituted or unsubstituted alkylgroup having 1 to 18 carbon atoms, an aryl group having 6 to 24 carbon atoms, or an alkoxy group having 1 to 18 carbon atoms; and T₂ is -CH₂-, -O-CO-C₂H₄-CO-O or -NH-CO-C₃H₆-CO-NH-.

Typical examples of the compound represented by formula (IIa) or (IIb) include 2-(2'-hydroxy-5'-methylphenyl)benzotriazole, 2-(2'-hydroxy-5'-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3'-dodecyl-5'-methylphenyl)-5-chlorobenzotriazole, 2-(2'-hydroxy-3',5'-di-t-amylphenyl)benzotriazole, 2-(2'-hydroxy-5'-(1,1,3,3-tetramethylbutyl)phenyl)benzotriazole, 2-(2'-hydroxy-4'-octyloxyphenyl)benzotriazole, 2-(2'-hydroxy-3'-(3,4,5,6-tetrahydrophthalimidylmethyl)-5'-methylbenzyl)phenyl)benzotriazole; 2-(3'-sec-butyl-5'-t-butyl-2'-hydroxyphenyl)benzotriazole, 2-(3',5'-bis-(α,α-dimethylbenzyl)-2'-hydroxyphenyl)benzotriazole, 2-(3'-t-butyl-2'-hydroxy-5'-(2-octyloxycarbonylethyl)phenyl)-5-chloro-benzotriazole, 2-(3'-t-butyl-5'-[2-(2-ethylhexyloxy)-carbonylethyl]-2'-hydroxypbenyl)-5-chloro-benzotriazole, 2-(3'-t-butyl-2'-hydroxy-5'-(2-methoxycarbonylethyl)phenyl)-5-chloro-benzotriazole, 2-(3'-t-butyl-2'-hydroxy-5'-(2-methoxycarbonylethyl)phenyl)benzotriazole, 2-(3'-t-butyl-2-hydroxy-5'-(2-octyloxycarbonylethyl)phenyl)benzotriazole, 2-(3'-t-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-t-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol], ester exchange products of 2-[3'-t-butyl-5'-(2-methoxycarbonylethyl)-2'-hydroxyphenyl]-2H-benzotriazole and polyethylene glycol 300; and the compound represented by the following formula: 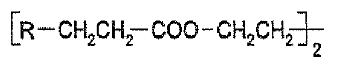 (wherein, R represents 3'-tert-butyl-4'-hydroxy-5'-2H-benzotriazol-2-ylphenyl, 2-[2'-hydroxy-3'-(α,α-dimethylbenzyl)-5'(1,1,3,3-tetramethylbutyl)-phenyl]benzotriazole; 2-[2'-hydroxy-3'-(1,1,3,3-tetramethylbutyl)-5'-(α,α-dimethylbenzyl)-phenyl]benzotriazole and the like).

The triazine-based compound is preferably a compound having an effective absorption wavelength of approximately 270 to 380 nm that is represented by the following formula (III).

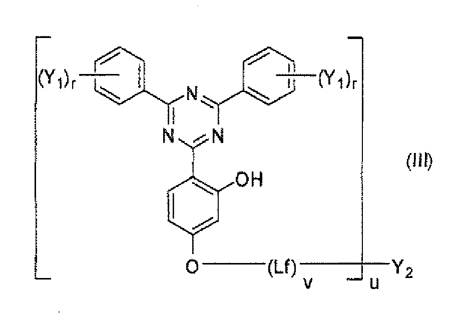

### +[In formula (III),

the substituent Y₁s each independently represent a hydrogen atom, a hydroxyl group, a substituted or unsubstituted alkyl group, a substituted or unsubstituted aryl group, or a substituted or unsubstituted alkoxy group;
Lf represents a divalent linking group or a single bond;
u represents 1 or 2;
v represents 0 or 1;
r represents an integer of 1 to 3; and
when u is 1, Y₂ represents a hydrogen atom, a substituted or unsubstituted alkyl group, or a substituted or unsubstituted aryl group; and when u is 2, Y₂ represents a divalent substituent.

Y₁s each independently represent a hydrogen atom, a hydroxyl group, a substituted or unsubstituted alkyl group, a substituted or unsubstituted aryl group, or a substituted or unsubstituted alkoxy group. Y₁ is preferably a hydrogen atom, a hydroxyl group, a substituted or unsubstituted alkyl group having 1 to 18 carbon atoms, a substituted or unsubstituted aryl group having 6 to 24 carbon atoms, or a substituted or unsubstituted alkoxy group having 1 to 18 carbon atoms.

Lf represents a divalent linking group or a single bond. u represents 1 or 2. r represents an integer of 1 to 3. v represents 0 or 1. When v is 0, Lf represents a single bond.
The divalent linking group -Lf- is explained. The divalent linking group -Lf-is a divalent substituent represented by the following formula (b).

Formula (b) -(Lf₁)_{mf1}-(Lf₂)_{mf2}-(Lf₃)_{mf3}-(Lf₄)_{mf4}-(Lf₅)_{mf5}-

In formula (b), mf1 to mf5 each represents an integer of 0 to 2.
Lf₁, Lf₂, Lf₃, Lf₄ and Lf₅ each independently represent -CO-, -O-, -SO₂-, -SO-, -NRf_{L}-, a substituted or unsubstituted divalent alkyl group, a substituted or unsubstituted divalent alkenyl group, or a substituted or unsubstituted divalent aryl group. Rf_{L} represents a hydrogen atom, a substituted or unsubstituted alkyl group, or a substituted or unsubstituted aryl group.

Specific examples of Rf_{L} include a hydrogen atom, a methyl group, an ethyl group, a propyl group, a hexyl group, an octyl group, a phenyl group, and a naphthyl group. The group may be substituted with one or more monovalent substituents at any position of the alkyl or aryl groups. The monovalent substituent is, for example, the monovalent substituent described above. Rf_{L} is preferably a substituted or unsubstituted alkyl group having 3 to 20 carbon atoms or a substituted or unsubstituted aryl group having 6 to 14 carbon atoms; and more preferably a substituted or unsubstituted alkyl group having 6 to 12 carbon atoms or a substituted or unsubstituted aryl group having 6 to 10 carbon atoms.

Preferred examples of the divalent substituent -Lf- include -O-CO-C₂H₄-CO-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄- and -NH-SO₂-C₃H₆-.

When u is 1, Y₂ represents a hydrogen atom, a substituted or unsubstituted alkyl group, or a substituted or unsubstituted aryl group. When u is 1, Y₂ is preferably a hydrogen atom, a substituted or unsubstituted alkyl group having 1 to 18 carbon atoms, or a substituted or unsubstituted aryl group having 6 to 24 carbon atoms.

When u is 2, Y² represents a divalent substituent. Examples of the divalent substituent include the same examples as the aforementioned divalent substituent -L-. Y₂ is preferably a substituted or unsubstituted divalent alkyl group, a substituted or unsubstituted divalent alkenyl group, a substituted or unsubstituted divalent aryl group, -CH₂CH(OH)CH₂-O-Y₁₁-OCH₂CH(OH)CH₂, -CO-Y₁₂-CO-, -CO-NH-Y₁₃-NH-CO-, or -(CH₂)ₜ-CO₂-Y₁₄-OCO-(CH₂)ₜ.
Herein, t is 1, 2 or 3;
Y₁₁ represents a substituted or unsubstituted alkylene group, phenylene group, or -phenylene-M-phenylene- (wherein, M represents -O-, -S-, -SO₂-, -CH₂- or -C(CH₃)₂-);
Y₁₂ represents a substituted or unsubstituted divalent alkyl group, a substituted or unsubstituted divalent alkenyl group, or a substituted or unsubstituted divalent aryl group;
Y₁₃ represents a substituted or unsubstituted divalent alkyl group, or a substituted or unsubstituted divalent aryl group; and
Y₁₄ represents a substituted or unsubstituted divalent alkyl group, or a substituted or unsubstituted divalent aryl group.

Namely, when u is 2, Y₂ is preferably a substituted or unsubstituted divalent alkyl group having 1 to 18 carbon atoms, a substituted or unsubstituted divalent aryl group having 6 to 24 carbon atoms, -CH₂CH(OH)CH₂-O-CH₂-OCH₂CH(OH)CH₂-, -CH₂CH(OH)CH₂-O-C(CH₃)2-OC₈H₁₆-, or -(CH₂)₂-CO₂-C₂F_{L}-OCO-(CH₂)₂-.

Typical examples of the compound represented by formula (III) include 2-(4-butoxy-2-hydroxyphenyl)-4,6-di(4-butoxyphenyl)-1,3,5-triazine, 2-(4-butoxy-2-hydroxyphenyl)-4,6-di(2,4-dibutoxyphenyl)-1,3,5-triazine, 2,4-di(4-butoxy-2-hydroxyphenyl)-6-(4-butoxyphenyl)-1,3,5-triazine, 2,4-di(4-butoxy-2-hydroxyphenyl)-6-(2,4-dibutoxyphenyl)-1,3,5-triazine, 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris(2-hydroxy-4-(3-butoxy-2-hydroxypropoxy)phenyl)-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxy-propyloxy]phenyl}-4,6-bis(2,4-dimethylphenyl)-1,3,5-triazine and 2-(2-hydroxy-4-(2-ethylhexyl)oxy)phenyl-4,6-di(4-phenyl)phenyl-1,3,5-triazine.

The benzophenone-based compound is preferably a compound having an effective absorption wavelength of approximately 270 to 380 nm that is represented by the following formula (IVa) or (IVb).

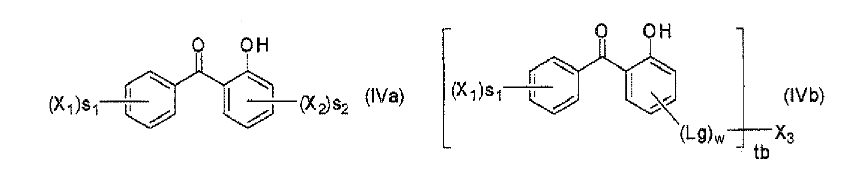

[In formula (IVa), X₁ and X₂ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group; and s1 and s2 each independently represent an integer of 1 to 3.]

[In formula (IVb), X₁ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; s1 represents an integer of 1 to 3;
Lg represents a divalent substituent or a single bond; w represents 0 or 1;
tb represents 1 or 2; and when tb is 1, X₃ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group; and when tb is 2, X₃ represents a divalent substituent.]

### (Formula (IVa))

X₁ and X₂ each independently represent a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group. X₁ and X₂ each are preferably a hydrogen atom, a chlorine atom, a hydroxyl group, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, an alkyloxycarbonyl group having 2 to 18 carbon atoms, an aryloxycarbonyl group having 7 to 24 carbon atoms, a sulfonic acid group or a substituted or unsubstituted amino group having 1 to 16 carbon atoms; and particularly preferably a hydrogen atom, a hydroxyl group, a substituted or unsubstituted alkoxy group having 1 to 18 carbon atoms, a sulfonic acid group or a substituted or unsubstituted amino group having 1 to 16 carbon atoms.

### (Formula (IVb))

tb is 1 or 2, w is 0 or 1, and s1 is an integer of 1 to 3.
The substituent X₁ represents a hydrogen atom, a halogen atom, a hydroxyl group, a substituted or unsubstituted alkyl group, a substituted or unsubstituted phenyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group, or a substituted or unsubstituted amino group.

X₁ is preferably a hydrogen atom, a chlorine atom, a hydroxyl group, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, an alkyloxycarbonyl group having 2 to 18 carbon atoms, an aryloxycarbonyl group having 7 to 24 carbon atoms, a sulfonic acid group or a substituted or unsubstituted amino group having 1 to 16 carbon atoms; and particularly preferably a hydrogen atom, a hydroxyl group, a substituted or unsubstituted alkoxy group having 1 to 18 carbon atoms, a sulfonic acid group or a substituted or unsubstituted amino group having 1 to 16 carbon atoms.

-Lg- represents a divalent linking group or a single bond. w represents an integer of 0 or 1. The case where w is 0 (zero) means that X₃ directly bonds with the benzene ring without involving Lg, namely, -Lg- represents a single bond.
The divalent linking group -Lg- is explained. The divalent linking group Lg is a divalent substituent represented by the following formula (c).

Formula (c) -(Lg₁)_{mg1}-(Lg₂)_{mg2}-(Lg₃)_{mg3}-(Lg₄)_{mg4}-(Lg₅)_{mg5}-

In formula (c), mg1 to mg5 each represent an integer of 0 to 2.
Lg₁ to Lg₅ each independently represent -CO-, -O-, -SO₂-, -SO-, -NRg_{L}-, a substituted or unsubstituted divalent alkyl group, a substituted or unsubstituted divalent alkenyl group, or a substituted or unsubstituted divalent aryl group. Rg_{L} represents a hydrogen atom, a substituted or unsubstituted alkyl group or a substituted or unsubstituted aryl group.

Specific examples of Rg_{L} include a hydrogen atom, a methyl group, an ethyl group, a propyl group, a hexyl group, an octyl group, a phenyl group and a naphthyl group. The group may be substituted with one or more monovalent substituents at any position of the alkyl or aryl groups. The monovalent substituent is, for example, the monovalent substituent described above. Rg_{L} is preferably a substituted or unsubstituted alkyl group having 3 to 20 carbon atoms, or a substituted or unsubstituted aryl group having 6 to 14 carbon atoms; and more preferably a substituted or unsubstituted alkyl group having 6 to 12 carbon atoms, or a substituted or unsubstituted aryl group having 6 to 10 carbon atoms.

Namely, preferred examples of the divalent substituent -Lg- include -O-, -O-CO-C₂H₄-CO-O-, -O-C₄H₈-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄-, and -NH-SO₂-C₃H₆-.

When tb is 1, X₃ represents a hydrogen atom, a halogen atom, a hydroxyl group, a substituted or unsubstituted phenyl group, a substituted or unsubstituted alkyl group, a substituted or unsubstituted alkoxy group, a substituted or unsubstituted alkylsulfonyl group, a substituted or unsubstituted arylsulfonyl group, a sulfonic acid group, a substituted or unsubstituted alkyloxycarbonyl group, a substituted or unsubstituted aryloxycarbonyl group or a substituted or unsubstituted amino group.
When tb is 1, X₃ is preferably a hydrogen atom, a hydroxyl group, a chlorine atom, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, an alkyloxycarbonyl group having 2 to 18 carbon atoms, an aryloxycarbonyl group having 7 to 24 carbon atoms, a sulfonic acid group, or a substituted or unsubstituted amino group having 1 to 16 carbon atoms.
X₃ is particularly preferably a hydrogen atom, a hydroxyl group, a substituted or unsubstituted alkoxy group having 1 to 18 carbon atoms, a sulfonic acid group, or a substituted or unsubstituted amino group having 1 to 16 carbon atoms.

When tb is 2, X₃ represents a divalent substituent.
When tb is 2, specific examples of X₃ include the same examples as the above-described divalent substituent -L-. When tb is 2, X₃ is preferably -CH₂-, -C₄H₈-, -O-C₄H₈-O-, -O-CO-C₂H₄-CO-O-, or -NH-CO-C₃H₆-CO-NH-.

In formula (IVb), tb is particularly preferably 1.
Namely, the component of formula (IVb) is preferably combined as follows.
Specifically, when tb is 1, a preferable combination is that X₁ is a hydrogen atom, a hydroxyl group, a substituted or unsubstituted alkoxy group having 1 to 18 carbon atoms, a sulfonic acid group, or a substituted or unsubstituted amino group having 1 to 16 carbon atoms;
Lg is -O-, -O-CO-C₂H₄-CO-O-, -O-C₄H₈-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄-, -NH-SO₂-C₃H₆-, or a single bond; and
X₃ is a hydrogen atom, a hydroxyl group, a chlorine atom, a substituted or unsubstituted alkyl group having 1 to 18 carbon atoms, a substituted or unsubstituted aryl group having 6 to 24 carbon atoms, a substituted or unsubstituted alkoxy group having 1 to 18 carbon atoms, an alkyloxycarbonyl group having 2 to 18 carbon atoms, an aryloxycarbonyl group having 7 to 24 carbon atoms, a sulfonic acid group, or a substituted or unsubstituted amino group having 1 to 16 carbon atoms.

When tb is 2, a preferable combination is that
X₁ is a hydrogen atom, a hydroxyl group, a substituted or unsubstituted alkoxy group having 1 to 18 carbon atoms, a sulfonic acid group, or a substituted or unsubstituted amino group having 1 to 16 carbon atoms;
Lg is -O-, -O-CO-C₂H₄-CO-O-, -O-C₄H₈-O-, -O-CO-C₃H₆-, -NH-CO-C₃H₆-CO-NH-, -NH-CO-C₄H₈-, -CH₂-, -C₂H₄-, -C₃H₆-, -C₄H₈-, -C₅H₁₀-, -C₈H₁₆-, -C₄H₈-CO-O-, -C₆H₄-C₆H₄-, -NN-SO₂-C₃H₆-, or a single bond; and
X₃ is -CH₂-, -C₄H₈-, -O-C₄H₈-O-, -O-CO-C₂H₄-CO-O-, or -NH-CO-C₃H₆-CO-NH-.

Typical examples of the benzophenone-based compound include 2,4-dihydroxybenzophenone,2-hydroxy-4-methoxybenzophenone, 2-hydroxy-4-octyloxybenzophenone, 2-hydroxy-4-decyloxybenzophenone, 2-hydroxy-4-dodecyloxybenzophenone, 2-hydroxy-4-benzyloxybenzophenone, 2-hydroxy-4-(2-hydroxy-3-methacryloxypropoxy)benzophenone, 2-hydroxy-4-methoxy-5-sulfobenzophenone, 2-hydroxy-4-methoxy-5-sulfobenzophenone trihydrate, 2-hydroxy-4-methoxy-2'-carboxybenzophenone, 2-hydroxy-4-octadecyloxybenzophenone, 2-hydroxy-4-diethylamino-2'-hexyloxycarbonylbenzophenone, 2,2'-dihydroxy-4-methoxybenzophenone, 2,2',4,4'-tetrahydroxybenzophenone, 2,2'-dihydroxy-4,4'-dimethoxybenzophenone, and 1,4-bis(4-benzyloxy-3-hydroxyphenoxy)butane.

The salicylic acid-based compound above is preferably a compound having an effective absorption wavelength of approximately 290 to 330 nm, and typical examples thereof include phenyl salicylate, 4-t-butylphenyl salicylate, 4-octylphenyl salicylate, dibenzoylresorcinol, bis(4-t-butylbenzoyl)resorcinol, benzoylresorcinol, 2,4-di-t-butylphenyl 3,5-di-t-butyl-4-hydroxysalicylate, and hexadecyl 3,5-di-t-butyl-4-hydroxysalicylate.

The acrylate-based compound above is preferably a compound having an effective absorption wavelength of approximately 270 to 350 nm, and typical examples thereof include 2-ethylhexyl 2-cyano-3,3-diphenylacrylate, ethyl 2-cyano-3,3-diphenylacrylate, isooctyl 2-cyano-3,3-diphenylacrylate, hexadecyl 2-cyano-3-(4-methylphenyl)acrylate, methyl 2-cyano-3-methyl-3-(4-methoxyphenyl)cinnamate, butyl 2-cyano-3-methyl-3-(4-methoxyphenyl)cinnamate, methyl 2-carbomethoxy-3-(4-methoxyphenyl)cinnamate 2-cyano-3-(4-methylphenyl)acrylate salt, 1,3-bis(2'-cyano-3,3'-diphenylacryloyl)oxy)-2,2-bis(((2'-cyano-3,3'-diphenylacryloyl)oxy)methyl)propane, and N-(2-carbomethoxy-2-cyanovinyl)-2-methylindoline.

The oxalic diamide-based compound above is preferably a compound having an effective absorption wavelength of approximately 250 to 350 nm, and typical examples thereof include 4,4'-dioctyloxyoxanilide, 2,2'-dioctyloxy-5,5'-di-t-butyloxanilide, 2,2'-didodecyloxy-5,5'-di-t-butyloxanilide, 2-ethoxy-2'-ethyloxanilide, N,N'-bis(3-dimethylaminopropyl)oxamide, 2-ethoxy-5-t-butyl-2'-ethyloxanilide, and 2-ethoxy-2'-ethyl-5,4'-di-t-butyloxanilide.

The ultraviolet absorbent B is particularly preferably a compound selected from the following compound group B.
The compound group B includes the following compounds (II-1) to (IV-6).

[1] Compound represented by formula (IIa) described above
(II-1) 2-(2'-hydroxy-3',5'-di-t-amylphenyl)benzotriazole
(II-2) 2-(3-t-butyl-5-methyl-2-hydroxyphenyl)-5-chlorobenzotriazole
(II-3) 2-(2-hydroxy-5-t-octylphenyl)benzotriazole
(II-4) 2-ethylhexyl-3-[3-t-butyl-4-hydroxy-5-(5-chloro-2H-benzotriazole-2-yl)phenyl] propionate
(II-5) 2-(2H-benzotriazole-2-yl)-6-dodecyl-4-methyl-phenol
(II-6) 2-(2H-benzotriazole-2-yl)-3-t-butylphenol
(II-7) 2-(2H-benzotriazole-2-yl)-6-(1-methyl-1-phenylethyl)-4-(1,1-3,3-tetramethylbutyl)phenol
(II-8) 2-(2H-benzotriazole-2-yl)-3-methylphenol
(II-9) 2-(2H-benzotriazole-2-yl)-6-dodecyl-4-methyl-phenol

[2] Compound represented by formula (IIb) described above
(II-10) 2,2'-methylene-bis[6-(2H-benzotriazole-2-yl)-4-(1,1,3,3-tetramethylbutyl)phenol]

[3] Compound represented by formula (III) described above
(III-1) 2,4-bis(2-hydroxy-4-butoxyphenyl)-6-(2,4-dibutoxyphenyl)-1,3,5-triazine
(III-2) 2-[4-[(2-hydroxy-3-(2'-ethyl)hexyl)oxy]-2-hydroxyphenyl]-4,6-bis(2,4-dimethylphenyl)-1,3,5 -triazine
(III-3) 2-[4-[(2-hydroxy-3-(2'-ethyl)hexyl)oxy]-2-hydroxyphenyl-4,6-bis(2,4-dimethylphenyl)-1,3,5-triazine
(III-4) 2-(4,6-diphenyl-1,3,5-triazin-2-yl)-5-hexyloxyphenol
(III-5) bisethylhexyloxyphenol methoxyphenyltriazine

[4] Compound represented by formula (IV) described above
(IV-1) hexyl 2-(4-diethylamino-2-hydroxybenzoyl)benzoate
(IV-2) 2,2'-hydroxy-4,4'-dimethoxybenzophenone
(IV-3) 2-hydroxy-4-methoxybenzophenone
(IV-4) 1,4-bis(4-benzoyl-3-hydroxyphenoxy)butane
(IV-5) 2-hydroxy-4-octoxybenzophenone
(IV-6) 2-hydroxy-4-methoxybenzophenone-5-sulfonic acid
(IV-7) 2,2',4,4'tetrahydroxybezophenone

The compound (II-1) has the following structure, and is commercially available as trade name Tinuvin 328 (manufactured by Ciba Specialty Chemicals).
The compound (II-2) has the following structure, and is commercially available as trade name Tinuvin 326 (manufactured by Ciba Specialty Chemicals).
The compound (II-3) has the following structure, and is commercially available as trade name Tinuvin 329 (manufactured by Ciba Specialty Chemicals).
The compound (II-4) has the following structure, and is commercially available as trade name Tinuvin 109 (manufactured by Ciba Specialty Chemicals).
The compound (II-5) has the following structure, and is commercially available as trade name Tinuvin 171 (manufactured by Ciba Specialty Chemicals).
The compound (II-6) has the following structure, and is commercially available as trade name Tinuvin PS (manufactured by Ciba Specialty Chemicals).
The compound (II-7) has the following structure, and is commercially available as trade name Tinuvin 928 (manufactured by Ciba Specialty Chemicals).
The compound (II-8) has the following structure, and is commercially available as trade name Tinuvin P (manufactured by Ciba Specialty Chemicals).
The compound (II-9) has the following structure, and is commercially available as trade name Tinuvin 234 (manufactured by Ciba Specialty Chemicals).
The compound (II-10) has the following structure, and is commercially available as trade name Tinuvin 360 (manufactured by Ciba Specialty Chemicals).

The compound (III-1) has the following structure, and is commercially available as trade name Tinuvin 460 (manufactured by Ciba Specialty Chemicals).
The compound (III-2) has the following structure, and is commercially available as trade name Cyasorb UV-116 (manufactured by CYTEC Company Ltd.).
The compound (III-3) has the following structure, and is commercially available as trade name Tinuvin 405 (manufactured by Ciba Specialty Chemicals).
The compound (III-4) has the following structure, and is commercially available as trade name Tinuvin 1577 (manufactured by Ciba Specialty Chemicals).
The compound (III-5) has the following structure, and is commercially available as trade name Tinosorb S (manufactured by Ciba Specialty Chemicals).

The compound (IV-1) has the following structure, and is commercially available as trade name Uvinul A plus (manufactured by BASF Japan Ltd.).
The compound (IV-2) has the following structure, and is commercially available as trade name Uvinul 3049 (manufactured by BASF Japan Ltd.).
The compound (IV-3) has the following structure, and is commercially available as trade name Visorb 110 (manufactured by KYODO CHEMICAL CO., LTD.).
The compound (IV-4) has the following structure, and is commercially available as trade name Seesorb 151 (manufactured by SHIPRO KASEI KAISHA LTD.).
The compound (IV-5) has the following structure, and is commercially available as trade name Chimassorb 81 (manufactured by Ciba Specialty Chemicals).
The compound (IV-6) has the following structure, and is commercially available as trade name Uvinul MS40 (manufactured by BASF Japan Ltd.).
The compound (IV-7) has the following structure, and is commercially available as trade name Uvinul 3050 (manufactured by BASF Japan Ltd.).

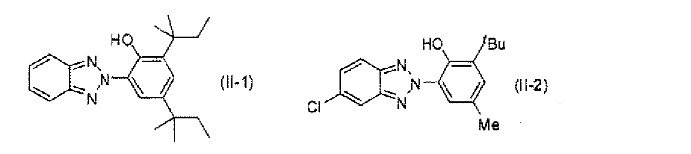

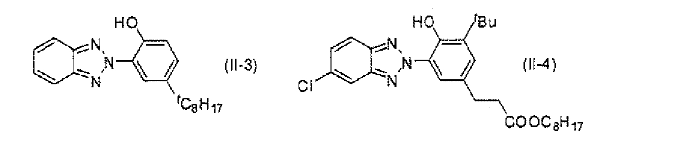

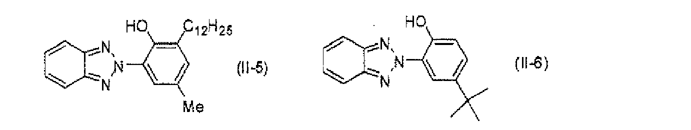

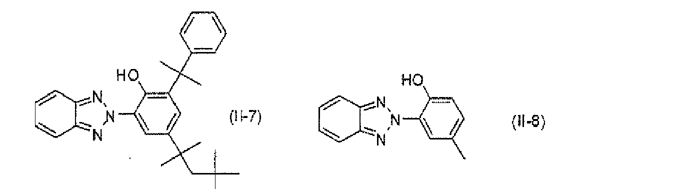

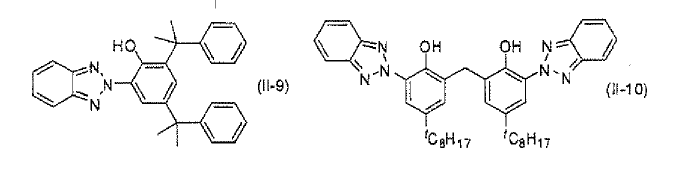

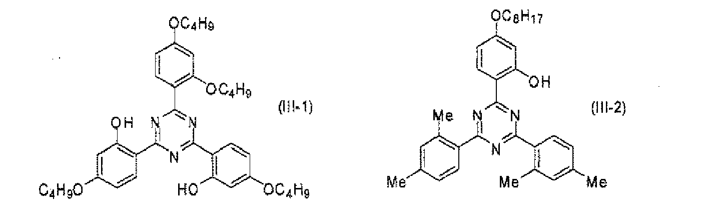

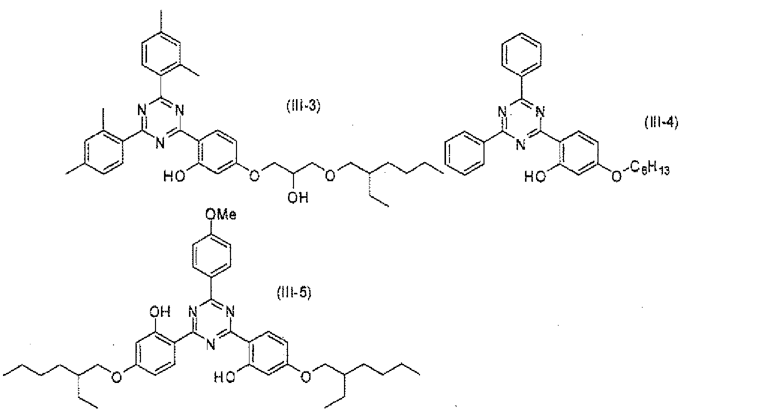

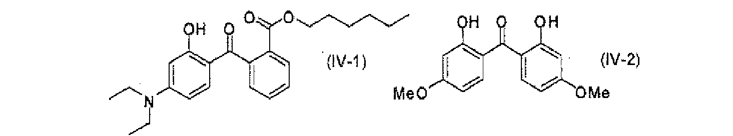

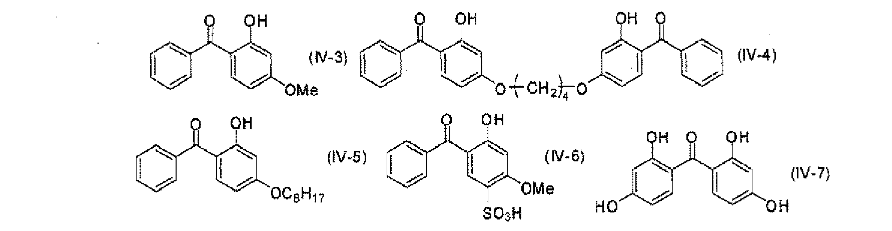

The ultraviolet absorbents A and B used in the present invention may be individually present, or may be connected to each other previously or by binding together with each other in a composition. Further, a polymerizable group may be bound with each of the ultraviolet absorbents A and B to form a polymerizable monomer, followed by polymerization of these monomers to form a copolymer including the ultraviolet absorbents A and B as a unit structure. These monomers may be used together with other monomers free of these ultraviolet absorbents (A) and (B) to form a copolymer. A preferable embodiment is that a composition is constructed by monomers, and a copolymer is formed by polymerization of the monomers at an intended stage.

### [Compound C]

Hereinafter, the compound C used in the present invention is explained. The compound C is represented by any one of the following formulae (TS-I) to (TS-V).

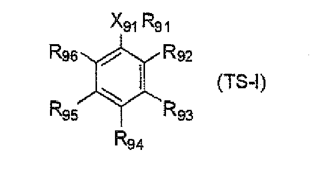

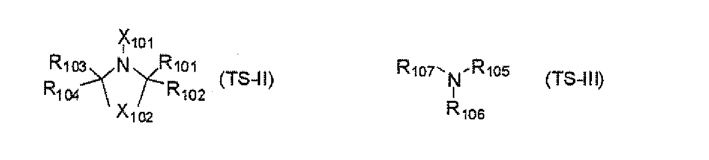

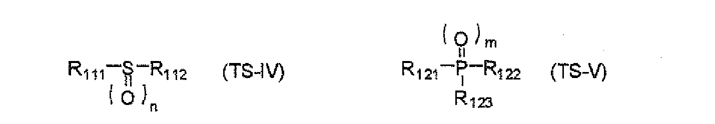

In formula (TS-I), R₉₁ represents a hydrogen atom, an alkyl group (including a cyclic alkyl group such as a cycloalkyl group, a bicycloalkyl group and a tricycloalkyl group), an alkenyl group (including a cyclic alkenyl group such as a cycloalkenyl group, a bicycloalkenyl group and a tricycloalkenyl group), an aryl group, an heterocyclic group, an acyl group, an alkoxycarbonyl group, an aryloxycarbonyl group, an alkyl sulfonyl group (including a cyclic alkyl sulfonyl group such as a cycloalklyl sulfonyl group, a bicycloalklyl sulfonyl group and a tricycloalklyl sulfonyl group), an aryl sulfonyl group, a phosphino group, a phosphinotolyl group, a phosphinyl group, or - Si(R₉₇)(R₉₈)(R₉₉). Herein, R₉₇, R₉₈, and R₉₉, which may be the same as or different from each other, each independently represent an alkyl group, an alkenyl group, an aryl group, an alkoxy group, an alkenyloxy group, or an aryloxy group. -X₉₁- represents-O-, -S-, or -N(-R₁₀₀)-, in which R₁₀₀ has the same meaning as R₉₁. R₉₂, R₉₃, R₉₄, R₉₅ and R₉₆, which may be the same as or different from each other, each independently represent a hydrogen atom, or a substituent. R₉₁ and R₉₂, R₁₀₀ and R₉₆, and R₉₁ and R₁₀₀ may bind together with each other to form a 5- to 7-membered ring. Further, R₉₂ and R₉₃, and R₉₃ and R₉₄, respectively, may bind together with each other to form a 5- to 7-membered ring, a spiro ring, or a bicyclo ring. However, all of R₉₁, R₉₂, R₉₃, R₉₄, R₉₅, R₉₆ and R₁₀₀ cannot simultaneously represent a hydrogen atom, respectively, and the total number of carbon atoms is 10 or more.

When the group in the present specification contains an aliphatic moiety, the aliphatic moiety may be straight chain-like, branched chain-like, or cyclic, and saturated or unsaturated. Examples of the aliphatic moiety include alkyl, alkenyl, cycloalkyl, and cycloalkenyl, each of which may be unsubstituted or substituted. Further, in the case where the group contains an aryl moiety, the aryl moiety may be a single ring or a condensed ring, each of which may be unsubstituted or substituted. Further, when the group contains a heterocyclic moiety, the heterocyclic moiety contains a hetero atom (for example, a nitrogen atom, a sulfur atom, an oxygen atom) in the ring, and may be a saturated ring, or an unsaturated ring, and may be a single ring or a condensed ring, each of which may be unsubstituted or substituted. The substituent may bind with a hetero atom, or a carbon atom in the ring.

The substituent used in the present invention is not particularly limited, as long as it is a replaceable group. Examples thereof include an aliphatic group, an aryl group, a heterocyclic group, an acyl group, an acyloxy group, an acyl amino group, an aliphatic oxy group, an aryloxy group, a heterocyclic oxy group, an aliphatic oxycarbonyl group, an aryloxycarbonyl group, a heterocyclic oxycarbonyl group, a carbamoyl group, an aliphatic sulfonyl group, an arylsulfonyl group, a heterocyclic sulfonyl group, an aliphatic sulfonyloxy group, an arylsulfonyloxy group, a heterocyclic sulfonyloxy group, a sulfamoyl group, an aliphatic sulfonamide group, an arylsulfonamido group, a heterocyclic sulfonamido group, an aliphatic amino group, an arylamino group, a heterocyclic amino group, an aliphatic oxycarbonylamino group, an aryloxycarbonylamino group, a heterocyclic oxycarbonylamino group, an aliphatic sulfinyl group, an arylsulfinyl group, an aliphatic thio group, an arylthio group, a hydroxy group, a cyano group, a sulfo group, a carboxyl group, an aliphatic oxyamino group, an aryloxyamino group, a carbamoylamino group, a sulfamoylamino group, a halogen atom, a sulfamoyl carbamoyl group, a carbamoyl sulfamoyl group, a phosphinyl group, and a phosphoryl group.

The compound represented by formula (TS-I) is described in detail below.
R₉₁ represents a hydrogen atom, an alkyl group (including a cyclic alkyl group such as a cycloalkyl group, a bicycloalkyl group and a tricycloalkyl group, e.g., a methyl group, an i-propyl group, a s-butyl group, a dodecyl group, a methoxyethoxy group and a benzyl group), an alkenyl group (including such as a cycloalkenyl group, a bicycloalkesyi group, e.g., an allyl group), an aryl group (e.g., a phenyl group, a p-methoxyphenyl group), a heterocyclic group (e.g., a 2-tetrahydfuryl group, a pyranyl group), an acyl group (e.g., an acetyl group, a pivaloyl group, a benzoyl group, an acryloyl group), an alkyl- or alkenyl-oxycarbonyl group (e.g., a methoxycarbonyl group, a hexadecyloxycarbonyl group), an aryloxycarbonyl group (e.g., a phenoxycarbonyl group, a p-methoxyphenoxy carbonyl group), an alkyl sulfonyl group (e.g., a methanesulfonyl group, a butanesulfonyl group), an arylsulfonyl group (e.g., a benzene sulfonyl group, a p-toluenesulfonyl group), a phosphinotolyl group (e.g., a dimethoxyphosphino group, a diphenoxyphosphino group), a phosphinyl group (e.g., a diethylphosphinyl group, a diphenylphosphinyl group), or -Si(R₉₇)(R₉₈)(R₉₉). R₉₇, R₉₈, and R₉₉ may be the same as or different from each other. R₉₇, R₉₈, and R₉₉ each represent an alkyl group (e.g., a methyl group, an ethyl group, a t-butyl group, a benzyl group), an alkenyl group (e.g., an ally group), an aryl group (e.g., a phenyl group), an alkoxy group (e.g., a methoxy group, a butoxy group), an alkenyloxy group (e.g., an allyloxy group) or an aryloxy group (e.g., a phenoxy group).

-X₉₁- represents -O-, -S- or -N(-R₁₀₀)-. Herein, R₁₀₀ has the same meaning as that of R₉₁, and preferable ranges thereof are also the same. R₉₂, R₉₃, R₉₄, R₉₅ and R₉₆, which may be the same as or different from each other, each independently represent a hydrogen atom or a substituent. Examples of the substituent include a hydrogen atom, an alkyl group (including a cyclic alkyl group such as a cycloalkyl group, a bicycloalkyl group and a tricycloalkyl group), an alkenyl group (including a cyclic alkenyl group such as a cycloalkenyl group, a bicycloalkenyl group and a tricycloalkenyl group), an alkynyl group, an aryl group, a heterocyclic group, a cyano group, a hydroxyl group, a nitro group, a carboxyl group, an alkoxy group, an aryloxy group, a silyloxy group, a heterocyclic oxy group, an acyloxy group, a carbamoyloxy group, an alkoxycarbonyloxy group, an aryloxycarbonyloxy, an amino group (including an anilino group), an acylamino group, an aminocarbonylamino group, an alkoxycarbonylamino group, an aryloxycarbonylamino group, a sulfamoylamino group, an alkyl- or aryl-sulfonylamino group, a mercapto group, an alkylthio group, an arylthio group, a heterocyclic thio group, a sulfamoyl group, a sulfo group, an alkyl- or aryl-sulfinyl group, an alkyl- or aryl-sulfonyl group, an acyl group, an aryloxycarbonyl group, an alkoxycarbonyl group, a carbamoyl group, an aryl- or heterocyclic-azo group, an imido group, a phosphino group, a phophinyl group, a phosphinyloxy group, a phosphinylamino group and a silyl group.

Among these, preferred examples of the substituent include an alkyl group (e.g., a methyl group, a t-butyl group, a t-hexyl group, a benzyl group), an alkenyl group (e.g., an allyl group), an aryl group (e.g., a phenyl group), an alkoxycarbonyl group (e.g., a methoxycarbonyl group, a dodecyloxycarbonyl group), an aryl oxycarbonyl group (e.g., a phenoxycarbonyl group), an alkyl- or alkenyl-sulfonyl group (e.g., a methanesulfonyl group, a butanesulfonyl group), an arylsulfonyl group (e.g., a benzene sulfonyl group, a p-hydroxybenzenesulfonyl group) or -X₉₁-R₉₁.
R₉₁ and R₉₂, R₁₀₀ and R₉₆, and R₉₁ and R₁₀₀, respectively, may bind together with each other to form a 5- to 7-membered ring (for example, a chromane ring, a morpholine ring). Further, R₉₂ and R₉₃, and R₉₃ and R₉₄, respectively, may bind together with each other to form a 5- to 7-membered ring (for example, a chromane ring, an indane ring), a spiro ring or a bicyclo ring. However, all of R₉₁, R₉₂, R₉₃, R₉₄, R₉₅, R₉₆ and R₁₀₀ are not a hydrogen atom at the same time; and the total number of carbon atoms is 10 or more, and preferably 16 or more.

The compound represented by formula (TS-I) used in the present invention includes a compound represented by any of, for example, formula (I) of JP-B-63-50691, formula (IIIa), (IIIb), or (IIIc) of JP-B-2-37575, formula of JP-B-2-50457, formula of JP-B-5-67220, formula (IX) of JP-B-5-70809, formula of JP-B-6-19534, fonnula (I) of JP-A-62-227889, formula (I) or (II) of JP-A-62-244046, formula (I) or (II) of JP-A-2-66541, formula (II) or (III) of JP-A-2-139544, formula (I) of JP-A-2-194062, formula (B), (C) or (D) of JP-A-2-212836, formula (III) of JP-A-3-200758, formula (II) or (III) of JP-A-3-48845, formula (B), (C) or (D) of JP-A-3-266836, formula, (I) of JP-A-3-969440, formula (I) of JP-A-4-330440, formula (I) of JP-A-5-297541, formula ofJP-A-6-130602, formula (1), (2) or (3) of International Patent Application Publication WO 91/11749 pamphlet, formula (I) of German Patent Publication DE 4,008,785A1, formula (II) of U.S. Patent No. 4,931,382, formula (a) of European Patent No. 203,746B1, and formula (I) of European Patent No. 264,730B1.
As the compound represented by formula (TS-I), compounds represented by the following formulae (TS-IA) to (TS-IG) are exemplified. In the present invention, compounds having these structures are preferable.

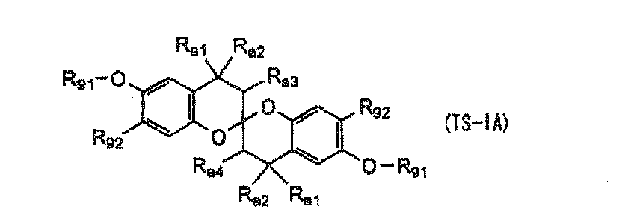

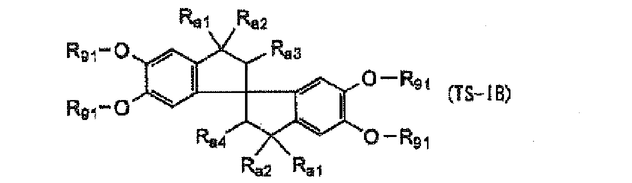

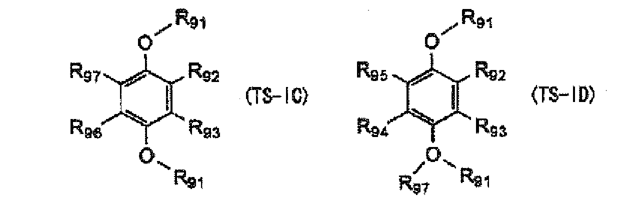

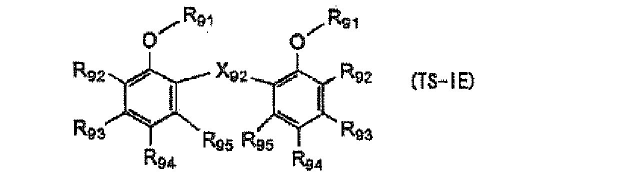

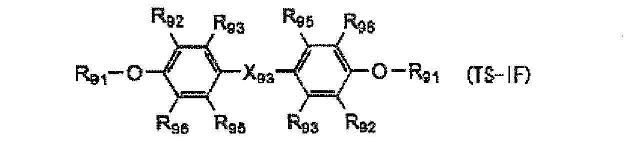

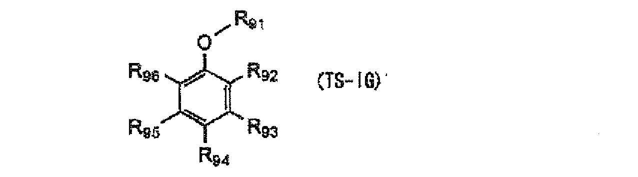

In formulae (TS-IA) to (TS-IG), R₉₁ to R₉₇ have the same meanings as those defined in formula (TS-I), and preferable ranges thereof are also the same. Rₐ₁ to Rₐ₄ each represent a hydrogen atom or an aliphatic group. X₉₂ and X₉₃ each represent a divalent linking group. Examples of the divalent linking group include an alkylene group, an oxy group and a sulfonyl group. In the formulae, the same symbols in the same molecule may be the same as or different from each other.

In formula (TS-II), R₁₀₁, R₁₀₂, R₁₀₃, and R₁₀₄ each independently represent a hydrogen atom, an alkyl group (including a cyclic alkyl group such as a cycloalkyl group, a bicycloalkyl group and a tricycloalkyl group), or an alkenyl group (including a cyclic alkenyl group such as a cycloalkenyl group, a bicycloalkenyl group and a tricycloalkenyl group); R₁₀₁, and R₁₀₂, and R₁₀₃ and R₁₀₄, respectively, may bind to each other to form a 5- to 7-membered ring.
X₁₀₁ represents a hydrogen atom, an alkyl group (including a cyclic alkyl group such as a cycloalkyl group, a bicycloalkyl group, and a tricycloalkyl group), an alkenyl group (including a cyclic alkenyl group such as a cycloalkenyl group, a bicycloalkenyl group, and a tricycloalkenyl group), an alkoxy group, an alkenyloxy group, an alkyl- or alkenyl-oxycarbonyl group, an aryloxycarbonyl group, an acyl group, an acyloxy group, an alkyloxycarbonyloxy group, an alkenyloxycarbonyloxy group, an aryloxycarbonyloxy group, an alkyl- or alkenyl-sulfonyl group, an arylsulfonyl group, an alkyl- or alkenyl-sulfinyl group, an arylsulfinyl group, a sulfamoyl group, a carbamoyl group, a hydroxy group, or an oxy radical group.
X₁₀₂ represents a group of non-metal atoms necessary for forming a 5- to 7-membered ring.

The compound represented by formula (TS-II) is described in more detail below.
In formula (TS-II), R₁₀₁, R₁₀₂, R₁₀₃ and R₁₀₄ each are a hydrogen atom, an alkyl group (e.g., a methyl group, an ethyl group), or an alkenyl group (e.g., an allyl group); preferably an alkyl group.
X₁₀₁ represents a hydrogen atom, an alkyl group (e.g., a methyl group, an ethyl group), an alkenyl group (e.g., an allyl group), an alkyloxy group (e.g., a methoxy group, an octyloxy group, a cyclohexyloxy group), an alkenyloxy group (e.g., an allyloxy group), an alkyloxycarbonyl group (e.g., a methoxycarbonyl group, a hexadecyloxycarbonyl group), an alkenyloxycarbonyl group (e.g., an allyloxycarbonyl group), an aryloxycarbonyl group (e.g., a phenoxycarbonyl group, a p-chlorophenoxycarbonyl group), an acyl group (e.g., an acetyl group, a pivaloyl group, a methacryloyl group), an acyloxy group (e.g., an acetoxy group, a benzoyloxy group), an alkyloxycarbonyloxy group (e.g., a methoxycarbonyloxy group, an octyloxycarbonyloxy group), an alkenyloxycarbonyloxy group (e.g., an allyloxycarbonyloxy group), an aryloxycarbonyloxy group (e.g., a phenoxycarbonyloxy group), an alkylsulfonyl group (e.g., a methanesulfonyl group, a butanesulfonyl group), an alkenylsulfonyl group (e.g., an allylsulfonyl group), an arylsulfonyl group (e.g., a benzene sulfonyl group, a p-toluenesulfonyl group), an alkylsulfinyl group (e.g., a methanesulfonyl group, an octanesulfinyl group), an alkenylsulfinyl group (e.g., an allylsulfinyl group), an arylsulfinyl group (e.g., a benzenesulfinyl group, a p-toluenesulfinyl group), a sulfamoyl group (e.g., a dimethylsulfamoyl group), a carbamoyl group (e.g., a dimethylcarbamoyl group, a diethylcarbamoyl group), a hydroxy group, or an oxy radical group.
X₁₀₂ represents a group of non-metal atoms necessary for forming a 5- to 7-membered ring (e.g., a piperidine ring, a piperazine ring).

In formula (TS-II), it is further preferable that R₁₀₃, R₁₀₄, R₁₀₅ and R₁₀₆ each are an alkyl group having 1 to 3 carbon atoms; X₁₀₁ is an oxy radical group, an alkyl group having 1 to 12 carbon atoms, an alkenyl group having 3 to 12 carbon atoms, a cycloalkyl group having 5 to 12 carbon atoms, an acyl group having 2 to 14 carbon atoms, or an aryl group having 6 to 20 carbon atoms; and X₁₀₂ forms a cyclohexane ring.
The compound represented by formula (TS-II) is particularly preferably a compound represented by the following formula (TS-IIa).

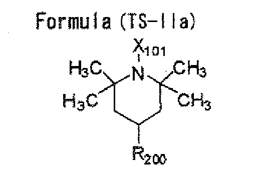

In formula (TS-IIa), X₁₀₁ has the same meanings as those of X₁₀₁ in formula (TS-II), and preferable ranges thereof are also the same. R₂₀₀ represents a monovalent substituent. Examples of the monovalent substituent include those described above as the monovalent substituent.

The compound represented by formula (TS-II) used in the present invention include a compound represented by, for example, formula (I) of JP-B-2-32298, formula (I) of JP-B-3-39296, formula of JP-B-3-40373, formula (I) of JP-A-2-49762, formula (II) of JP-A-2-208653, formula (III) of JP-A-2-217845, formula (B) of U.S. Patent No. 4,906,555, formula of European Patent Publication EP309,400A2, formula of European Patent Publication EP309,401A1, and formula of European Patent Publication EP309,402A1.

In formula (TS-III), R₁₀₅ and R₁₀₆ each independently represent a hydrogen atom, an aliphatic group, an acyl group, an aliphatic oxycarbonyl group, an aromatic oxycarbonyl group, an aliphatic sulfonyl group, or an aromatic sulfonyl group; R₁₀₇ represents an aliphatic group, an aliphatic oxy group, an aromatic oxy group, an aliphatic thio group, an aromatic thio group, an acyloxy group, an aliphatic oxycarbonyloxy group, an aromatic oxycarbonyloxy group, a substituted amino group, a heterocyclic group, or a hydroxyl group. Ifpossible, R₁₀₅ and R₁₀₆, R₁₀₆ and R₁₀₇, and R₁₀₅ and R₁₀₇, respectively, combine together to form a 5- to 7-membered ring, but they never form a 2,2,6,6-tetraalkylpiperidine skeleton. In addition, both R₁₀₅ and R₁₀₆ are not hydrogen atoms at the same time; and the total number of carbon atoms is 7 or more.

The compound represented by formula (TS-III) is described in more detail below.
In formula (TS-III), R₁₀₅ and R₁₀₆ each independently represent a hydrogen atom, an aliphatic group (e.g., a methyl group, an ethyl group, a t-butyl group, an octyl group, a methoxyethoxy group), an acyl group (e.g., an acetyl group, a pivaloyl group, a methacryloyl group), an aliphatic oxycarbonyl group (e.g., a methoxycarbonyl group, a hexadecyl oxycarbonyl group), an aromatic oxycarbonyl group (e.g., a phenoxycarbonyl group), an aliphatic sulfonyl group (e.g., a methane sulfonyl group, a butane sulfonyl group), or an aromatic sulfonyl group (e.g., a phenyl sulfonyl group). R₁₀₇ represents an aliphatic group (e.g., a methyl group, an ethyl group, a t-butyl group, an octyl group, a methoxyethoxy group), an aliphatic oxy group (e.g., a methoxy group, an octyloxy group), an aromatic oxy group (e.g., a phenoxy group, a p-methoxyphenoxy group), an aliphatic thio group (e.g., a methylthio group, an octylthio group), an aromatic thio group (e.g., a phenylthio group, a p-methoxyphenylthio group), an acyloxy group (e.g., an acetoxy group, a pivaloyloxy group), an aliphatic oxycarbonyloxy group (e.g., a methoxycarbonyloxy group, an octyloxycarbonyloxy group), an aromatic oxycarbonyloxy group (e.g., a phenoxycarbonyl oxy group), a substituted amino group (the substituent may be any one that is able to substitute, e.g., an amino group substituted with a substituent such as an aliphatic group, an aromatic group, an acyl group, an aliphatic sulfonyl group, or an aromatic sulfonyl group), a heterocyclic group (e.g., a piperidine ring, a thiomorpholine ring), or a hydroxyl group. If possible, R₁₀₅ and R₁₀₆, R₁₀₆ and R₁₀₇, and R₁₀₅ and R₁₀₇, respectively, may combine together to form a 5- to 7-membered ring (e.g. a piperidine ring and a pyrazolidine ring). Both R₁₀₅ and R₁₀₆ are not hydrogen atoms at the same time; and the total number of carbon atoms is 7 or more.

The compound represented by formula (TS-III) used in the present invention include a compound represented by, for example, formula (I) of JP-B-6-97332, formula (I) of JP-B-6-97334, formula (I) of JP-A-2-148037, formula (I) of JP-A-2-150841, formula (I) of JP-A-2-181145, formula (I) of JP-A-3-266836, formula (IV) of JP-A-4-350854, or formula (I) of JP-A-5-61166.
Examples of the compound represented by formula (TS-III) include a compound represented by any one of the following formulae (TS-IIIA) to (TS-IIID). In the present invention, the compound having any one of these structures is preferable.

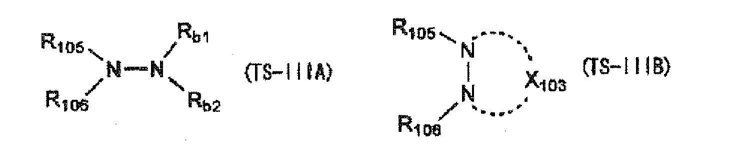

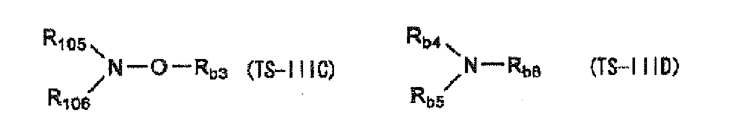

In formulae (TS-IIIA) to (TS-IIID), R₁₀₅ and R₁₀₆ each have the same meanings as those defined in formula (TS-III), and the preferable ranges are also the same. R_{b1} to R_{b3} each independently have the same meanings as those of R₁₀₅, and the preferable ranges are also the same. R_{b4}, R_{b5} and R_{b6} each represent an aliphatic group. X₁₀₃ represents a group of non-metal atoms necessary to form a 5- to 7-membered ring.

In formula (TS-IV), R₁₁₁ and R₁₁₂ each independently represent an aliphatic group. R₁₁₁ and R₁₁₂ may combine with each other to form a 5- to 7-membered ring. n represents 0, 1 or 2. In the above, the total number of carbon atoms of R₁₁₁ and R₁₁₂ is 10 or more.

The compound represented by formula (TS-IV) is described in more detail below.
In formula (TS-IV), R₁₁₁ and R₁₁₂ each independently represent an aliphatic group (e.g., a methyl group, a methoxycarbonylethyl group, a dodecyloxycarbonyl ethyl group). R₁₁₁ and R₁₁₂ may combine with each other to form a 5- to 7-membered ring (such as a tetrahydrothiophene ring and a thiomorpholine ring). n represents 0, 1 or 2. In the above, the total number of carbon atoms of R₁₁₁ and R₁₁₂ is 10 or more.
The compound represented by formula (TS-IV) used in the present invention include a compound represented by, for example, formula (I) of JP-B-2-44052, formula (T) of JP-A-3-48242, formula (A) of JP-A-3-266836, formula (I), (II) or (III) of JP-A-5-323545, formula (I) of JP-A-6-148837, or formula (I) of U.S. Patent No. 4,933,271.

In formula (TS-V), R₁₂₁ and R₁₂₂ each independently represent an aliphatic oxy group, or an aromatic oxy group; R₁₂₃ represents an aliphatic group, an aromatic oxy group, an aliphatic oxy group, or an aromatic oxy group; and m represents 0 or 1. R₁₂₁ and R₁₂₂, and R₁₂₁ and R₁₂₃, respectively, may combine together to form a 5- to 8-membered ring. The total number of carbon atoms of R₁₂₁, R₁₂₂, and R₁₂₃ is 10 or more.

The compound represented by formula (TS-V) is described in more detail below.
In formula (TS-V), R₁₂₁ and R₁₂₂ each independently represent an aliphatic oxy group (e.g., a methoxy group, a t-octyloxy group), or an aromatic oxy group (e.g., a phenoxy group, a 2,4-di-t-butylphenoxy group). R₁₂₃ represents an aliphatic group (e.g., a methyl group, an ethyl group, a t-octyl group), an aromatic group (e.g., a phenyl group, a 4-t-butylphenyl group), an aliphatic oxy group (e.g., a methoxy group, a t-octyloxy group), or an aromatic oxy group (e.g., a phenoxy group, a 4- t-butylphenoxy group). m represents 0 or 1. R₁₂₁ and R₁₂₂, and R₁₂₁ and R₁₂₃, respectively, may combine together to form a 5- to 8-membered ring. The total number of carbon atoms of R₁₂₁, R₁₂₂, and R₁₂₃ is 10 or more.
The compound represented by formula (TS-V) used in the present invention include a compound represented by, for example, formula (I) of JP-A-3-25437, formula (I) of JP-A-3-142444, formula of U.S. Patent No. 4,749,645, or formula of U.S. Patent No. 4,980,275.

The compound represented by any one of formulae (TS-I) to (TS-V) is preferably one selected from compounds represented by any one of formulae (TS-I), (TS-II) and (TS-V); more preferably one selected from compounds represented by formula (TS-I) or (TS-II); and furthermore preferably a compound represented by formula (TS-II). Particularly preferred examples of the compound represented by formula (TS-II) include those having a 2,2,6,6-tetraalkylpiperidine skeleton.

Hereinafter, specific examples of the compound represented by any one of formulae (TS-I) to (TS-V) will be shown, but the present invention is not limited thereto. TI-1 to TI-56 are appended to the compounds that fall within formula (TS-I), TII-1 to TII-36 are appended to the compounds that fall within formula (TS-II). TIII-1 to TIII-13 are appended to the compounds that fall within formula (TS-III), TIV-1 to TIV-6 are appended to the compounds that fall within formula (TS-IV), and TV-1 to TV-8 are appended to the compounds that fall within formula (TS-V), respectively, as a reference number.

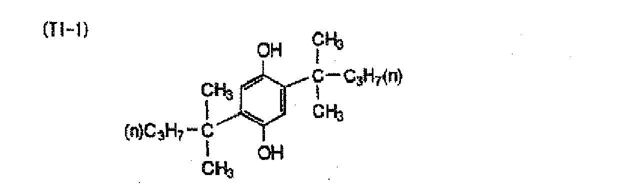

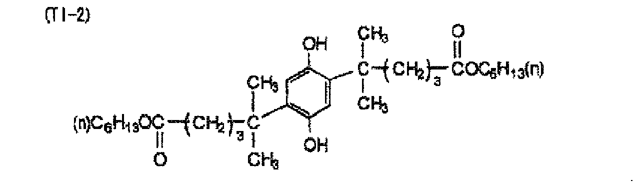

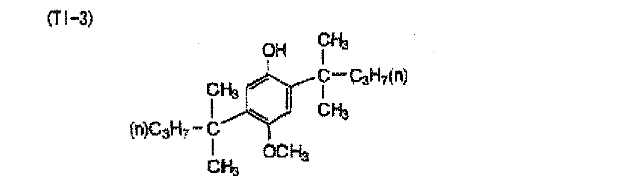

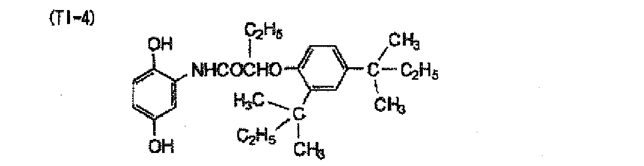

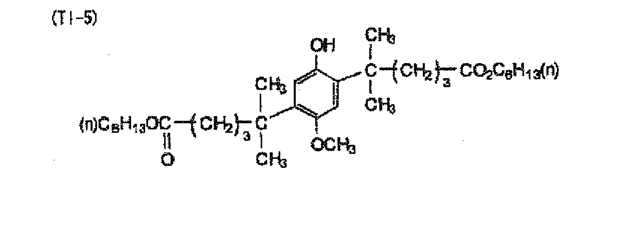

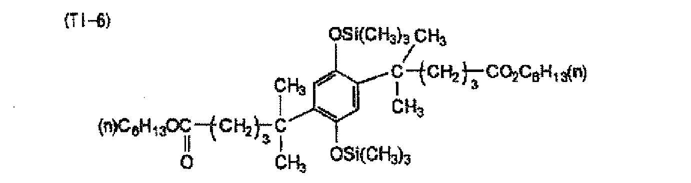

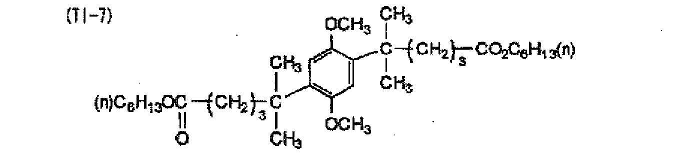

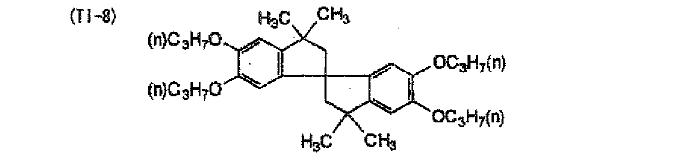

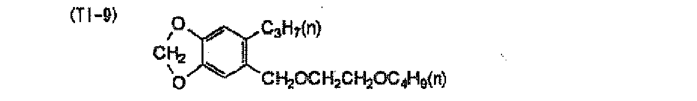

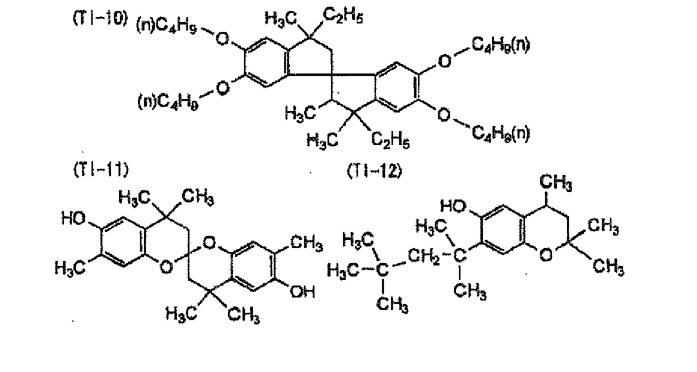

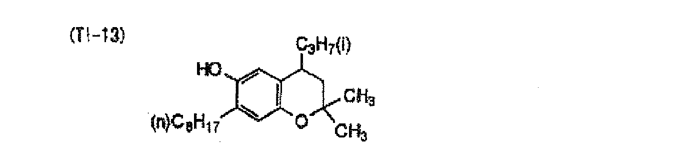

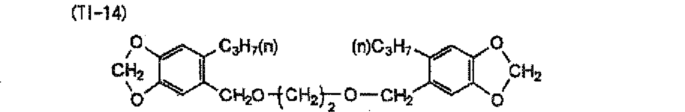

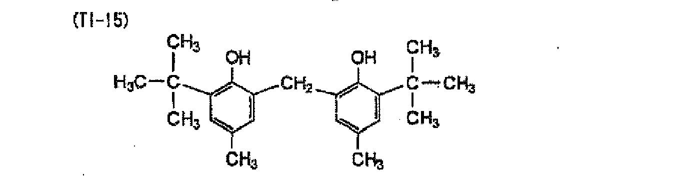

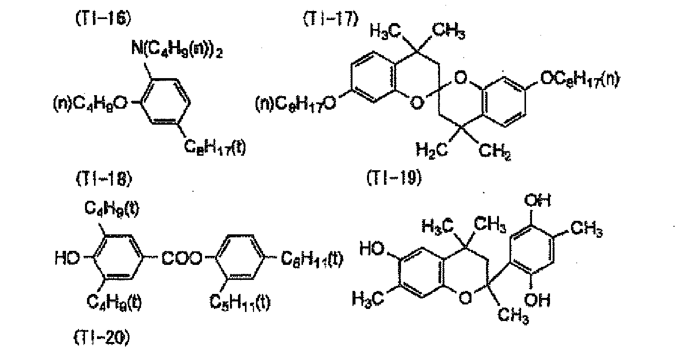

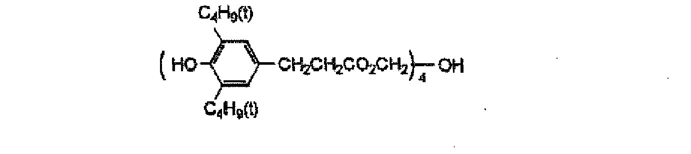

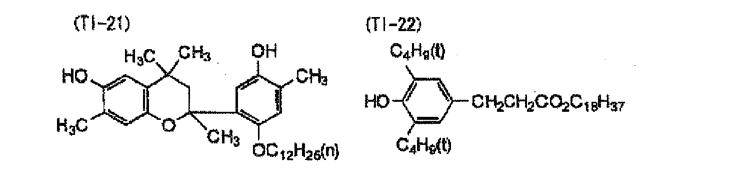

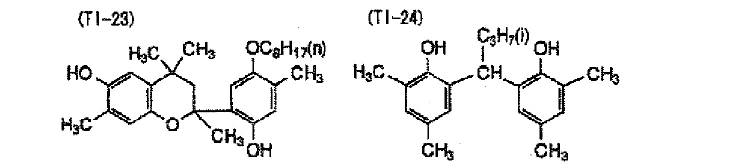

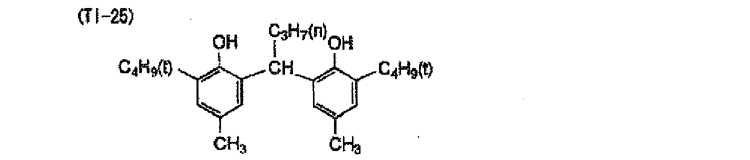

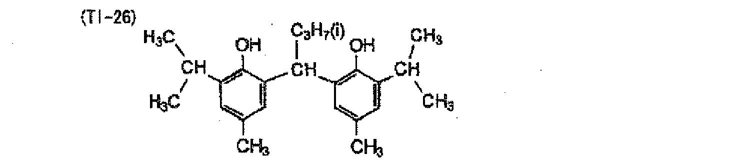

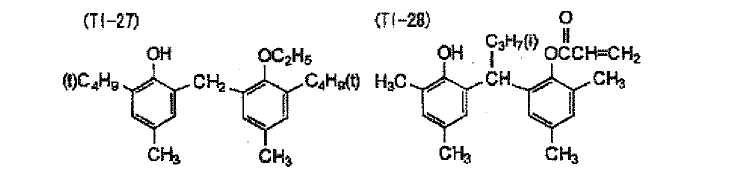

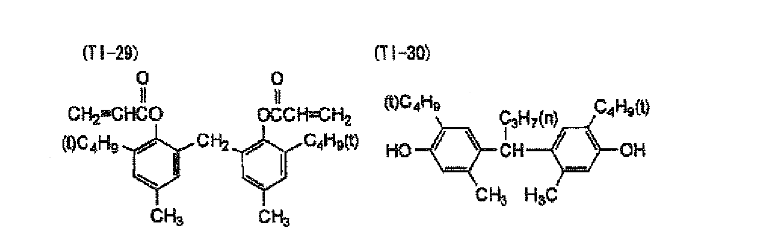

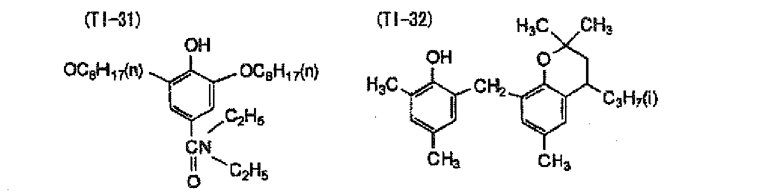

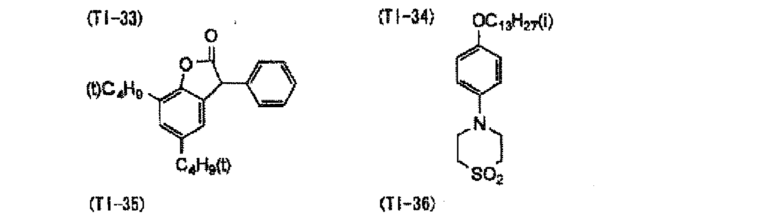

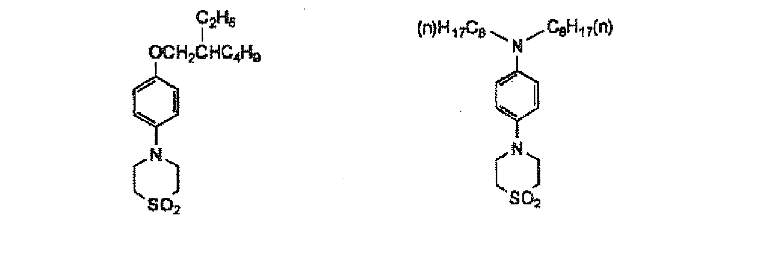

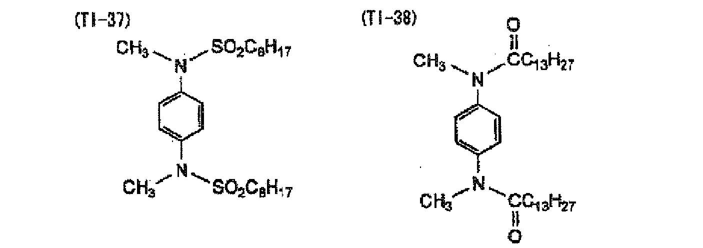

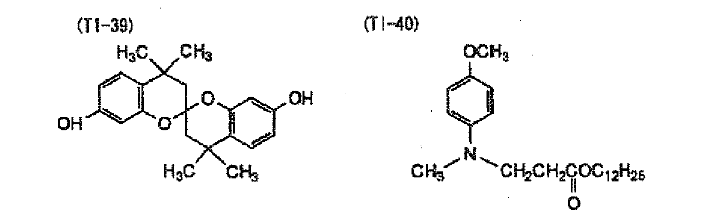

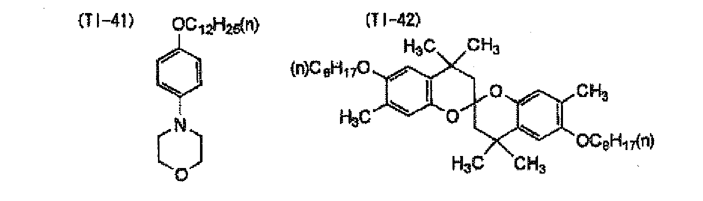

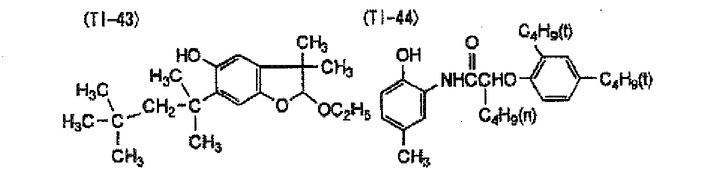

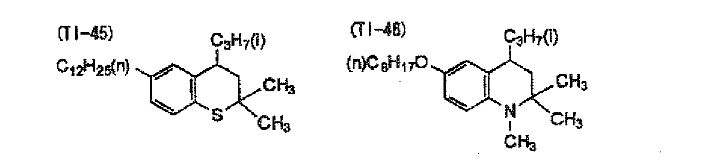

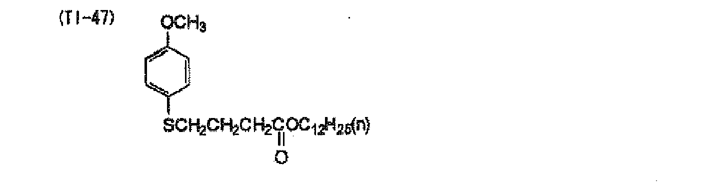

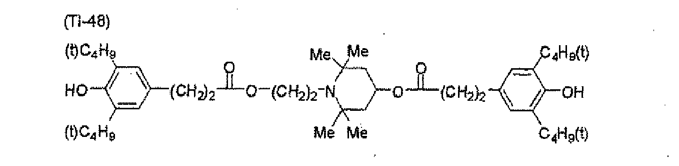

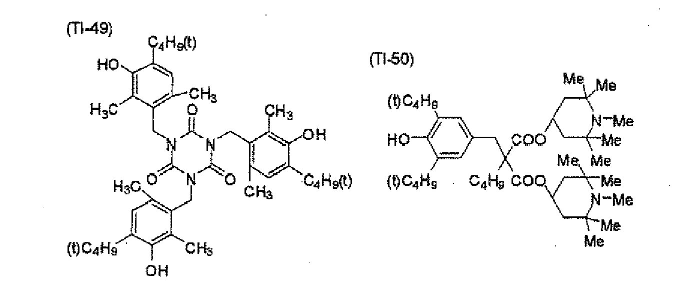

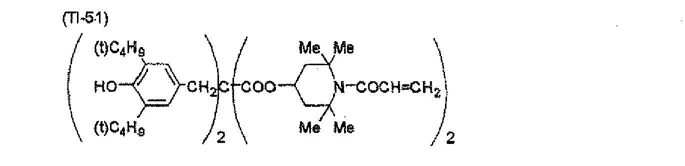

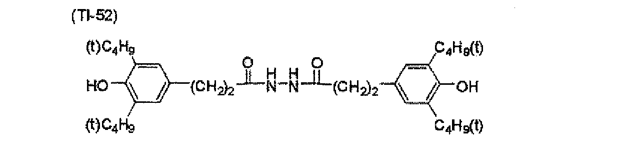

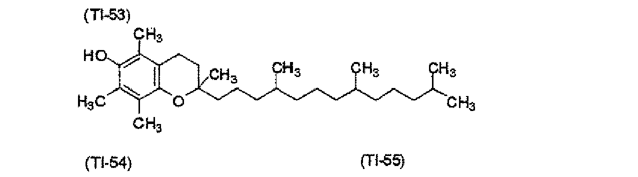

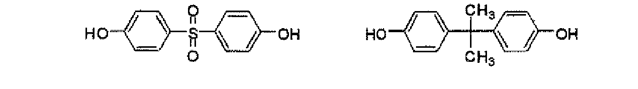

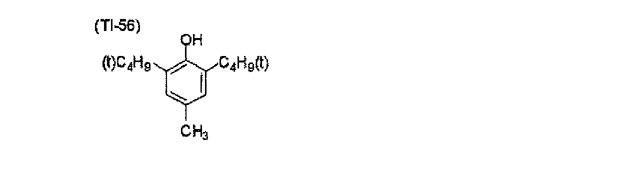

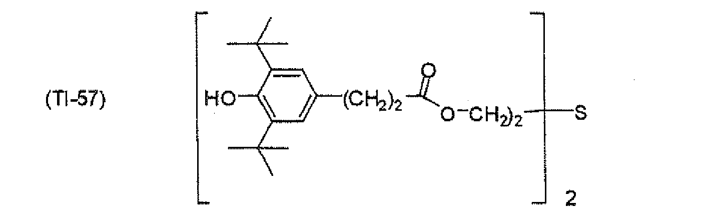

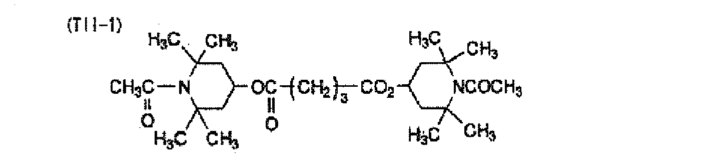

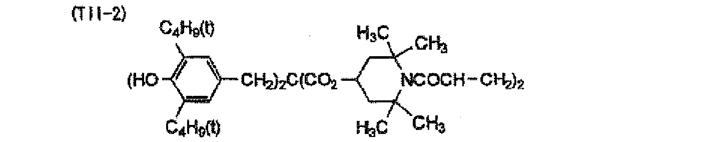

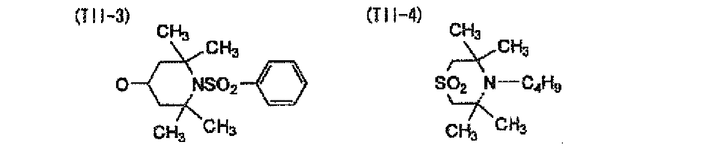

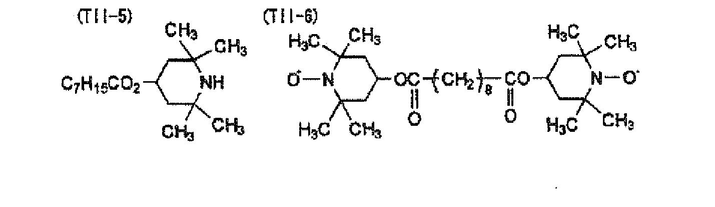

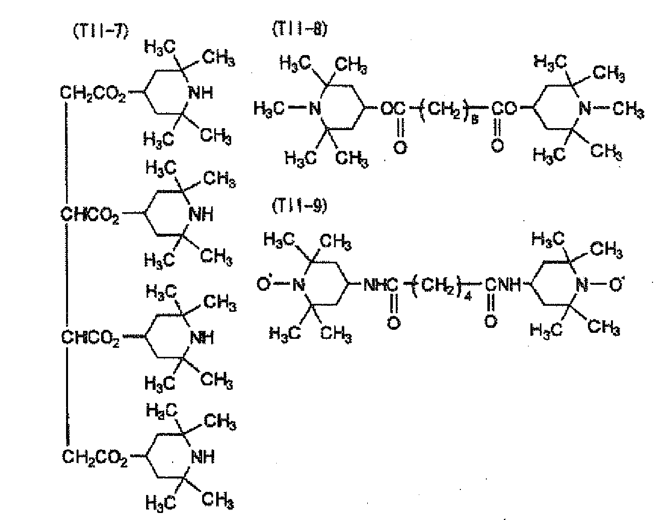

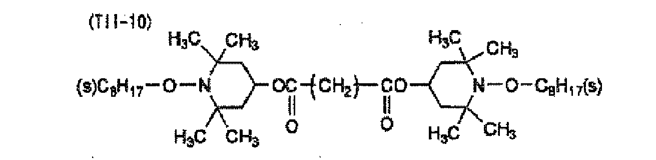

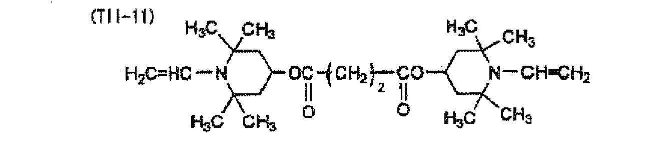

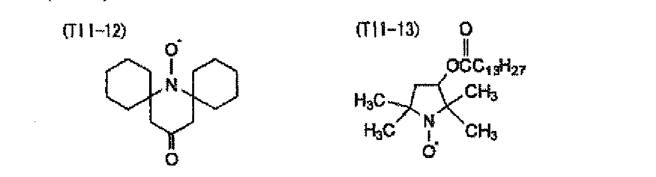

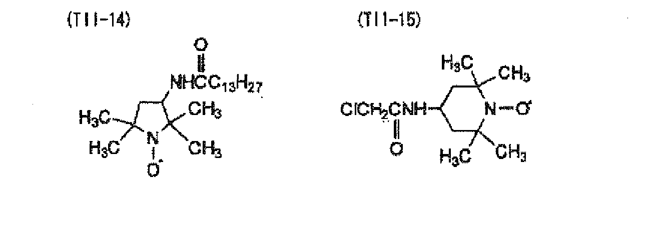

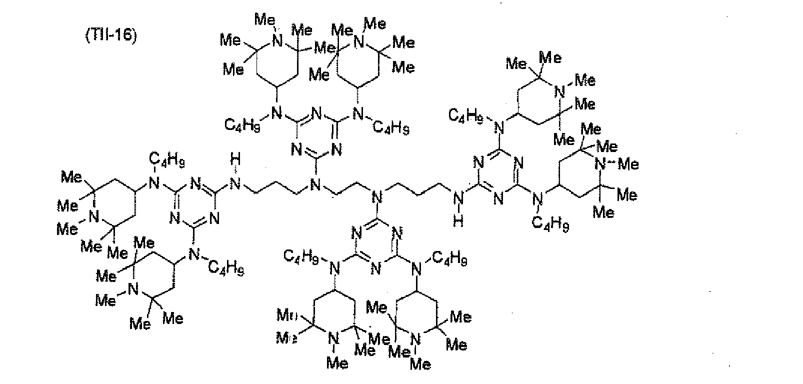

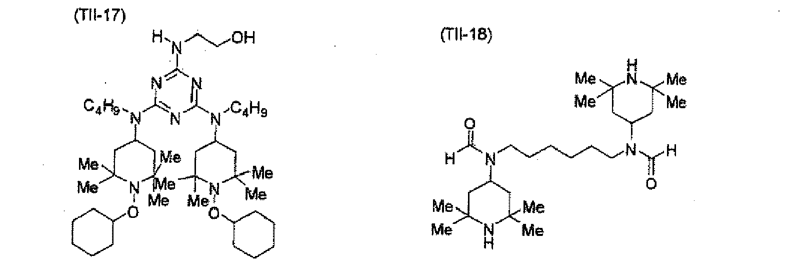

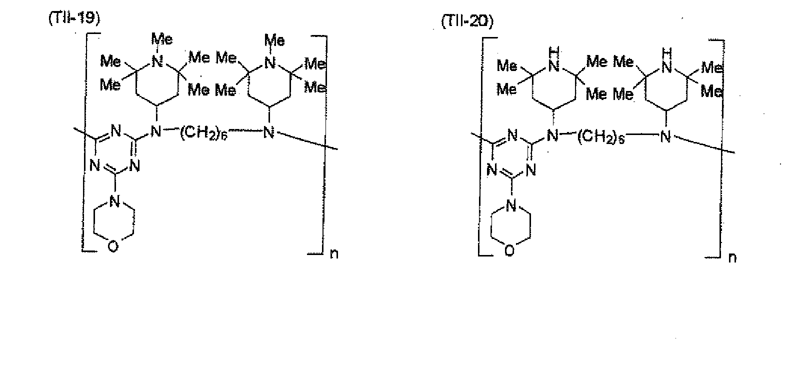

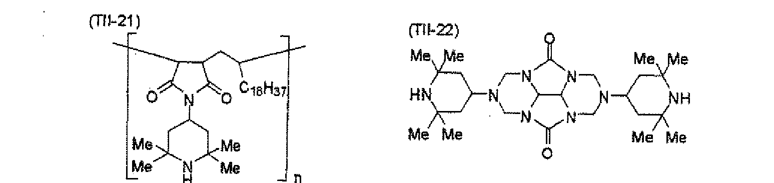

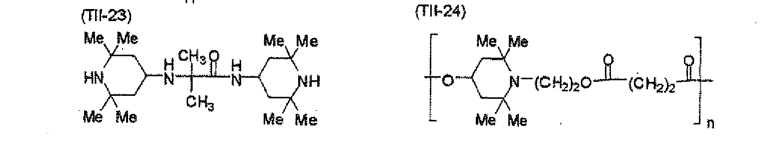

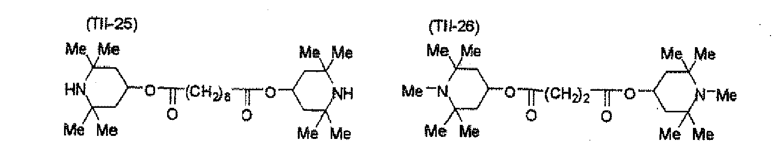

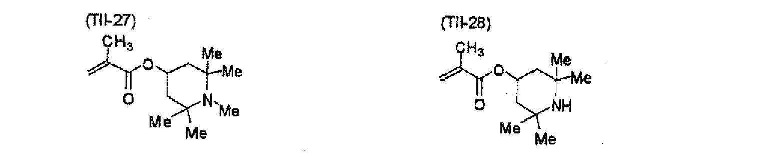

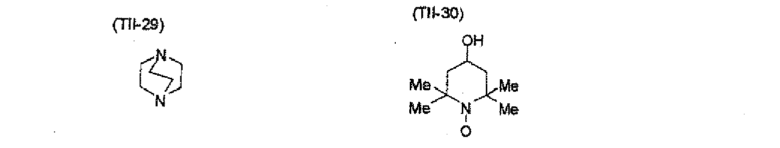

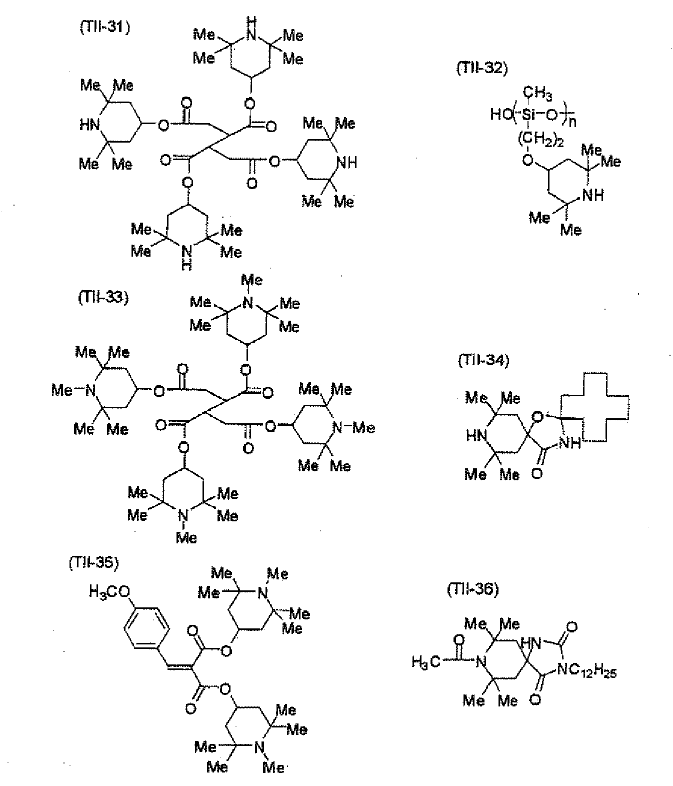

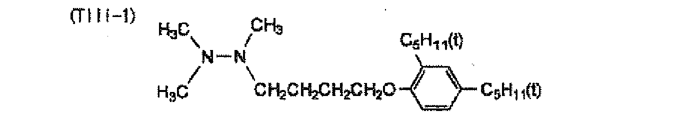

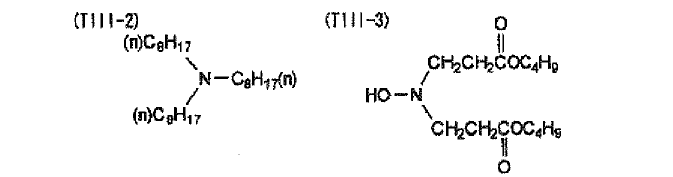

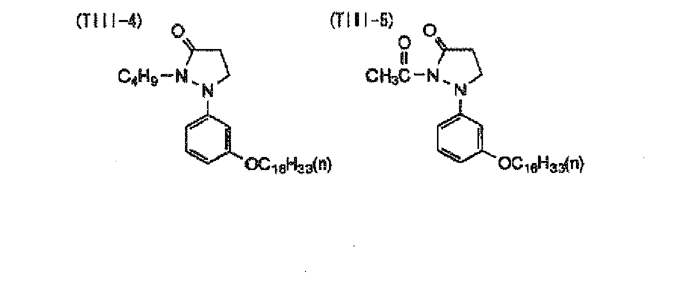

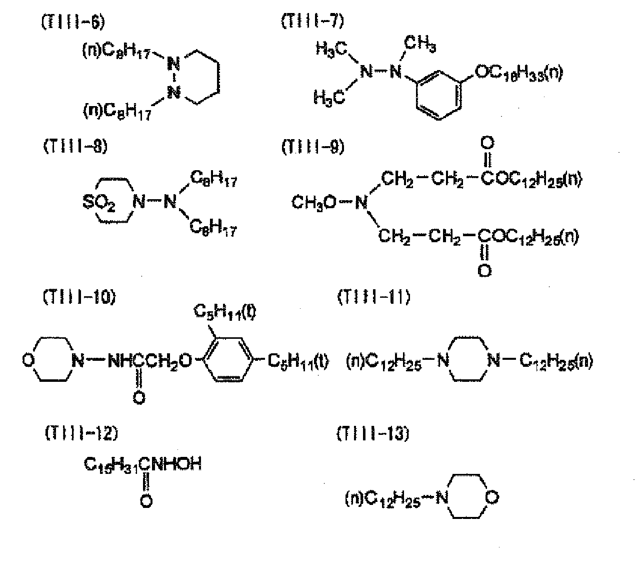

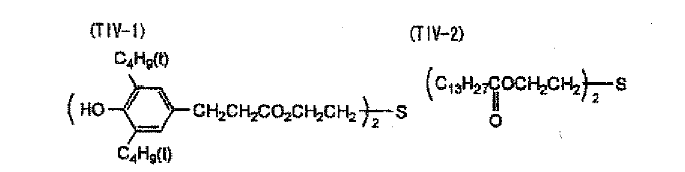

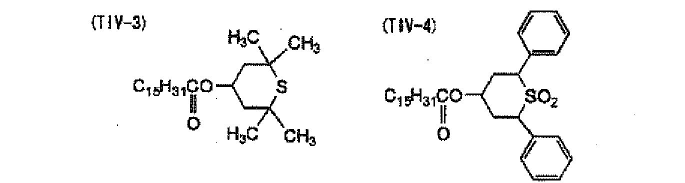

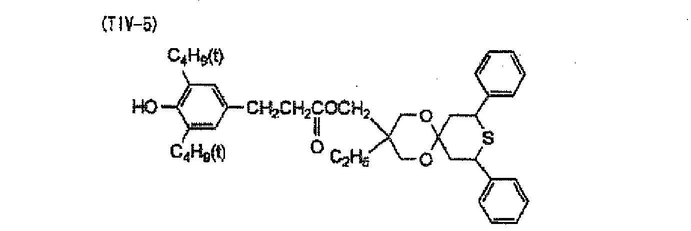

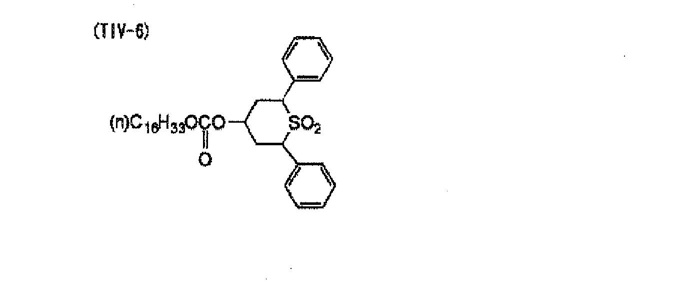

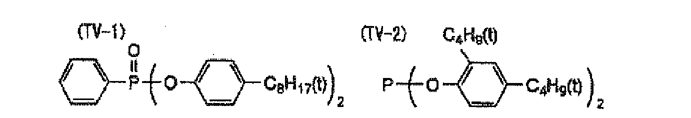

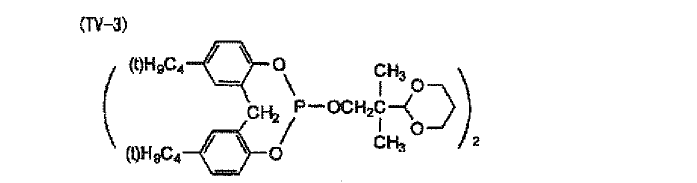

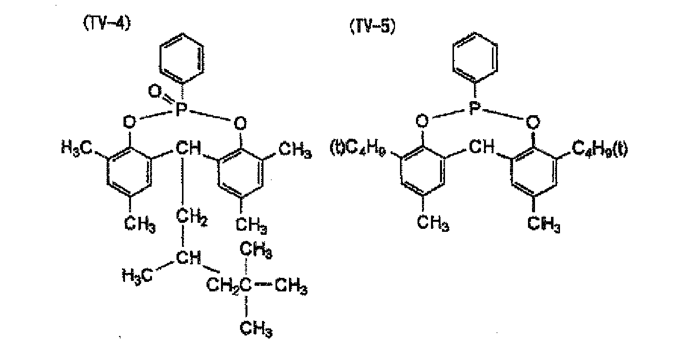

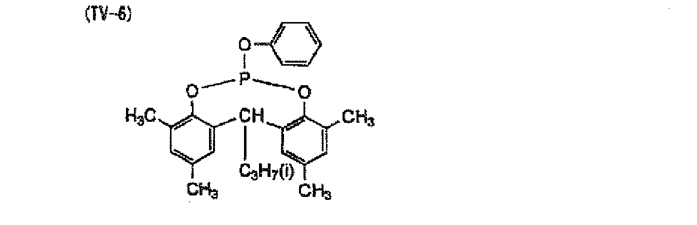

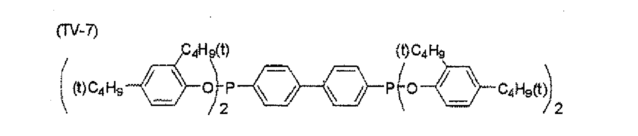

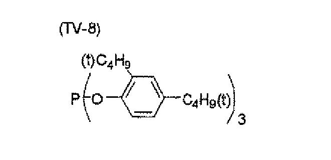

Among the compounds represented by any one of formulae (TS-I) to (TS-V), compounds represented by any one of formulae (TS-I), (TS-II) and (TS-V) are preferable; compounds represented by formula (TS-I) or (TS-II) are more preferable; and compounds represented by formula (TS-II) are particularly preferable.

When the ultraviolet absorbent composition contains two or more compounds represented by any one of formulae (TS-I) to (TS-V), the two or more compounds may be selected from the same family (for example, that is the case where the two compounds represented by formula (TS-II) are used), or alternatively each of the two or more compounds may be selected from different families (for example, that is the case where one compound represented by formula (TS-I) and another compound represented by formula (TS-II) are used in combination). It is preferable that the two or more compounds, each of which is selected from different families, are used in combination.

In the present specification, "aliphatic group" means an alkyl group, a substituted alkyl group, an alkenyl group, a substituted alkenyl group, an alkynyl group, a substituted alkynyl group, an aralkyl group, and a substituted aralkyl group. The aforementioned alkyl group may have a branch or may form a ring. The alkyl group preferably has 1 to 20 carbon atoms, and more preferably 1 to 18 carbon atoms. The alkyl moiety in the aforementioned substituted alkyl group is the same as the above mentioned alkyl group. The aforementioned alkenyl group may have a branch or may form a ring. The alkenyl group has preferably 2 to 20 carbon atoms, and more preferably 2 to 18 carbon atoms. The alkenyl moiety in the aforementioned substituted alkenyl group is the same as the above mentioned alkenyl group. The aforementioned alkynyl group may have a branch or may form a ring. The alkynyl group has preferably 2 to 20 carbon atoms, and more preferably 2 to 18 carbon atoms. The alkynyl moiety in the aforementioned substituted alkynyl group is the same as the above mentioned alkynyl group. The alkyl moiety in the aforementioned aralkyl group and substituted aralkyl group is the same as the above mentioned alkyl group. The aryl moiety in the aforementioned aralkyl group and substituted aralkyl group is the same as the aryl group mentioned below.

Examples of the substituent in the alkyl moiety of the substituted alkyl group, the substituted alkenyl group, the substituted alkynyl group, and the substituted aralkyl group include: a halogen atom (e.g. a chlorine atom, a bromine atom, or an iodine atom); an alkyl group [which represents a substituted or unsubstituted linear, branched, or cyclic alkyl group, and which includes an alkyl group (preferably an alkyl group having 1 to 30 carbon atoms, e.g. methyl, ethyl, n-propyl, isopropyl, t-butyl, n-octyl, eicosyl, 2-chloroethyl, 2-cyanoethyl, or 2-ethylhexyl), a cycloalkyl group (preferably a substituted or unsubstituted cycloalkyl group having 3 to 30 carbon atoms, e.g. cyclohexyl, cyclopentyl, or 4-n-dodecylcyclohexyl), a bicycloalkyl group (preferably a substituted or unsubstituted bicycloalkyl group having 5 to 30 carbon atoms, i.e. a monovalent group obtained by removing one hydrogen atom from a bicycloalkane having 5 to 30 carbon atoms, e.g. bicyclo[1,2,2]heptan-2-yl or bicyclo[2,2,2]octan-3-yl), and a substituent having a three or more ring structures such as tricyclo structure, and an alkyl group in substituents described below (e.g. an alkyl group in an alkylthio group) represents such the alkyl group of the above concept];

an alkenyl group [which represents a substituted or unsubstituted linear, branched, or cyclic alkenyl group, and which includes an alkenyl group (preferably a substituted or unsubstituted alkenyl group having 2 to 30 carbon atoms, e.g. vinyl, allyl, prenyl, geranyl, or oleyl), a cycloalkenyl group (preferably a substituted or unsubstituted cycloalkenyl group having 3 to 30 carbon atoms, i.e. a monovalent group obtained by removing one hydrogen atom from a cycloalkene having 3 to 30 carbon atoms, e.g. 2-cyclopenten-1-yl or 2-cyclohexen-1-yl), and a bicycloalkenyl group (which represents a substituted or unsubstituted bicycloalkenyl group, preferably a substituted or unsubstituted bicycloalkenyl group having 5 to 30 carbon atoms, i.e. a monovalent group obtained by removing one hydrogen atom from a bicycloalkene having one double bond, e.g. bicyclo[2,2,1]hept-2-en-1-yl or bicyclo[2,2,2]oct-2-en-4-yl)]; an alkynyl group (preferably a substituted or unsubstituted alkynyl group having 2 to 30 carbon atoms, e.g. ethynyl, propargyl, or trimethylsilylethynyl group);

an aryl group (preferably a substituted or unsubstituted aryl group having 6 to 30 carbon atoms, e.g. phenyl, p-tolyl, naphthyl, m-chlorophenyl, or o-hexadecanoylaminophenyl); a heterocyclic group (preferably a monovalent group obtained by removing one hydrogen atom from a substituted or unsubstituted 5- or 6-membered aromatic or nonaromatic heterocyclic compound, more preferably a 5- or 6-membered aromatic heterocyclic group having 3 to 30 carbon atoms, e.g. 2-furyl, 2-thienyl, 2-pyrimidinyl, 2-benzothiazolyl); a cyano group; a hydroxyl group; a nitro group; a carboxyl group; an alkoxy group (preferably a substituted or unsubstituted alkoxy group having 1 to 30 carbon atoms, e.g. methoxy, ethoxy, isopropoxy, t-butoxy, n-octyloxy, or 2-methoxyethoxy); an aryloxy group (preferably a substituted or unsubstituted aryloxy group having 6 to 30 carbon atoms, e.g. phenoxy, 2-methylphenoxy, 4-t-butylphenoxy, 3-nitrophenoxy, or 2-tetradecanoylaminophenoxy);

a silyloxy group (preferably a silyloxy group having 3 to 20 carbon atoms, e.g. trimethylsilyloxy or t-butyldimethylsilyloxy); a heterocyclic oxy group (preferably a substituted or unsubstituted heterocyclic oxy group having 2 to 30 carbon atoms, e.g. 1-phenyltetrazol-5-oxy or 2-tetrahydropyranyloxy); an acyloxy group (preferably a formyloxy group, a substituted or unsubstituted alkylcarbonyloxy group having 2 to 30 carbon atoms, or a substituted or unsubstituted arylcarbonyloxy group having 6 to 30 carbon atoms, e.g. formyloxy, acetyloxy, pivaloyloxy, stearoyloxy, benzoyloxy, or p-methoxyphenylcarbonyloxy); a carbamoyloxy group (preferably a substituted or unsubstituted carbamoyloxy group having 1 to 30 carbon atoms, e.g. N,N-dimethylcarbamoyloxy, N,N-diethylcarbamoyloxy, morpholinocarbonyloxy, N,N-di-n-octylaminocarbonyloxy, or N-n-octylcarbamoyloxy);

an alkoxycarbonyloxy group (preferably a substituted or unsubstituted alkoxycarbonyloxy group having 2 to 30 carbon atoms, e.g. methoxycarbonyloxy, ethoxycarbonyloxy, t-butoxycarbonyloxy, or n-octylcarbonyloxy); an aryloxycarbonyloxy group (preferably a substituted or unsubstituted aryloxycarbonyloxy group having 7 to 30 carbon atoms, e.g. phenoxycarbonyloxy, p-methoxyphenoxycarbonyloxy, or p-n-hexadecyloxyphenoxycarbonyloxy); an amino group (preferably an amino group, a substituted or unsubstituted alkylamino group having 1 to 30 carbon atoms, or a substituted or unsubstituted anilino group having 6 to 30 carbon atoms, e.g. amino, methylamino, dimethylamino, anilino, N-methyl-anilino, or diphenylamino); an acylamino group (preferably a formylamino group, a substituted or unsubstituted alkylcarbanylamino group having 1 to 30 carbon atoms, or a substituted or unsubstituted arylcarbonylamino group having 6 to 30 carbon atoms, e.g. formylamino, acetylamino, pivaloylamino, lauroylamino, benzoylamino, or 3,4,5-tri-n-octyloxyphenylcarbanylamino);

an aminocarbonylamino group (preferably a substituted or unsubstituted aminocarbonylamino having 1 to 30 carbon atoms, e.g. carbamoylamino, N,N-dimethylaminocarbonylamino, N,N-diethylaminocarbonylamino, or morpholinocarbonylamino); an alkoxycarbonylamino group (preferably a substituted or unsubstituted alkoxycarbonylamino group having 2 to 30 carbon atoms, e.g. methoxycarbonylamino, ethoxycarbonylamino, t-butoxycarbonylamino, n-octadecyloxycarbonylamino, or N-methyl-methoxycarbonylamino); an aryloxycarbonylamino group (preferably a substituted or unsubstituted aryloxycarbonylamino group having 7 to 30 carbon atoms, e.g. phenoxycarbonylamino, p-chlorophenoxycarbonylamino, or m-n-octyloxyphenoxycarbonylamino); a sulfamoylamino group (preferably a substituted or unsubstituted sulfamoylamino group having 0 to 30 carbon atoms, e.g. sulfamoylamino, N,N-dimethylaminosulfonylamino, or N-n-octylaminosulfonylamino);

an alkyl- or aryl-sulfonylamino group (preferably a substituted or unsubstituted alkylsulfonylamino having 1 to 30 carbon atoms, or a substituted or unsubstituted arylsulfonylamino having 6 to 30 carbon atoms, e.g. methylsulfonylamino, butylsulfonylamino, phenylsulfonylamino, 2,3,5-trichlorophenylsulfonylamino, or p-methylphenylsulfonylamino); a mercapto group; an alkylthio group (preferably a substituted or unsubstituted alkylthio group having 1 to 30 carbon atoms, e.g. methylthio, ethylthio, or n-hexadecylthio); an arylthio group (preferably a substituted or unsubstituted arylthio having 6 to 30 carbon atoms, e.g. phenylthio, p-chlorophenylthio, or m-methoxyphenylthio); a heterocyclic thio group (preferably a substituted or unsubstituted heterocyclic thio group having 2 to 30 carbon atoms, e.g. 2-benzothiazolylthio or 1-phenyltetrazol-5-ylthio); a sulfamoyl group (preferably a substituted or unsubstituted sulfamoyl group having 0 to 30 carbon atoms, e.g. N-ethylsulfamoyl, N-(3-dodecyloxypropyl)sulfamoyl, N,N-dimethylsulfamoyl, N-acetylsulfamoyl, N-benzoylsulfamoyl, or N-(N'-phenylcarbamoyl)sulfamoyl); a sulfo group;

an alkyl- or aryl-sulfinyl group (preferably a substituted or unsubstituted alkylsulfinyl group having 1 to 30 carbon atoms, or a substituted or unsubstituted arylsulfinyl group having 6 to 30 carbon atoms, e.g. methylsulfinyl, ethylsulfinyl, phenylsulfinyl, or p-methylphenylsulfinyl); an alkyl- or aryl-sulfonyl group (preferably a substituted or unsubstituted alkylsulfonyl group having 1 to 30 carbon atoms, or a substituted or unsubstituted arylsulfonyl group having 6 to 30 carbon atoms, e.g. methylsulfonyl, ethylsulfonyl, phenylsulfonyl, or p-methylphenylsulfonyl); an acyl group (preferably a formyl group, a substituted or unsubstituted alkylcarbonyl group having 2 to 30 carbon atoms, a substituted or unsubstituted arylcarbonyl group having 7 to 30 carbon atoms, or a substituted or unsubstituted heterocyclic carbonyl group having 4 to 30 carbon atoms, which is bonded to said carbonyl group through a carbon atom, e.g. acetyl, pivaloyl, 2-chloroacetyl, stearoyl, benzoyl, p-n-octyloxyphenylcarbonyl, 2-pyridylcarbonyl, or 2-furylcarbonyl);

an aryloxycarbonyl group (preferably a substituted or unsubstituted aryloxycarbonyl group having 7 to 30 carbon atoms, e.g. phenoxycarbonyl, o-chlorophenoxycarbonyl, m-nitrophenoxycarbonyl, or p-t-butylphenoxycarbonyl); an alkoxycarbonyl group (preferably a substituted or unsubstituted alkoxycarbonyl group having 2 to 30 carbon atoms, e.g. methoxycarbonyl, ethoxycarbonyl, t-butoxycarbonyl, or n-octadecyloxycarbonyl); a carbamoyl group (preferably a substituted or unsubstituted carbamoyl having 1 to 30 carbon atoms, e.g. carbamoyl, N-methylcarbamoyl, N,N-dimethylcarbamoyl, N,N-di-n-octylcarbamoyl, or N-(methylsulfonyl)carbamoyl); an aryl- or heterocyclic-azo group (preferably a substituted or unsubstituted aryl azo group having 6 to 30 carbon atoms, or a substituted or unsubstituted heterocyclic azo group having 3 to 30 carbon atoms, e.g. phenylazo, p-chlorophenylazo, or 5-ethylthio-1,3,4-thiadiazol-2-ylazo); an imido group (preferably N-succinimido or N-phthalimido);

a phosphino group (preferably a substituted or unsubstituted phosphino group having 2 to 30 carbon atoms, e.g. dimethylphosphino, diphenylphosphino, or methylphenoxyphosphino); a phosphinyl group (preferably a substituted or unsubstituted phosphinyl group having 2 to 30 carbon atoms, e.g. phosphinyl, dioctyloxyphosphinyl, or diethoxyphosphinyl), a phosphinyloxy group (preferably a substituted or unsubstituted phosphinyloxy group having 2 to 30 carbon atoms, e.g. diphenoxyphosphinyloxy or dioctyloxyphosphinyloxy); a phosphinylamino group (preferably a substituted or unsubstituted phosphinylamino group having 2 to 30 carbon atoms, e.g. dimethoxyphosphinylamino or dimethylaminophosphinylamino); and a silyl group (preferably a substituted or unsubstituted silyl group having 3 to 30 carbon atoms, e.g. trimethylsilyl, t-butyldimethylsilyl, or phenyldimethylsilyl).

Among the functional groups, with respect to one having a hydrogen atom, the hydrogen atom may be removed and said one may be further substituted by any of the above-mentioned substituents. Examples thereof include an alkylcarbonylaminosulfonyl group, an arylcarbonylaminosulfonyl group, an alkylsulfonylaminocarbonyl group, and an arylsulfonylaminocarbonyl group. Examples thereof include a methylsulfonylaminocarbonyl group, a p-methylphenylsulfonylaminocarbonyl group, an acetylaminosulfonyl group, and a benzoylaminosulfonyl group.

Examples of a substituent of the aryl moiety of the substituted aralkyl group are similar to the examples of a substituent of the substituted aryl groups mentioned later.

In this specification, the term "aromatic group" means an aryl group and a substituted aryl group. To the aromatic groups, an aliphatic ring, another aromatic ring, or a heterocycle may be condensed. The aromatic group preferably has 6 to 40 carbon atoms, more preferably 6 to 30 carbon atoms, and even more preferably 6 to 20 carbon atoms. Among them, phenyl or naphthyl is preferable as the aryl group, and phenyl is particularly preferable.

The aryl moiety of the substituted aryl group is similar to the above-mentioned aryl groups. Examples of a substituent of the substituted aryl groups are similar to the above-mentioned examples of the substituent of the alkyl moieties of the substituted alkyl group, the substituted alkenyl group, the substituted alkynyl group, and the substituted aralkyl group.

In this specification, the heterocyclic groups preferably contain a 5-membered or 6-membered, saturated or unsaturated heterocycle. To the heterocycle, an aliphatic ring, an aromatic ring, or another heterocycle may be condensed. Examples of a heteroatom of the heterocycle include B, N, O, S, Se, and Te. As the heteroatom, N, O, and S are preferable. It is preferable that a carbon atom of the heterocycle has a free valence (monovalent) (the heterocyclic group is preferably to be bonded at a carbon atom thereof). The heterocyclic group preferably has 1 to 40 carbon atoms, more preferably 1 to 30 carbon atoms, and even more preferably 1 to 20 carbon atoms. Examples of the saturated heterocycle include a pyrrolidine ring, a morpholine ring, a 2-bora-1,3-dioxolane ring, and 1,3-thiazolidine ring. Examples of the unsaturated heterocycles include an imidazole ring, a thiazole ring, a benzothiazole ring, a benzoxazole ring, a benzotriazole ring, a benzoselenazole ring, a pyridine ring, a pyrimidine ring, and a quinoline ring. The heterocyclic groups may have a substituent. Examples of the substituent are similar to the previously-mentioned examples of the substituent of the alkyl moieties of the substituted alkyl group, the substituted alkenyl group, the substituted alkynyl group, and the substituted aralkyl group.

### [Silicon compound]

The silicon compound used in the present invention is preferably a compound which is capable of forming a silicon oxide gel. The silicon compound is a component which can turn into a silicon oxide matrix having a silioxane bond by heating, and also referred to as a "siloxane matrix material."
Specific examples of the silicon compound used in the present invention include alkoxysilanes that are used in a sol-gel method, or their partial hydrolyzates or condensates of the partial hydrolyzates, liquid glass, and silicone. In addition, when nitrogen is included in the silicon oxide matrix, polysilazane, a nitrogen-containing silicone resin, a nitrogen-containing silane coupling agent (for example, aminosilane) and their partial hydrolyzates, and the like can be exemplified. Among these, polysilazane is preferable. In general, the person skilled in the art has concerns about the coloration during curing when the silicon compound above and the ultraviolet absorbent of the present invention are combined with each other. However, when the silicon compound above and the ultraviolet absorbent of the present invention are combined with each other and actually used, it has been found out by the inventors of the present invention that no coloration problem occurs and the long-wavelength ultraviolet lights can be efficiently shielded.

Polysilazane is a general name of a linear or cyclic compound having a structure represented by a chemical formula: -SiR¹₂NR²-SiR¹₂- (in the formula, R¹ and R² each independently represent a hydrogen atom or a hydrocarbon group). Polysilazane is a material which forms a Si-O-Si network as a result of degradation of Si-NR²-Si bond by heating or a reaction with moisture. A silicon oxide-based coating film obtained from polysilazane has a higher mechanical durability and a gas barrier property, compared with those of a silicon oxide-based coating film obtained from tetraalkoxysilane, or the like. As the polysilazane, perhydropolysilazane in which both R¹ and R² are hydrogen atoms in the above formula, a partially organic polysilazane in which R¹ is a hydrocarbon group such as a methyl group and R² is a hydrogen atom in the above formula, and a their mixture are preferable. In the above formula, the carbon number of the hydrocarbon group represented by R¹ and R² is not particularly limited. However, the small number is preferable, 20 or less is more preferable and 4 or less is particularly preferable.

As the silicon compound, a commercially available product can be used or it can be produced according to any method. For example, as the alkoxysilanes that are used in the sol-gel method, those described in JP-A-2007-246872 can be used, and TSR127B (trade name, manufactured by Momentive Performance Materials, Japan Inc.) can be used. As the polysilazane, AQUAMICA NP-110AZ (trade name, manufactured by Electronic Materials; perhydropolysilazane) or the like can be used. As the nitrogen-containing silicone resin, those described in JP-A-2002-13077 can be used. As the nitrogen-containing silane coupling agent, those described in JP-A-2004-124000 can be used.

The content of the ultraviolet absorbent A in the composition of the present invention is preferably 0.01 to 50 parts by mass, more preferably 0.1 to 50 parts by mass, and still more preferably 1 to 50 parts by mass, to 100 parts by mass of the silicon compound. The content ratio of the silicon compound is not specifically limited, but it is preferably 1 to 80% by mass, and more preferably 5 to 60% by mass, to the total amount of the composition.

The ultraviolet absorbent composition of the present invention may contain an additive, according to the necessity. Examples of the additive include an inorganic ultraviolet absorbent, a light stabilizer, an antioxidizing agent, a thermal polymerization inhibitor, a leveling agent, an antifoaming agent, a thickener, an antiprecipitation agent, a pigment, a coloring dye, an infrared rays absorbent, a fluorescent brightner, a dispersing agent, an antifoul additive, an antirust agent, a conductive particule, an antistatic agent, an antifogging agent, a surfactant, and a curing catalyst.

The method of forming a coating film by using the ultraviolet absorbent composition of the present invention will be explained. By coating the ultraviolet absorbent composition of the present invention on a substrate followed by thermal curing, the coating film can be formed. The coating method is not specifically limited, and it can be performed, for example, by using a dip coating method, a spin coating method, a spray coating method, a flexo printing method, a screen printing method, a gravure printing method, a roll coating method, a meniscus coating method, and a die coating method.

After the coating, it is preferable to dry the coating film at a temperature of 200°C or below. Main purpose of the drying step is to remove a solvent component, and the like contained in the coating film. As such, even when the temperature is raised above 200°C, it is not much effective and is economically unfavorable. The drying time is preferably approximately from 30 seconds to 2 hours. The atmosphere during the drying can be under air or non-oxidizing atmosphere. However, there may be no specific advantages of employing non-oxidizing atmosphere. In addition, the drying step can be also performed under reduced pressure. In that case, the vacuum level is preferably approximately from 4.10 to 10 kN/m² and the treatment time is preferably from 10 seconds to 30 minutes.
It is also possible to perform the heating-curing step without undergoing this drying step and, in the heating-curing step described below, the coating film may be dried at the same time as that of the curing.

After forming a coating layer as described above, heating is carried out at a temperature at which the temperature of the substrate is 300°C or less, to cure the silicon compound and form the coating film. In general, the curing time is approximately from 30 seconds to 10 hours.
Moreover, when polysilazane is used as a silicon compound, curing can be carried out with the moisture contained in the atmosphere, other than heating treatment. Specifically, by being kept under humidity of approximately 80% or more for 10 minutes to several days or under humidity of 40 to 80% for several days to several weeks, the curing proceeds and, as a result, a coating film having sufficient strength can be formed.

The thickness of the coating film is preferably 0.1 µm to 30 µm, more preferably 0.5 µm to 30 µm.

The substrate used in the present invention is not specifically limited, and any material such as glass, synthetic resin, ceramic, and metal can be used. As an example of the synthetic resin, an aromatic polycarbonate-based resin, a polymethylmethacrylate-based resin (i.e., acrylic resin), a polystyrene-based resin, and a polyester-based resin can be used.

### EXAMPLES

The present invention is described in more detail based on the following examples, but the present invention is not intended to be limited thereby. The light fastness test in the present invention can be carried out, for example, based on JIS A 6909 and JIS K 5600.

### Example 1

### (Preparation of ultraviolet absorbent composition)

Samples 1 to 45 containing ultraviolet absorbents A and B and compound C were prepared, as shown in the following Tables 4 and 5. In the following Tables 4 and 5, the ratio of the ultraviolet absorbent A, the ultraviolet absorbent B, and the compound C (A: B: C) is expressed by molar ratio.

**Table 4**

| Sample | Ultraviolet absorbent A | Ultraviolet absorbent B | Compound C | A:B:C | Formula of ultraviolet absorbent B | Classification of ultraviolet absorbent B |
|---|---|---|---|---|---|---|
| 1 | S-06 | II-2 | TII-25 | 4:1:0.2 | (IIa), (IIb) | B-(1) |
| 2 | S-06 | II-3 | TII-25 | 4:1:0.2 | (IIa), (IIb) | B-(1) |
| 3 | S-06 | II-4 | TII-25 | 4:1:0.2 | (IIa), (IIb) | B-(1) |
| 4 | 82 | II-4 | TI-57 | 1:1:0.3 | (IIa), (IIb) | B-(1) |
| 5 | S-01 | II-5 | TII-25 | 4:1:0.2 | (IIa), (IIb) | B-(1) |
| 6 | S-01 | II-6 | TII-8 | 4:1:0.2 | (IIa), (IIb) | B-(1) |
| 7 | S-01 | II-8 | TII-25 | 4:1:0.2 | (IIa), (IIb) | B-(1) |
| 8 | S-01 | II-10 | TII-25 | 4:1:0.2 | (IIa), (IIb) | B-(1) |
| 9 | S-01 | II-1 | TII-25 | 4:1:0.2 | (IIa), (IIb) | B-(1) |
| 10 | S-03 | None | TII-25 | 4:0:0.2 | - | - |
| 11 | S-06 | II-1 | TII-25 | 4:1:0.2 | (IIa), (IIb) | B-(1) |
| 12 | S-09 | II-1 | TII-25 | 4:1:0.2 | (IIa ), (IIb) | B-(1) |
| 13 | S-10 | II-1 | TII-25 | 4:1:0.2 | (IIa), (IIb) | B-(1) |
| 14 | S-11 | II-1 | TII-25 | 4:1:0.2 | (IIa), (IIb) | B-(1) |
| 15 | S-17 | II-1 | TII-25 | 4:1:0.2 | (IIa), (IIb) | B-(1) |
| 16 | S-18 | II-1 | TII-25 | 4:1:0.2 | (IIa), (IIb) | B-(1) |
| 17 | 1 | II-1 | TI-57 | 1:1:0.2 | (IIa), (IIb) | B-(1) |
| 18 | 11 | II-1 | TII-25 | 1:1:0.2 | (IIa), (IIb) | B-(1) |
| 19 | 12 | II-1 | TII-25 | 1:1:0.2 | (IIa), (IIb) | B-(1) |
| 20 | 81 | II-1 | TII-25 | 1:1:0.2 | (IIa), (IIb) | B-(1) |
| 21 | 82 | II-1 | TII-25 | 1:1:0.2 | (IIa), (IIb) | B-(1) |
| 22 | S-01 | III-1 | TII-8 | 10:1:0.2 | (III) | B-(1) |
| 23 | S-18 | III-3 | TII-25 | 6:1:0.2 | (III) | B-(2) |
| 24 | 87 | III-3 | TII-25 | 1:1:0.2 | (III) | B-(3) |
| 25 | 88 | III-3 | TII-25 | 1:1:0.2 | (III) | B-(2) |

**Table 5 (Table 4-continued)**

| Sample | Ultraviolet absorbent A | Ultraviolet absorbent B | Compound C | A:B:C | Formula of ultraviolet Absorbent B | Classification of ultraviolet absorbent B |
|---|---|---|---|---|---|---|
| 26 | S-01 | IV-1 | None | 4:1:0 | (IV) | B-(1) |
| 27 | S-01 | IV-2 | TII-8 | 4:1:0.2 | (IV) | B-(1) |
| 28 | 82 | IV-3 | TI-57 | 1:1:0.2 | (IV) | B-(2) |
| 29 | S-01 | IV-3 | TII-25 | 4:1:0.2 | (IV) | B-(2) |
| 30 | S-01 | IV-4 | TII-25 | 4:1:0.2 | (IV) | B-(2) |
| 31 | S-18 | IV-5 | None | 4:1:0 | (IV) | B-(2) |
| 32 | 82 | IV-2 | None | 1:1:0 | (IV) | B-(1) |
| 33 | S-01 | None | None | 1:0:0 | - | - |
| 34 | S-01 | IV-3 | TII-25 | 1:20:0.2 | (IV) | B-(2) |
| 35 | None | II-1 | TII-25 | 0:1:0.1 | (IIa), (IIb) | B-(1) |
| 36 | II-2 | II-1 | TII-25 | 4:1:0.2 | (IIa), (IIb) | B-(1) |
| 37 | IV-2 | II-1 | TII-25 | 4:1:0.2 | (IIa), (IIb) | B-(1) |
| 38 | II-3 | II-1 | TII-25 | 2:1:0.2 | (IIa), (IIb) | B-(1) |
| 39 | II-4 | II-1 | TII-25 | 2:1:0.2 | (IIa), (IIb) | B-(1) |
| 40 | III-1 | II-1 | TII-25 | 4:1:0.2 | (IIa), (IIb) | B-(1) |
| 41 | U-1 | II-1 | TII-25 | 4:1:0.2 | (IIa), (IIb) | B-(1) |
| 42 | U-1 | IV-3 | TII-25 | 4:1:0.2 | (IV) | B-(2) |
| 43 | U-1 | III-3 | TII-25 | 4:1:0.2 | (III) | B-(2) |
| 44 | S-01 | U-2 | TII-25 | 4:1:0.2 | - | B-(2) |
| 45 | 82 | U-2 | TII-25 | 1:1:0.2 | - | B-(2) |

The maximum absorption wavelength, the half value width, and the absorbance at 320 nm relative to that at the maximum absorption wavelength of each compound used in preparation of the samples 1 to 45 were determined by preparing an ethyl acetate solution of each compound at a concentration of approximately 5 × 10⁻⁵ mol/dm⁻³ and measuring UV spectrum of the solution in a 1-cm quartz cell by using a spectrophotometer (UV-3600 (trade name) manufactured by Shimazu Corporation). The maximum absorption wavelength, the half value width, and the absorbance at 320 nm relative to that at the maximum absorption wavelength were calculated from the thus-obtained spectral chart. The results are shown in the following Tables 6 and 7.

**Table 6**

| Compound | Maximum absorption wavelength (nm) | Half value width (nm) | Absorbance at 320 nm relative to that at maximum absorption wavelength (%) | Classification of ultraviolet absorbent |
|---|---|---|---|---|
| S-01 | 376 | 38 | 10 | Ultraviolet absorbent A |
| S-03 | 376 | 38 | 9 | Ultraviolet absorbent A |
| S-06 | 381 | 37 | 9 | Ultraviolet absorbent A |
| S-17 | 351 | 39 | 20 | Ultraviolet absorbent A |
| S-18 | 361 | 38 | 25 | Ultraviolet absorbent A |
| 1 | 380 | 29 | 11 | Ultraviolet absorbent A |
| 11 | 381 | 27 | 7 | Ultraviolet absorbent A |
| 12 | 382 | 28 | 15 | Ultraviolet absorbent A |
| 81 | 381 | 26 | 7 | Ultraviolet absorbent A |
| 82 | 383 | 28 | 14 | Ultraviolet absorbent A |
| 87 | 383 | 27 | 15 | Ultraviolet absorbent A |
| 88 | 383 | 26 | 14 | Ultraviolet absorbent A |

**Table 7 (Table 6-continued)**

| Compound | Maximum absorption wavelength (nm) | Half value width (nm) | Absorbance at 320 nm relative to that at maximum absorption wavelength (%) | Classification of ultraviolet absorbent |
|---|---|---|---|---|
| II-1 | 342 | 86 | 82 | Ultraviolet absorbent B-(2) |
| II-2 | 350 | 97 | 83 | Ultraviolet absorbent B-(2) |
| II-3 | 339 | 82 | 77 | Ultraviolet absorbent B-(2) |
| II-4 | 346 | 83 | 83 | Ultraviolet absorbent B-(2) |
| II-5 | 343 | 57 | 86 | Ultraviolet absorbent B-(2) |
| II-6 | 337 | 79 | 79 | Ultraviolet absorbent B-(2) |
| II-7 | 349 | 88 | 87 | Ultraviolet absorbent B-(2) |
| II-8 | 341 | 78 | 69 | Ultraviolet absorbent B-(2) |
| II-9 | 302 | 90 | 71 | Ultraviolet absorbent B-(1) |
| II-10 | 349 | 86 | 84 | Ultraviolet absorbent B-(2) |
| III-1 | 346 | 76 | 58 | Ultraviolet absorbent B-(2) |
| III-2 | 287 | 75 | 48 | Ultraviolet absorbent B-(1) |
| III-3 | 288 | 78 | 50 | Ultraviolet absorbent B-(1) |
| III-4 | 274 | 47 | 41 | Ultraviolet absorbent B-(1) |
| III-5 | 348 | 80 | 61 | Ultraviolet absorbent B-(2) |
| IV-1 | 349 | 35 | 27 | Ultraviolet absorbent B-(2) |
| IV-2 | 346 | 61 | 50 | Ultraviolet absorbent B-(2) |
| IV-3 | 286 | 69 | 63 | Ultraviolet absorbent B-(1) |
| IV-4 | 290 | 95 | 72 | Ultraviolet absorbent B-(1) |
| IV-5 | 287 | 67 | 64 | Ultraviolet absorbent B-(1) |
| IV-6 | 288 | 70 | 65 | Ultraviolet absorbent B-(1) |
| IV-7 | 282 | 72 | 75 | Ultraviolet absorbent B-(1) |

The compounds of the ultraviolet absorbent A used in preparation of the samples 1 to 45 each were a compound having a molar extinction coefficient of 20,000 or more at the maximum absorption wavelength.

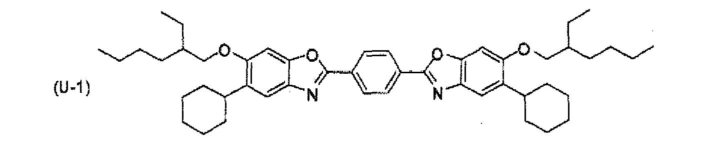

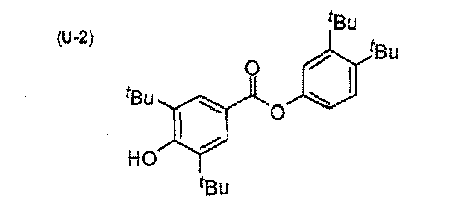

The compound (U-1) is a long-wavelength ultraviolet absorbent described in JP-A-2002-53824. The compound (U-2) corresponds to the aforementioned cinnamic acid ester-based ultraviolet absorbent B. The results of the maximum absorption wavelength, the half value width, and the absorbance at 320 nm relative to that at the maximum absorption wavelength of each of the compound (U-1) and the compound (U-2) are shown in Table 8 set forth below.

**Table 8**

| Compound | Maximum absorption wavelength (nm) | Half value width (nm) | Absorbance at 320 nm relative to that at the maximum absorption wavelength (%) | Classification of Ultraviolet absorbent |
|---|---|---|---|---|
| U-1 | 371 | 54 | 25 | Ultraviolet absorbent A |
| U-2 | 265 | 39 | 6 | Ultraviolet absorbent B |

### (Preparation pf coating liquid)

1.5 milimoles of each of the above samples 1 to 45 were added to 10 g of a solution of low-cure temperature perhydropolysilazane (trade name: AQUAMICA NP-110, manufactured by AZ Electronic Materials, solid content of 20 wt%) and completely dissolved therein, to obtain coating liquids 1-(1) to 1-(45). In addition, a liquid which does not contain each of the samples 1 to 45 was prepared as a coating liquid 1-(46).

### (Coating liquid on glass substrate)

On a quartz glass, each of the coating liquids 1-(1) to 1-(46) was coated by a spin coating, dried at 100°C for 10 minutes, and cured for 30 minutes in an oven kept at 150°C. By repeating these steps several times, each of the coating films 1-(1) to 1-(46) was formed with thickness of 12.5 µm on the glass plate.

### (Evaluation of transmittance)

With the coating films 1-(1) to 1-(46) produced, transmittance was measured by using the spectrophotometer UV-3600 (trade name) manufactured by SHIMADZU Corporation. A sample which has a transmittance of 1% or less at 390 nm and shows no visible yellow tint by naked eye observation is evaluated as "○" and a sample which has a transmittance of more than 1% at 390 nm or shows a visible yellow tint by naked eye observation is evaluated as "×". Furthermore, one, from which no coating liquid was able to be prepared due to low solubility, was evaluated as "-". The results are shown in the following Tables 9 and 10.

### (Evaluation of light fastness)

With respect to the coating films 1-(1) to 1-(46) prepared above, light irradiation was carried out with illumination of 170,000 lux using a xenon lamp. After the irradiation for 2000 hours, the samples were observed. Samples that were the same as those before irradiation (i.e., fresh one) were evaluated as "○○", samples, from which slight yellowing, haze, or the like was observed first by using microscope, were evaluated as "○", and samples, from which significant yellowing or occurrence of haze were observed by naked eye observation, were evaluated as "×". Furthermore, the one, from which no coating liquid was able to be prepared due to low solubility, was evaluated as "-". The results are shown in the following Tables 9 and 10.

**Table 9**

| Coating film | Initial transmittance ability | Performance after light fastness test | Remarks |
|---|---|---|---|
| 1-(1) | ○ | ○○ | The present invention |
| 1-(2) | ○ | ○○ | The present invention |
| 1-(3) | ○ | ○○ | The present invention |
| 1-(4) | ○ | ○○ | The present invention |
| 1-(5) | ○ | ○○ | The present invention |
| 1-(6) | ○ | ○○ | The present invention |
| 1-(7) | ○ | ○○ | The present invention |
| 1-(8) | ○ | ○○ | The present invention |
| 1-(9) | ○ | ○○ | The present invention |
| 1-(10) | ○ | ○○ | The present invention |
| 1-(11) | ○ | ○○ | The present invention |
| 1-(12) | ○ | ○○ | The present invention |
| 1-(13) | ○ | ○○ | The present invention |
| 1-(14) | ○ | ○○ | The present invention |
| 1-(15) | ○ | ○○ | The present invention |
| 1-(16) | ○ | ○○ | The present invention |
| 1-(17) | ○ | ○ | The present invention |
| 1-(18) | ○ | ○ | The present invention |
| 1-(19) | ○ | ○ | The present invention |
| 1-(20) | ○ | ○○ | The present invention |
| 1-(21) | ○ | ○○ | The present invention |
| 1-(22) | ○ | ○○ | The present invention |
| 1-(23) | ○ | ○○ | The present invention |

**Table 10 (Table 9-continued)**

| Coating film | Initial transmittance ability | Performance after light fastness test | Remarks |
|---|---|---|---|
| 1-(24) | ○ | ○○ | The present invention |
| 1-(25) | ○ | ○○ | The present invention |
| 1-(26) | ○ | ○○ | The present invention |
| 1-(27) | ○ | ○○ | The present invention |
| 1-(28) | ○ | ○○ | The present invention |
| 1-(29) | ○ | ○○ | The present invention |
| 1-(30) | ○ | ○○ | The present invention |
| 1-(31) | ○ | ○ | The present invention |
| 1-(32) | ○ | ○○ | The present invention |
| 1-(33) | ○ | ○ | The present invention |
| 1-(34) | ○ | ○ | The present invention |
| 1-(35) | × | × | Comparative example |
| 1-(36) | × | × | Comparative example |
| 1-(37) | × | × | Comparative example |
| 1-(38) | × | × | Comparative example |
| 1-(39) | × | × | Comparative example |
| 1-(40) | × | × | Comparative example |
| 1-(41) | ○ | ○ | The present invention |
| 1-(42) | ○ | ○ | The present invention |
| 1-(43) | ○ | ○ | The present invention |
| 1-(44) | ○ | Δ | Note |
| 1-(45) | ○ | Δ | Note |
| 1-(46) | × | × | Comparative example |

| | | | |
|---|---|---|---|
| Note: Comparative example for a case in which the ultraviolet absorbent B was not included. Δ represents an evaluation within a scope between ○ and ×. | | | |

As it is apparent from the results of Tables 9 and 10, the coating films, which were prepared with the ultraviolet absorbent composition of the present invention, had an excellent initial transmittance ability. In addition, as a result of the light fastness test, it was surprisingly found that, in the coating films, which were prepared with the ultraviolet absorbent composition of the present invention, yellowing or occurrence of a haze in the coating film was prevented and light fastness of the coating films themselves were improved (coating films 1-(1) to 1-(34) and coating films 1-(41) to 1-(43)). On the other hand, for a case in which the ultraviolet absorbent B was used alone or two or more kinds of the ultraviolet absorbent B were used in combination, the initial transmittance ability was poor and the effect of improving light fastness of the coating films themselves was not sufficient (coating films 1-(35) to 1-(40)). Furthermore, for a case in which the ultraviolet absorbent B that was not within the scope of the preferable embodiments of the present invention was used or a case in which the ultraviolet absorbent composition of the present invention was not included, the effect of improving light fastness of the coating films themselves was not sufficient (coating films 1-(44) to 1-(46)).

### Example 2

### (Preparation pf coating liquid)

Except that the perhydropolysilazane solution was changed to a solution of a commercially available curable methyl silicone resin (trade name: TSR127B, manufactured by Momentive Performance Materials, Japan), coating liquids 2-(1) to 2-(45) were obtained in the same manner as the preparation of the coating liquid in Example 1. In addition, a liquid, which did not contain each of the samples 1 to 45, was prepared as a coating liquid 2-(46).

### (Coating on a painted plate)

On a painted metal plate, the above coating liquids 2-(1) to 2-(46) were coated by a spin coating, dried at 150°C for 10 minutes, and cured for 30 minutes in an oven kept at 250°C. By repeating these steps several times, each of the coating films 2-(1) to 2-(46) were formed with thickness of 12.5 µm on the painted metal plate.

### (Evaluation of light fastness)

With respect to the coating films 2-(1) to 2-(46) prepared above, light irradiation was carried out with illumination of 170,000 lux using a xenon lamp. After the irradiation for 2000 hours, the samples were observed with naked eyes. Samples that were the same as those before irradiation (i.e., fresh one) were evaluated as "○○", samples, from which haze was observed first by using microscope, were evaluated as "○", and samples, from which occurrence of haze was observed, were evaluated as "×". Furthermore, the one, from which no coating liquid was able to be prepared due to low solubility, was evaluated as "-". The results are shown in the following Tables 11 and 12.

**Table 11**

| Coating film | Evaluation | Remarks |
|---|---|---|
| 2-(1) | ○○ | The present invention |
| 2-(2) | ○○ | The present invention |
| 2-(3) | ○○ | The present invention |
| 2-(4) | ○○ | The present invention |
| 2-(5) | ○○ | The present invention |
| 2-(6) | ○○ | The present invention |
| 2-(7) | ○○ | The present invention |
| 2-(8) | ○○ | The present invention |
| 2-(9) | ○○ | The present invention |
| 2-(10) | ○○ | The present invention |
| 2-(11) | ○○ | The present invention |
| 2-(12) | ○○ | The present invention |
| 2-(13) | ○○ | The present invention |
| 2-(14) | ○○ | The present invention |
| 2-(15) | ○○ | The present invention |
| 2-(16) | ○○ | The present invention |
| 2-(17) | ○ | The present invention |
| 2-(18) | ○ | The present invention |
| 2-(19) | ○ | The present invention |
| 2-(20) | ○○ | The present invention |
| 2-(21) | ○○ | The present invention |
| 2-(22) | ○○ | The present invention |
| 2-(23) | ○○ | The present invention |

**Table 12 (Table 11-continued)**

| Coating layer | Evaluation | Remarks |
|---|---|---|
| 2-(24) | ○○ | The present invention |
| 2-(25) | ○○ | The present invention |
| 2-(26) | ○○ | The present invention |
| 2-(27) | ○○ | The present invention |
| 2-(28) | ○○ | The present invention |
| 2-(29) | ○○ | The present invention |
| 2-(30) | ○○ | The present invention |
| 2-(31) | ○ | The present invention |
| 2-(32) | ○○ | The present invention |
| 2-(33) | ○ | The present invention |
| 2-(34) | ○ | The present invention |
| 2-(35) | × | Comparative example |
| 2-(36) | × | Comparative example |
| 2-(37) | × | Comparative example |
| 2-(38) | × | Comparative example |
| 2-(39) | × | Comparative example |
| 2-(40) | × | Comparative example |
| 2-(41) | ○ | The present invention |
| 2-(42) | ○ | The present invention |
| 2-(43) | ○ | The present invention |
| 2-(44) | Δ | Note |
| 2-(45) | Δ | Note |
| 2-(46) | × | Comparative example |

| | | |
|---|---|---|
| Note: Comparative example for a case in which the ultraviolet absorbent B is not included. Δ represents an evalution within a scope between ○ and ×. | | |

As it is apparent from the results of Tables 11 and 12, it was surprisingly found that the coating films, which were prepared with the ultraviolet absorbent composition of the present invention, significantly improved the light fastness of the painted metal plate (coating films 2-(1) to 2-(34) and coating films 2-(41) to 2-(43)). On the other hand, for the coating films, that were prepared with the composition that was not within the scope of the preferable embodiments of the present invention, it was not able to be said that the effect of improving light fastness of the substrate was sufficient (coating films 2-(35) to 2-(40) and coating films 2-(44) to 2-(46)).

As mentioned above, by using the ultraviolet absorbent composition of the present invention, a coating film which can effectively shield a long-wavelength ultraviolet light and has almost no yellow tint can be produced, and also the light fastness of a substrate can be significantly improved. Moreover, the ultraviolet absorbent composition of the present invention is able to improve the light fastness of the coating film itself. The person skilled in the art cannot anticipate these effects.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2008-223504 filed in Japan on September 1, 2008, which is entirely herein incorporated by reference.

## Claims

1. An ultraviolet absorbent composition, comprising:
ultraviolet absorbent A and a silicon compound, the ultraviolet absorbent A having a maximum absorption wavelength from 350 nm to 400 nm, the maximum absorption wavelength shown in a peak having a half value width of 55 nm or less, the ultraviolet absorbent A having the molar extinction coefficient of 20000 or more at the maximum absorption wavelength.

2. The ultraviolet absorbent composition according to Claim 1, wherein the ultraviolet absorbent A has a maximum absorption wavelength from 360 nm to 385 nm and the maximum absorption wavelength is shown in a peak having a half value width of 40 nm or less.

3. The ultraviolet absorbent composition according to Claim 1 or 2, wherein the ultraviolet absorbent A comprises a compound represented by formula (2): 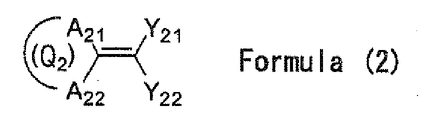 herein, A₂₁ and A₂₂ each independently represent an atom other than a hydrogen atom and a carbon atom; Y₂₁ and Y₂₂ each independently represent a hydrogen atom or a monovalent substituent; at least one of Y₂₁ and Y₂₂ represents a substituent having a Hammett substituent constant σp value of 0.2 or more; Y₂₁ and Y₂₂ may bind to each other to form a ring; and (Q₂) represents a group of atoms necessary for forming a 5- or 6-membered ring with A₂₁, A₂₂ and the carbon atom.

4. The ultraviolet absorbent composition according to Claim 3, wherein the compound represented by formula (2) is a compound represented by formula (3): 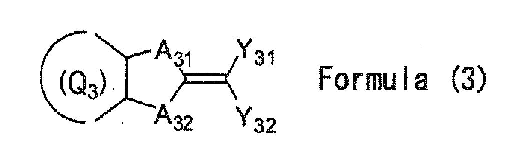 wherein, A₃₁ and A₃₂ each independently represent a hetero atom selected from the group consisting of an oxygen atom, a nitrogen atom , and a sulfur atom; Y₃₁ and Y₃₂ each independently represent a hydrogen atom or a monovalent substituent; at least one of Y₃₁ and Y₃₂ represents a substituent having a Hammett substituent constant σp value of 0.2 or more; Y₃₁ and Y₃₂ may bind to each other to form a ring; and (Q₃) represents a group of atoms necessary for forming a 5- or 6-membered ring with a carbon atom.

5. The ultraviolet absorbent composition according to Claim 4, wherein the compound represented by formula (3) is a compound represented by formula (4): 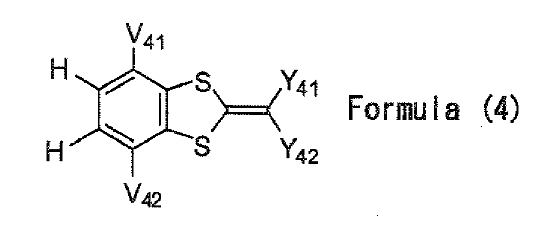 wherein, Y₄₁ and Y₄₂ each independently represent a monovalent substituent; at least one of Y41 and Y₄₂ represents a cyano group, and the other one represents a substituted or unsubstituted alkylcarbonyl group, a substituted or unsubstituted arylcarbonyl group, a substituted or unsubstituted heterocyclic carbonyl group, a substituted or unsubstituted alkylsulfonyl group, or a substituted or unsubstituted arylsulfonyl group; V₄₁ and V₄₂ each independently represent a hydrogen atom or a monovalent substituent.

6. The ultraviolet absorbent composition according to Claim 1 or 2, wherein the ultraviolet absorbent A comprises a compound represented by formula (5): 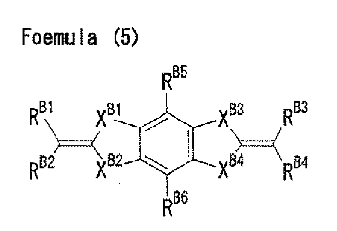 wherein, R^{B1}, R^{B2}, R^{B3} and R^{B4} each independently represent a hydrogen atom or a monovalent substituent; R^{B5} and R^{B6} each independently represent a hydrogen atom or a monovalent substituent; X^{B1}, X^{B2}, X^{B3} and X^{B4} each independently represent a hetero atom.

7. The ultraviolet absorbent composition according to Claim 6, wherein the compound represented by formula (5) is a compound represented by formula (5a): 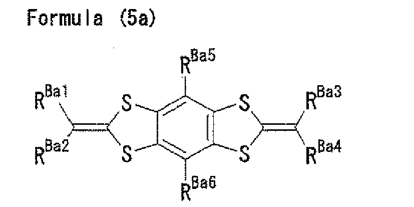 wherein, R^{Ba1}, R^{Ba2}, R^{Ba3} and R^{Ba4} each independently represent a monovalent substituent; at least one of R^{Ba1}, RB^{a2}, R^{Ba3} and R^{Ba4} represents a cyano group, a substituted or unsubstituted alkoxycarbonyl group, a substituted or unsubstituted aryloxycarbonyl group, a substituted or unsubstituted carbamoyl group, a substituted or unsubstituted alkylcarbonyl group, a substituted or unsubstituted arylcarbonyl group, a substituted or unsubstituted alkylsulfonyl group, or a substituted or unsubstituted arylsulfonyl group; and
R^{Ba5} and R^{Ba6} each independently represent a substituted or unsubstituted alkoxy group, a substituted or unsubstituted aryloxy group, a substituted or unsubstituted acyloxy group, a substituted or unsubstituted alcoxycalbonyloxy group, a substituted or unsubstituted aryloxycalbonyloxy group, a substituted or unsubstituted carbamoyloxy group, a substituted or unsubstituted amino group, a substituted or unsubstituted acylamino group, or a substituted or unsubstituted carbamoylamino group.

8. The ultraviolet absorbent composition according to Claim 7, wherein at least one of a combination of R^{Ba1} with R^{Ba2} and a combination of R^{Ba3} with R^{Ba4} does not form a ring.

9. The ultraviolet absorbent composition according to Claim 7, wherein both of a combination of R^{Ba1} with R^{Ba2} and a combination of R^{Ba3} with R^{Ba4} do not form a ring.

10. The ultraviolet absorbent composition according to any one of Claims 1 to 9, further comprising either one or both of at least one ultraviolet absorbent B and a compound C represented by any one of formulae (TS-I) to (TS-V),
wherein, in the ultraviolet absorbent B, an absorbance at 320 nm is 30% or more of an absorbance at the maximum absorption wavelength and the maximum absorption wavelength is 350 nm or less, 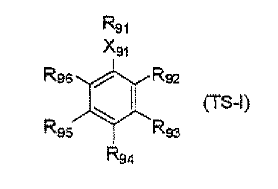 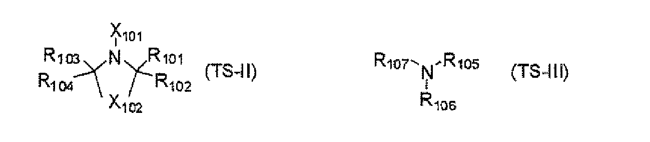 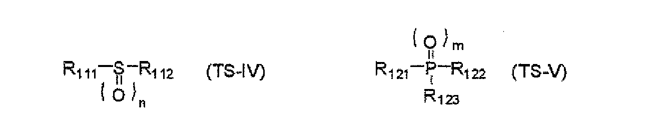 wherein, in formula (TS-I), R₉₁ represents a hydrogen atom, an alkyl group, an alkenyl group, an aryl group, a heterocyclic group, an acyl group, an alkyloxycarbonyl group, an alkenyloxycarbonyl group, an aryloxycarbonyl group, an alkyl sulfonyl group, an arylsulfonyl group, a phosphinotolyl group, a phosphinyl group, or -Si(R₉₇)(R₉₈)(R₉₉), in which R₉₇, R₉₈, and R₉₉, which may be the same as or different from each other, each independently represent an alkyl group, an alkenyl group, an aryl group, an alkoxy group, an alkenyloxy group, or an aryloxy group; -X₉₁- represents -O- -S-, or -N(-R100)-, in which R100 has the same meaning as R₉₁; R₉₂, R₉₃, R₉₄, R₉₅ and R₉₆, which may be the same as or different from each other, each independently represent a hydrogen atom or a substituent; R₉₁ and R₉₂, R₁₀₀ and R₉₆, and R₉₁ and R₁₀₀, respectively, may bind to each other to form a 5-membered ring, a 6-membered ring, or a 7-membered ring; R₉₂ and R₉₃, and R₉₃ and R₉₄, respectively, may bind together with each other to form a 5-membered ring, a 6-membered ring, a 7-membered ring, a spiro ring, or a bicyclo ring; and all of R₉₁, R₉₂, R₉₃, R₉₄, R₉₅, R₉₆ and R₁₀₀ cannot simultaneously represent a hydrogen atom, and the total number of carbon atoms is 10 or more;
wherein, in formula (TS-II), R₁₀₁, R₁₀₂, R₁₀₃, and R₁₀₄ each independently represent a hydrogen atom, an alkyl group, an alkenyl group; R₁₀₁, and R₁₀₂, and R₁₀₃ and R₁₀₄, respectively, may bind to each other to form a 5- to 7-membered ring; X₁₀₁ represents a hydrogen atom, an alkyl group, an alkenyl group, an alkyloxy group, an alkenyloxy group, an alkyloxycarbonyl group, an alkenyloxycarbonyl group, an aryloxycarbonyl group, an acyl group, an acyloxy group, an alkyloxycarbonyloxy group, an alkenyloxycarbonyloxy group, an aryloxycarbonyloxy group, an alkylsulfonyl group, an alkenylsulfonyl group, an arylsulfonyl group, an alkylsulfinyl group, an alkenylsulfinyl group, an arylsulfinyl group, a sulfamoyl group, a carbamoyl group, a hydroxy group, or an oxy radical group; and X₁₀₂ represents a group of non-metal atoms necessary for forming a 5-membered ring, a 6-membered ring, or a 7-membered ring;
wherein, in formula (TS-III), R₁₀₅ and R₁₀₆ each independently represent a hydrogen atom, an aliphatic group, an acyl group, an aliphatic oxycarbonyl group, an aromatic oxycarbonyl group, an aliphatic sulfonyl group, or an aromatic sulfonyl group; R₁₀₇ represents an aliphatic group, an aliphatic oxy group, an aromatic oxy group, an aliphatic thio group, an aromatic thio group, an acyloxy group, an aliphatic oxycarbonyloxy group, an aromatic oxycarbonyloxy group, a substituted amino group, a heterocyclic group, or a hydroxyl group; R₁₀₅ and R₁₀₆, R₁₀₆ and R₁₀₇, and R₁₀₅ and R₁₀₇, respectively, may combine together to form a 5-membered ring, a 6-membered ring, or a 7-membered ring except 2,2,6,6-tetraalkylpiperidine skeleton; and both R₁₀₅ and R₁₀₆ are not hydrogen atoms at the same time, and the total number of carbon atoms is 7 or more;
wherein, in formula (TS-IV), R₁₁₁ and R₁₁₂ each independently represent an aliphatic group; R₁₁₁ and R₁₁₂ may combine together to form a 5- membered ring, a 6-membered ring, or a 7-membered ring; n represents 0, 1 or 2; and the total number of carbon atoms of R₁₁₁ and R₁₁₂ is 10 or more; and
wherein, in formula (TS-V), R₁₂₁ and R₁₂₂ each independently represent an aliphatic oxy group or an aromatic oxy group; R₁₂₃ represents an aliphatic group, an aromatic group, an aliphatic oxy group, or an aromatic oxy group; m represents 0 or 1; R₁₂₁ and R₁₂₂, and R₁₂₁ and R₁₂₃, respectively, may combine together to form any one of 5- to 8-membered rings; and the total number of carbon atoms of R₁₂₁, R₁₂₂ and R₁₂₃ is 10 or more.

11. The ultraviolet absorbent composition according to Claim 10, wherein the ultraviolet absorbent B is an ultraviolet absorbent having a maximum absorption wavelength of less than 320 nm.

12. The ultraviolet absorbent composition according to Claim 10, wherein the ultraviolet absorbent B is an ultraviolet absorbent having a maximum absorption wavelength from 320 nm to 350 nm.

13. The ultraviolet absorbent composition according to any one of Claims 10 to 12, wherein a molar ratio of the ultraviolet absorbent A and the ultraviolet absorbent B is within a range of 1:15 to 15:1.

14. The ultraviolet absorbent composition according to any one of Claims 10 to 13, wherein a molar ratio of the compound C represented by any one of formulae (TS-I) to (TS-V) is from 0.01 to 10 when the smaller value, among a mole number of the ultraviolet absorbent A and a mole number of the ultraviolet absorbent B, is set to 1.

15. The ultraviolet absorbent composition according to any one of Claims 1 to 14, wherein the silicon compound is a compound capable of forming a silicon oxide gel.

16. A material, having a coating film formed by the ultraviolet absorbent composition according to any one of Claims 1 to 15.

17. The material according to Claim 15, wherein the coating film is formed by curing the ultraviolet absorbent composition according to any one of Claims 1 to 15.

18. The material according to Claim 16 or 17, wherein the coating film is formed by curing the ultraviolet absorbent composition according to any one of Claims 1 to 15 at a temperature of 300°C or less.
